(19) Europäisches Patentamt
European Patent Office
Office européen des brevets

(11) **EP 4 315 381 B1**

(12) **FASCICULE DE BREVET EUROPEEN**

(45) Date de publication et mention
de la délivrance du brevet:
**15.01.2025 Bulletin 2025/03**

(21) Numéro de dépôt: **22718741.6**

(22) Date de dépôt: **31.03.2022**

(51) Classification Internationale des Brevets (IPC):
**H01H 33/59** *(2006.01)*

(52) Classification Coopérative des Brevets (CPC):
**H01H 33/596**

(86) Numéro de dépôt international:
**PCT/FR2022/050608**

(87) Numéro de publication internationale:
**WO 2022/208029 (06.10.2022 Gazette 2022/40)**

(54) **DISPOSITIF DE COUPURE POUR COURANT ÉLECTRIQUE SOUS HAUTE TENSION CONTINUE AVEC TUBE À PLASMA**

ABSCHALTVORRICHTUNG FÜR ELEKTRISCHEN HOCHSPANNUNGSSTROM MIT PLASMARÖHRE

CUTOFF DEVICE WITH PLASMA TUBE FOR HIGH-DC-VOLTAGE ELECTRIC CURRENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2021 FR 2103336**

(43) Date de publication de la demande:
**07.02.2024 Bulletin 2024/06**

(73) Titulaire: **Supergrid Institute**
**69100 Villeurbanne (FR)**

(72) Inventeur: **YANG, Yang**
**69100 VILLEURBANNE (FR)**

(74) Mandataire: **Cabinet Beau de Loménie**
**51 avenue Jean Jaurès**
**BP 7073**
**69301 Lyon Cedex 07 (FR)**

(56) Documents cités:
**EP-A1- 3 522 194    EP-A1- 3 522 196**
**US-A- 4 805 062    US-A- 5 379 014**

**Description**

**Domaine Technique**

L'invention concerne un dispositif de coupure pour courant électrique sous haute tension continue (HVDC). De tels dispositifs sont destinés à être mis en oeuvre dans des réseaux ou unités de réseaux HVDC en cas d'apparition d'un défaut électrique générant un courant de défaut dans au moins un conducteur électrique du réseau.

Les réseaux HVDC sont notamment envisagés comme une solution à l'interconnexion de sites de production d'électricité disparates ou non synchrones. Les réseaux HVDC sont notamment envisagés pour la transmission et la distribution d'énergie produite par des fermes éoliennes offshore plutôt que des technologies de courant alternatif, du fait de pertes en ligne inférieures et d'absence d'incidence des capacités parasites du réseau sur de longues distances. De tels réseaux ont typiquement des niveaux de tension nominale de service supérieure à 75 kV, notamment de l'ordre de 100 kV et plus.

Dans le présent texte, on considère comme dispositif à haute tension continue soit un dispositif à « haute tension A », dans lequel la tension nominale de service continue est supérieure à 1500 V, mais inférieure ou égale à 75 000 V (75kV), soit un dispositif à « haute tension B » (ou très haute tension) lorsque la tension nominale de service continue est supérieure à 75 000 V (75kV). Ainsi, le domaine de la haute tension continue inclut le domaine de la « haute tension A » et celui de la « haute tension B ».

La coupure du courant dans de tels réseaux est un enjeu crucial conditionnant directement la faisabilité et le développement de tels réseaux.

L'évolution de ces réseaux tend aujourd'hui vers l'interconnexion des infrastructures pour aboutir à des réseaux maillés, c'est-à-dire des réseaux comportant plusieurs cheminements possibles entre deux points donnés du réseau. Dans ces réseaux, on trouve des installations électriques, comportant notamment des postes électriques ou sous-stations électriques, dans lesquelles on trouve au moins un appareil de coupure de circuit électrique au sein d'un circuit électrique.

Dans un circuit électrique, on trouve généralement au moins une source de tension, et au moins un utilisateur de tension, qui peut comprendre tout appareil ou ensemble d'appareils ou tout réseau ayant de tels appareils qui utilisent l'énergie électrique pour la transformer en une autre forme d'énergie, par exemple en énergie mécanique, et/ou calorifique, et/ou électromagnétique, etc...

Dans un circuit électrique, on trouve généralement au moins un appareil de coupure électrique permettant d'interrompre la circulation du courant électrique dans le circuit, généralement entre la source de tension et l'utilisateur de tension, ou entre la source de tension et la terre.

On connaît différents types de dispositif de coupure électrique destinés à être interposés dans un conducteur électrique d'un circuit électrique. Par exemple, on connaît les disjoncteurs, qui sont des appareils mécaniques de coupure du circuit électrique et qui sont conçus et dimensionnés pour autoriser notamment une ouverture en charge ou en régime de défaut du circuit électrique dans lequel ils sont interposés. On connaît par ailleurs des appareils de coupure électrique, de conception plus simple, tels que des sectionneurs qui ne sont généralement pas conçus pour réaliser des coupures de circuits en charge, mais plutôt pour assurer, dans un circuit où la circulation de courant est déjà interrompue par un autre appareil de coupure, la sécurité des biens et des personnes lors des interventions, en assurant une isolation électrique d'un niveau élevé prédéterminé entre une portion amont d'un conducteur du circuit, reliée par exemple à la source de tension, et une portion aval de ce conducteur du circuit.

Dans un appareil principal de coupure de type mécanique, la coupure du courant est obtenue uniquement par l'ouverture d'un élément interrupteur mécanique. Un tel élément interrupteur mécanique comporte deux pièces conductrices faisant contact qui sont en contact mécanique et électrique lorsque l'élément interrupteur est fermé et qui se séparent mécaniquement lorsque l'élément interrupteur est ouvert. Cette séparation mécanique est généralement effectuée par mouvement d'une pièce conductrice mobile par rapport à une pièce conductrice fixe. Ces appareils mécaniques de coupure électrique présentent plusieurs inconvénients lorsqu'ils sont traversés par des courants importants, notamment sous haute tension continue.

En présence d'un courant et / ou d'une tension continue importante, la séparation mécanique peut se traduire par l'établissement d'un arc électrique entre les deux pièces conductrices, du fait des énergies importantes accumulées dans le réseau que l'appareil protège. Tant que l'arc électrique reste établi au travers de la séparation mécanique, l'appareil mécanique de coupure électrique ne réalise pas la coupure électrique puisqu'un courant continue de circuler au travers de l'appareil par la présence de l'arc. La coupure électrique, au sens de l'interruption effective de la circulation du courant électrique, est parfois particulièrement difficile à réaliser dans un contexte de courants sous haute tension continue, ces conditions tendant à entretenir l'arc électrique. Par ailleurs, cet arc électrique dégrade, d'une part, par érosion, les deux pièces conductrices faisant contact, et d'autre part, par ionisation, le milieu environnant les pièces conductrices dans lequel l'arc s'établit. Cela nécessite des opérations de maintenance de l'appareil de coupure qui sont contraignantes et coûteuses.

La coupure des courants sous haute tension continue (HVDC) est plus complexe à réaliser que celle des courants sous tension alternative (AC). En effet, lors de la coupure d'un courant sous tension alternative, on profite d'un passage par zéro du courant pour réaliser la coupure électrique, ce dont on ne peut pas bénéficier avec un courant sous haute tension continue.

L'utilisation d'un tel appareil de coupure électrique, notamment d'un appareil mécanique, sans moyens spécifiques additionnels pour faciliter la coupure, ne permet pas d'obtenir les performances souhaitées en termes de coupure électrique.

Par ailleurs, un objectif de l'invention est de permettre l'interruption de courant quelle que soit l'amplitude de l'intensité du courant de défaut à couper, y compris pour des valeurs faibles de l'intensité du courant de défaut. En effet, dans certaines techniques antérieures basées sur l'injection d'un contre-courant, l'interruption des courants de défaut de faible intensité peut être empêchée ou gênée par l'injection d'un contre-courant de valeur trop importante, notamment parce que le passage à zéro du courant dans l'interrupteur ouvert se fait avec une dérivée de l'intensité qui est trop importante pour permettre l'interruption au moment de ce passage par zéro.

**Technique antérieure**

Pour cela, on connaît de nombreux dispositifs de coupure dans lesquels un appareil principal de coupure électrique est secondé par des moyens spécifiques additionnels qui facilitent la coupure. Ces moyens spécifiques additionnels qui facilitent la coupure peuvent être classés en différentes familles bien distinctes en fonction de leur mode principal d'assistance à la coupure.

Dans une première de ces familles, les moyens spécifiques additionnels qui facilitent la coupure génèrent, après l'ouverture mécanique de l'appareil principal de coupure, un contre-courant au travers de l'appareil principal, ce contre-courant devant être de sens inverse au courant de défaut et devant être d'intensité supérieure au courant de défaut pour annuler ce courant de défaut.

Un exemple d'un dispositif de ce type est décrit dans le document EP3091626A1. Ce dispositif comporte :

- une branche principale avec un appareil principal de coupure électrique, de type mécanique,
- une branche d'absorption, électriquement en parallèle de la branche principale entre le premier point et le second point, avec au moins un parasurtenseur général,
- une branche de commutation, électriquement en parallèle de la branche principale et de la branche d'absorption, avec un condensateur de commutation, une inductance, et un interrupteur de commutation.

Le dispositif du document EP3091626A1 comporte un circuit de pré-charge du condensateur de commutation. Après l'ouverture mécanique de l'appareil de coupure principal, tout arc qui pourrait être présent entre les électrodes de celui-ci est coupé par l'injection, dans la branche principale, d'un contre-courant qui est généré en fermant l'interrupteur de commutation, ce qui provoque la décharge du condensateur de commutation pré-chargé dans la boucle formée par la banche principale et la branche de commutation.

Le document US2014299579 décrit un dispositif comparable, qui repose sur le même principe de génération d'un contre-courant, mais qui comporte plusieurs banques de condensateurs pré-chargés. En fonction de l'intensité de courant à couper, ce dispositif insère dans le circuit une capacité adaptée par la fermeture sélective des commutateurs de condensateur de manière à générer une intensité de contre-courant adaptable, ceci pour avoir une dérivée de l'intensité qui est suffisamment basse de permettre l'interruption au moment de ce passage par zéro.

Dans le document WO2015166600, un condensateur 10 est rechargé par une source auxiliaire de tension continue 20, avant la fermeture de l'interrupteur de commutation 17. Des commutateurs de dérivation d'inductance 15 et 16 sont sélectivement fermés pour changer l'inductance du circuit LC formé par la branche de commutation, et l'amplitude du courant d'oscillation résultante est ainsi contrôlée. Pour couvrir une plage étendue de valeurs d'intensité pour lesquelles l'interruption de courant pourrait être garantie, un tel dispositif impliquerait un nombre élevé d'interrupteurs de dérivation d'inductance.

Dans cette première famille, on comprend que l'énergie qui va permettre de couper l'arc électrique est stockée préalablement dans le condensateur pré-chargé.

Les documents WO2015185096, US3758790, et US4442469 décrivent des modules de coupure qui comportent au moins deux appareils de coupure en série dans une branche principale du module, avec une boucle visant à créer un courant oscillant au travers de ces interrupteurs pour interrompre le courant. Ces trois dispositifs présentent l'inconvénient que le ou les condensateurs de commutation doivent être capables de tenir une tension supérieure à la tension nominale de service du réseau électrique dans lequel ils sont insérés, généralement au moins 1,6 fois cette tension nominale de service. Cela implique des condensateurs chers et volumineux. De plus, des interrupteurs de commutation sont présents dans la branche de commutation, ce qui nécessite des sources d'énergie auxiliaires non décrites pour leur mise en action. En outre, ces modules de coupure présentent une durée d'arc encore relativement longue dans les appareils de coupure de la branche principale. Par ailleurs, l'extinction d'arc peut seulement être effectuée après que la séparation des contacts aura permis d'atteindre une distance suffisamment élevée pour pouvoir tenir une tension supérieure à la tension nominale de service, et cette durée d'arc est généralement supérieure à quelques millisecondes, ce qui représente une durée qui est relativement longue pendant laquelle l'arc est susceptible de provoquer un échauffement important et une érosion des électrodes.

Dans une deuxième famille de dispositifs, les moyens spécifiques additionnels qui facilitent la coupure comprennent, en parallèle de la branche principale, une branche de dérivation qui comporte un interrupteur de dérivation, mais comprennent aussi, dans la branche principale, en série avec l'appareil de coupure principal, un interrupteur additionnel, souvent de type électronique. Cet interrupteur additionnel a pour rôle est de générer, dans un état ouvert, une tension à ses bornes. Dans cette famille, il n'y a pas besoin de prévoir de condensateur dans la branche de dérivation. Dans certains documents d'art antérieur, par exemple le document EP2502248 l'interrupteur de dérivation est réalisé sous la forme de matrices d'interrupteurs électroniques, en parallèle de l'appareil principal de coupure et en parallèle d'une branche d'absorption.

Les documents EP3522194 et EP3522196 décrivent tous deux chacun un dispositif de cette deuxième famille, dans lequel l'interrupteur de dérivation est réalisé sous la forme d'un interrupteur à tube à plasma ou, puisque les interrupteurs à tube à plasma sont par nature unidirectionnels, de deux interrupteurs à tube à plasma montés électriquement en parallèle l'un de l'autre et en sens inverse.

Dans les deux documents, le dispositif de coupure comporte un système de commande pour chaque interrupteur à tube à plasma. Un tel système de commande, destiné à assurer la commande et le fonctionnement de l'interrupteur à tube à plasma nécessite une source d'énergie électrique. Dans le document EP3522194, cette source d'énergie électrique comporte une première bobine électrique qui est placée dans le circuit principal et une seconde bobine électrique qui est couplée de manière inductive à la première bobine électrique et qui, par ce couplage inductif, prélève de l'énergie électrique dans la première bobine électrique pour la fournir au système de commande de l'interrupteur à tube à plasma. Dans le document EP3522196, cette source d'énergie électrique comporte un condensateur qui est agencé électriquement en parallèle directement de l'interrupteur de coupure électronique qui se situe dans la branche principale du dispositif. Ce condensateur est relié, par l'intermédiaire d'un convertisseur de puissance électrique, au système de commande afin de lui fournir de la puissance électrique nécessaire à son fonctionnement. La puissance électrique nécessaire est élevée. Elle dépend de l'amplitude du courant de défaut qu'il faut interrompre. Le système de commande doit, dans ces dispositifs, fournir une tension de quelques kV, par exemple entre 1 et 10 kV, et doit fournir un courant dont l'intensité est du même ordre que celle du courant de défaut à couper. Dans la pratique, de tels systèmes de commande devraient donc fournir une puissance électrique de l'ordre de quelques dizaines de kW en impulsionnel pour la fermeture, mais jusqu'à quelques dizaines de mégawatts (MW) en impulsionnel pour la commande d'ouverture. Ainsi, dans ces solutions, la puissance électrique nécessaire à fournir par la bobine et le condensateur est donc très importante. Cela implique donc un volume et un coût très importants pour ces composants, et une indéniable complexité de la solution.

Dans les deux cas, on voit que la source d'énergie électrique nécessaire au fonctionnement de l'interrupteur à tube à plasma est une source qui nécessite d'interposer dans la branche principale du dispositif, voire même dans le circuit principal, au moins un interrupteur de coupure électronique et éventuellement une bobine électrique. Or, tant la branche principale que l'appareil principal de coupure sont traversés, en fonctionnement nominal de l'installation, par le courant nominal qui est un courant sous haute tension continue et qui peut présenter une intensité très élevée, par exemple supérieure à 1000 A, voire supérieure à 5000 A. Les composants électriques et électroniques qui sont ainsi interposés dans la branche principale ou dans le circuit principal sont donc traversés par ce courant nominal en permanence lors du fonctionnement du réseau. De la sorte, ils doivent être dimensionnés pour être en mesure de supporter ce courant nominal de manière permanente. De plus, quelle que soit la qualité de ces composants, leur présence est nécessairement une source de perte d'énergie électrique en fonctionnement nominal. Enfin, ces composants électriques sont traversés par le courant nominal sous très haute tension, avec des intensités qui sont potentiellement très élevées, si bien que ces composants doivent être généralement refroidis, ce qui augmente le coût de l'installation.

Dans une troisième famille de dispositifs, les moyens spécifiques additionnels qui facilitent la coupure génèrent, après l'ouverture mécanique de l'appareil principal de coupure, un courant oscillant d'amplitude croissante dans une branche d'oscillation en parallèle de la branche principale. Lorsque, après plusieurs oscillations, le courant oscillant atteint une valeur suffisante, il génère à son tour, au travers de l'appareil principal, un contre-courant susceptible d'annuler le courant de défaut. Le document US2017178844 décrit un exemple d'un tel dispositif. Ce dispositif propose de mettre en oeuvre un convertisseur à IGBT spécialement piloté pour créer et amplifier des oscillations électriques dans un circuit LC en parallèle de l'appareil principal de coupure. On comprend que ce convertisseur à IGBT doit générer des courants d'intensité élevée, de l'ordre de celle du courant de défaut, et est donc encombrant et onéreux. De plus, la capacité dans le circuit LC doit avoir une tenue en tension élevée, supérieure à la tension nominale de service, généralement supérieure à 1,6 fois la tension nominale de service.

Il est également connu le document US5379014A, lequel décrit un disjoncteur à vide comprenant une bobine externe qui est agencée à l'extérieur d'un interrupteur à vide.

Il est également connu le document US4805062 A, lequel concerne un disjoncteur à courant continu et un procédé de commutation de celui-ci, ou plus spécifiquement un système d'insertion d'un courant inverse par l'utilisation d'un condensateur de commutation pouvant être chargé directement à partir d'une ligne à courant continu.

L'invention a pour but de proposer un dispositif de coupure de courant sous haute tension continue qui est basé sur la génération, après l'ouverture mécanique de l'appareil principal de coupure, d'un contre-courant au travers de l'appareil principal en utilisant de l'énergie préalablement stockée dans un condensateur de commutation, mais qui soit économique, d'encombrement réduit, et qui n'engendre pas de pertes électriques lors du fonctionnement nominal de l'installation.

**Exposé de l'invention**

Dans le but ci-dessus, l'invention propose un dispositif de coupure pour courant électrique sous haute tension continue comportant :

- un circuit principal, dans lequel circule, dans une configuration de conduction du dispositif de coupure, un courant électrique sous une haute tension nominale de service continue du dispositif ;
- au moins un module de coupure, interposé dans le circuit principal entre un premier point et un second point du circuit principal pour le module de coupure, le module de coupure comprenant :

  • une branche principale, entre le premier point et le second point du module de coupure, avec au moins un appareil principal de coupure électrique, de type mécanique et interposé dans la branche principale entre le premier point et le second point,
  • une branche d'absorption, électriquement en parallèle de la branche principale entre le premier point et le second point du module de coupure, avec au moins un parasurtenseur général interposé dans la branche d'absorption entre le premier point et le second point,
  • une branche de commutation, électriquement en parallèle de la branche principale et de la branche d'absorption entre le premier point et le second point du module de coupure, avec au moins un premier condensateur de commutation agencé dans la branche de commutation, entre le premier point et le second point du module de coupure, et un interrupteur de commutation capable d'autoriser la circulation de courant dans la branche de commutation,
  • une boucle formée par la branche principale et la branche de commutation du module de coupure, ladite boucle du module de coupure présentant une inductance de commutation,

- l'interrupteur de commutation comporte au moins un premier interrupteur à tube à plasma comportant une anode, une cathode, et une grille de commande, le premier interrupteur à tube à plasma étant interposé dans la branche de commutation entre le premier point et le second point du module de coupure de manière à séparer la branche de commutation en un premier tronçon, relié à la cathode du premier interrupteur à tube à plasma, et un second tronçon, relié à l'anode du premier interrupteur à tube à plasma, le premier condensateur de commutation étant agencé dans le premier tronçon de la branche de commutation qui est relié à la cathode du premier interrupteur à tube à plasma,
- un système de commande du premier interrupteur à tube à plasma est alimenté électriquement par le premier condensateur de commutation,
- le premier condensateur de commutation comporte une armature proximale reliée à la cathode du premier interrupteur à tube à plasma, et une armature distale opposée à la cathode du premier interrupteur à tube à plasma par rapport à l'armature proximale.

L'invention est caractérisée en ce que :

- le dispositif comporte un circuit de pré-charge du premier condensateur de commutation (C1),
- le module de coupure comporte un premier parasurtenseur de commutation qui présente une tension de protection inférieure à une tension nominale de service du module de coupure et qui est connecté électriquement en parallèle du premier condensateur de commutation,

et en ce que le système de commande du premier interrupteur à tube à plasma comporte au moins un premier commutateur pilotable qui, dans un état fermé, alimente la grille de commande du premier interrupteur à tube à plasma par une tension dérivée d'une tension électrique entre les armatures du premier condensateur de commutation.

Un dispositif selon l'invention peut de plus comprendre une ou plusieurs des caractéristiques optionnelles suivantes, prises seules ou en combinaison.

Dans certains cas, lors d'une ouverture du dispositif de coupure, le premier commutateur pilotable est piloté selon une première impulsion de fermeture pour commander la fermeture du premier interrupteur à tube à plasma après une ouverture mécanique partielle du l'appareil principal de coupure électrique, et est piloté selon une seconde impulsion de fermeture pour commander l'ouverture du premier interrupteur à tube à plasma après renversement de la polarité de charge du premier condensateur de commutation, définissant une durée de conduction du premier interrupteur à tube à plasma entre la fermeture et l'ouverture du premier interrupteur à tube à plasma.

Dans certains cas, le premier commutateur pilotable, dans son état fermé, relie électriquement la grille de commande du premier interrupteur à tube à plasma à l'armature distale du premier condensateur de commutation.

Dans certains cas, le premier commutateur pilotable est un interrupteur bidirectionnel capable de conduire et de bloquer le courant dans les deux sens entre la grille de commande du premier interrupteur à tube à plasma et l'armature distale du premier condensateur de commutation. Dans certaines variantes d'un tel cas, le premier commutateur pilotable est réalisé sous la forme de deux interrupteurs électroniques unidirectionnels interposés en série et en sens inverse l'un de l'autre, entre la grille de commande du premier interrupteur à tube à plasma et l'armature distale du premier condensateur de commutation, chaque interrupteur électronique unidirectionnel étant équipé d'une diode de roue libre montée en antiparallèle de l'interrupteur électronique unidirectionnel.

Dans certains cas, le système de commande du premier interrupteur à tube à plasma comporte une ramification d'alimentation qui alimente une électrode de veille du premier interrupteur à tube à plasma, la ramification d'alimentation reliant l'électrode de veille du premier interrupteur à tube à plasma à l'armature distale du premier condensateur de commutation. Dans certaines variantes d'un tel cas, la ramification d'alimentation comporte un interrupteur d'alimentation capable de conduire et de bloquer le courant la ramification d'alimentation, et une résistance est interposée dans la ramification d'alimentation. Dans certaines versions d'une telle variante, l'interrupteur d'alimentation est piloté en fermeture après la réception d'un ordre d'interruption de courant par le dispositif de coupure.

Dans certains cas, le système de commande du premier interrupteur à tube à plasma comporte un convertisseur de puissance continue-continue ayant un côté source qui est relié à l'armature distale du premier condensateur de commutation, et ayant un côté commande qui alimente la grille de commande du premier interrupteur à tube à plasma par l'intermédiaire du premier commutateur pilotable. Dans certaines variantes d'un tel cas, le côté commande du convertisseur de puissance comporte une borne positive et une borne négative, et le premier commutateur pilotable comporte un premier interrupteur pilotable d'activation interposé entre la borne positive et la grille de commande du premier interrupteur à tube à plasma, et un deuxième interrupteur pilotable de désactivation interposé entre la borne négative et la grille de commande du premier interrupteur à tube à plasma. Dans certaines versions d'une telle variante, le système de commande du premier interrupteur à tube à plasma comporte une ramification d'alimentation qui alimente une électrode de veille du premier interrupteur à tube à plasma, la ramification d'alimentation reliant une électrode de veille du premier interrupteur à tube à plasma à la borne positive du côté commande du convertisseur de puissance continue-continue.

Dans certains cas, la tension aux bornes du premier condensateur de commutation est limitée, par le premier parasurtenseur de commutation, à une tension de protection inférieure à 10% de la tension nominale de service du module de coupure.

Dans certains cas, le premier condensateur de commutation présente une capacité supérieure à 100 microfarads.

Dans certains cas, l'inductance de commutation et la tension de pré-charge du premier condensateur de commutation du module de coupure sont dimensionnés pour limiter la vitesse de variation de courant au travers de l'appareil principal de coupure, variation qui apparaît lorsque la branche de commutation devient passante pour le courant par la fermeture de l'interrupteur à tube à plasma, à une valeur correspondant à la vitesse de variation pour laquelle l'appareil principal de coupure est capable d'interrompre l'arc électrique.

Dans certains cas, lors d'une ouverture du dispositif de coupure, une durée de conduction du premier interrupteur à tube à plasma est inférieure à 1 milliseconde, de préférence inférieure à 300 microsecondes, plus préférentiellement inférieure à 100 microsecondes.

Dans certains cas:

- l'interrupteur de commutation comprend un second interrupteur à tube à plasma comportant une anode, une cathode et une grille de commande, le second interrupteur à tube à plasma étant interposé dans la branche de commutation entre le premier point et le second point du module de coupure, électriquement en parallèle du premier interrupteur à tube à plasma, en sens inverse du premier interrupteur à tube à plasma, de telle sorte que la cathode du second interrupteur à tube à plasma est reliée au second tronçon de la branche de commutation et que l'anode du second interrupteur à tube à plasma est reliée au premier tronçon de la branche de commutation,
- un second condensateur de commutation est agencé dans le second tronçon de la branche de commutation qui est relié à la cathode du second interrupteur à tube à plasma,
- un système de commande du second interrupteur à tube à plasma est alimenté électriquement par le second condensateur de commutation ;
- le second condensateur de commutation comporte une armature proximale reliée à la cathode du second interrupteur à tube à plasma, et une armature distale opposée à la cathode du second interrupteur à tube à plasma par rapport à l'armature proximale,

- le dispositif comporte un circuit de pré-charge du second condensateur de commutation,
- le module de coupure comporte un second parasurtenseur de commutation qui présente une tension de protection telle que la somme des tensions de protection du premier parasurtenseur de commutation et du second parasurtenseur de commutation est inférieure à la tension nominale de service du module de coupure et qui est connecté électriquement en parallèle du second condensateur de commutation,

et le système de commande du second interrupteur à tube à plasma comporte au moins second commutateur pilotable qui, dans un état fermé, alimente la grille de commande du second interrupteur à tube à plasma par une tension dérivée d'une tension électrique entre les armatures du second condensateur de commutation.

Dans certaines variantes d'un tel cas, le second commutateur pilotable, dans son état fermé, relie électriquement la grille de commande du second interrupteur à tube à plasma à l'armature distale du second condensateur de commutation. Dans d'autres variantes d'un tel cas, le système de commande du second interrupteur à tube à plasma comporte un second convertisseur de puissance continue-continue ayant un côté source qui est relié à l'armature distale du second condensateur de commutation, et ayant un côté commande qui alimente la grille de commande du second interrupteur à tube à plasma par l'intermédiaire du second commutateur pilotable.

Dans certains cas, le système de commande du second interrupteur à tube à plasma comporte une ramification d'alimentation qui alimente une électrode de veille du second interrupteur à tube à plasma. Dans certaines variantes d'un tel cas, la ramification d'alimentation relie l'électrode de veille du second interrupteur à tube à plasma à une borne positive du côté commande du second convertisseur de puissance continue-continue.

Dans certains cas, l'au moins un module de coupure comporte au moins une branche auxiliaire de commutation, électriquement en parallèle de la branche principale, de la branche d'absorption et de la branche de commutation entre le premier point et le second point du module de coupure, avec au moins un premier interrupteur auxiliaire à tube à plasma comportant une anode, une cathode et une grille de commande, le premier interrupteur auxiliaire à tube à plasma étant interposé dans la branche auxiliaire de commutation entre le premier point et le second point du module de coupure de manière à séparer la branche auxiliaire de commutation en un premier tronçon, relié à la cathode du premier interrupteur auxiliaire à tube à plasma, et un second tronçon, relié à l'anode du premier interrupteur auxiliaire à tube à plasma, et au moins un premier condensateur auxiliaire de commutation est agencé dans le premier tronçon de la branche auxiliaire de commutation qui est relié à la cathode du premier interrupteur à tube à plasma.

Dans certaines variantes d'un tel cas :

- l'anode du premier interrupteur auxiliaire à tube à plasma est reliée au même point, parmi le premier point et le second point du module de coupure, que l'anode du premier interrupteur à tube à plasma de l'au moins un module de coupure ;
- l'au moins un module de coupure comporte un système de commande du premier interrupteur auxiliaire à tube à plasma alimenté par le premier condensateur auxiliaire de commutation,
- le premier condensateur auxiliaire de commutation comporte une armature proximale reliée à la cathode du premier interrupteur auxiliaire à tube à plasma, et une armature distale opposée à la cathode du premier interrupteur auxiliaire à tube à plasma par rapport à l'armature proximale,
- le dispositif comporte un circuit de pré-charge du premier condensateur de commutation auxiliaire,
- le dispositif comporte un premier parasurtenseur auxiliaire de commutation qui présente une tension de protection inférieure à une tension nominale de service du module de coupure et qui est connecté électriquement en parallèle du premier condensateur auxiliaire de commutation,

et le circuit de pré-charge du premier condensateur de commutation et le circuit de pré-charge du premier condensateur auxiliaire de commutation comportent une source de tension commune qui alimente en parallèle le premier condensateur de commutation et le premier condensateur auxiliaire de commutation.

Dans certains cas, l'au moins un module de coupure comporte, interposés en parallèle et en sens inverse l'un de l'autre dans la branche auxiliaire de commutation, deux interrupteurs auxiliaires à tube à plasma.

Dans certains cas, le dispositif comporte plusieurs modules de coupure interposés en série dans le circuit principal, chacun entre un premier point et un second point du circuit principal pour le module de coupure considéré.

**Brève description des dessins**

La Figure 1 est une vue schématique d'un exemple de réalisation d'un dispositif de coupure unidirectionnel selon l'invention.

Les Figures 2A à 2E représentent divers modes de réalisation d'une première famille de pilotes pour un système de commande d'un interrupteur à tube à plasma dans un dispositif de coupure selon l'invention.

Les Figures 2F à 2H représentent divers modes de réalisation d'une deuxième famille de pilotes pour un système de commande d'un interrupteur à tube à plasma dans un dispositif de coupure selon l'invention.

La Figure 3 est une vue schématique d'un exemple de réalisation d'un dispositif de coupure bidirectionnel selon l'invention.

Les Figures 4A à 4H sont des diagrammes illustrant les variations de différentes grandeurs physiques dans un dispositif de coupure selon la figure 3, pour un premier scénario de coupure électrique par le dispositif de coupure.

Les Figures 5A à 5H sont des diagrammes illustrant les variations de différentes grandeurs physiques dans un dispositif de coupure selon la Figure 3, pour un second scénario de coupure électrique par le dispositif de coupure.

La Figure 6 est une vue schématique d'un exemple de réalisation d'un dispositif de coupure bidirectionnel selon l'invention, ayant une branche de commutation auxiliaire.

La Figure 7 est une vue schématique d'un exemple de réalisation d'un dispositif de coupure selon l'invention, ayant plusieurs modules de coupure agencés en série dans un circuit principal.

## Description des modes de réalisation

Dans un réseau électrique, la transmission de puissance électrique entre deux points donnés du réseau se fait par une ligne de transmission de puissance qui comprend généralement plusieurs conducteurs électriques dont chacun correspond à un pôle électrique de la ligne de transmission de puissance. Dans tous les cas, au sens du présent texte, un conducteur électrique peut être sous la forme d'un unique conducteur électrique qui s'étend entre deux points distincts du réseau considéré, ou sous la forme d'un ensemble de conducteurs électriques qui s'étendent en parallèle électriquement entre les deux mêmes points distincts du réseau considéré, tous les conducteurs de l'ensemble étant, à chaque instant, au même potentiel électrique.

Ainsi, dans un réseau HVDC, la transmission de puissance électrique entre deux points donnés du réseau se fait par une ligne de transmission de puissance qui, dans beaucoup de cas, comporte deux pôles électriques, chaque pôle comprenant un conducteur électrique qui s'étend entre les deux points donnés du réseau. Dans ce cas, la ligne de transmission de puissance comporte donc deux conducteurs électriques de polarités différentes, avec, en charge, par exemple un conducteur électrique qui est à un potentiel positif et un conducteur électrique qui est à un potentiel négatif ou neutre. Toujours dans une unité de réseau HVDC, la transmission de puissance électrique entre deux points donnés du réseau peut aussi se faire par une voie de transmission de puissance à trois pôles électriques comprenant trois conducteurs électriques, avec, en charge, un conducteur électrique qui est à un potentiel positif, un conducteur électrique qui est à un potentiel négatif, et un conducteur électrique qui est à un potentiel neutre. Dans certains cas, la transmission de puissance électrique entre deux points donnés du réseau peut se faire par une ligne de transmission de puissance à un seul pôle électrique, avec un conducteur électrique au potentiel de la ligne et avec un retour électrique par la terre.

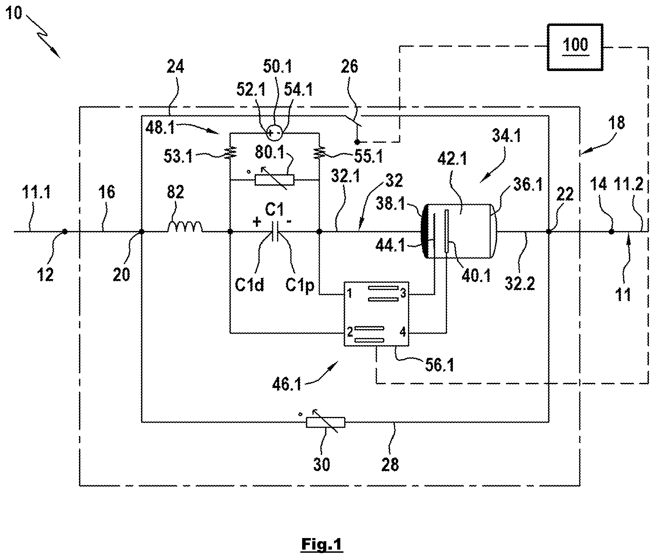

La Figure 1 illustre un premier exemple de réalisation d'un dispositif de coupure **10** pour interrompre un courant électrique sous haute tension continue circulant dans un conducteur électrique **11**, lequel peut par exemple appartenir à une ligne électrique de transmission de puissance électrique dans une unité de réseau HVDC qui fonctionne sous une tension nominale de service continue supérieure à 1500 V, voire supérieure à 75 000 V (75kV). Le dispositif de coupure **10** est donc interposé dans le conducteur électrique **11,** entre un point primaire **12** du dispositif **10** et un point secondaire **14** du dispositif **10** qui peuvent être des bornes de raccordement du dispositif **10** respectivement. Le dispositif de coupure **10** partage donc le conducteur électrique **11** en deux sections, une première section **11.1** qui est raccordée au point primaire **12**, et une deuxième section **11.2** qui est raccordée au point secondaire **14**. Le dispositif de coupure **10** comporte donc un circuit principal **16**, entre le point primaire **12** du dispositif **10** et le point secondaire **14** du dispositif **10**, dans lequel circule, dans une configuration de conduction du dispositif de coupure **10**, un courant électrique opérationnel sous une haute tension nominale de service du dispositif de coupure **10** continue (qui est la haute tension nominale de service du réseau), qui est le courant électrique opérationnel circulant dans le conducteur **11**, et dont l'intensité est inférieure ou égale à l'intensité nominale pour le dispositif. En effet en fonction des besoins instantanés dans le réseau, l'intensité opérationnelle, cella qui circule à un instant donné dans le conducteur **11**, peut varier en étant inférieure ou égale à l'intensité nominale. En revanche, en cas de défaut électrique, l'intensité du courant à travers le dispositif de coupure peut dépasser pendant un temps bref cette intensité nominale. Le dispositif de coupure **10** est configuré pour remplir le rôle d'un disjoncteur, à savoir qu'il a la capacité d'interrompre un courant d'intensité supérieure ou égale à l'intensité nominale, donc soit en charge à l'intensité normale, soit en présence d'un courant de défaut d'intensité supérieure ou égale à l'intensité nominale. Cependant, ce même dispositif de coupure reste capable d'interrompre un courant d'intensité inférieure ou égale à l'intensité nominale.

Le dispositif de coupure **10** comporte au moins un module de coupure **18** qui interposé dans le circuit principal **16** entre un premier point **20** et un second point **22** du circuit principal **16** pour le module de coupure **18**. Dans l'exemple de la Figure 1, qui ne comporte qu'un seul module de coupure **18**, le premier point **20** et un second point **22** du circuit principal **16** sont des points du circuit principal **16** qui sont respectivement au même potentiel électrique que, respectivement, le point primaire **12** et le point secondaire **14** du dispositif de coupure **10** qui délimitent le circuit principal **16** du dispositif de coupure **10**.

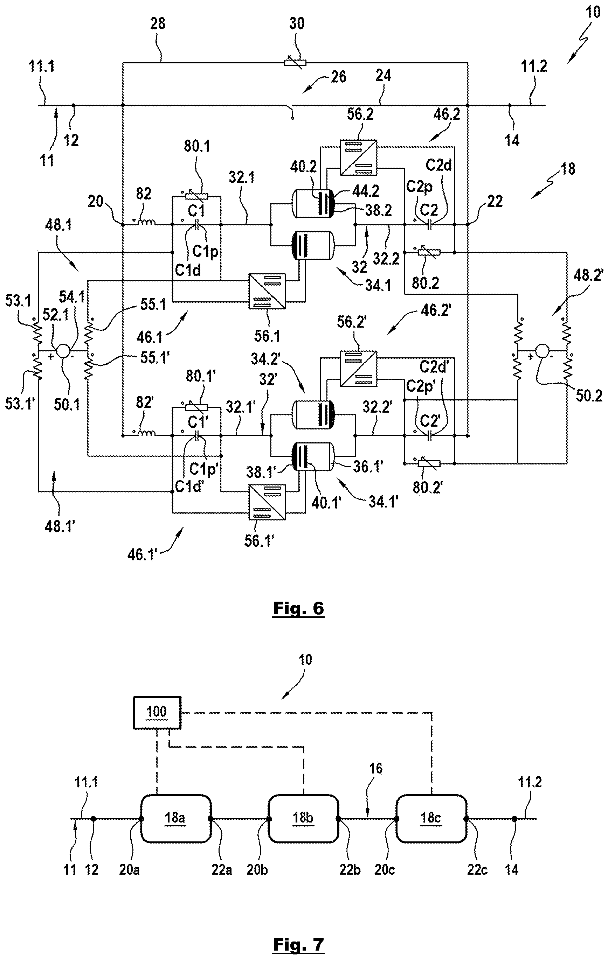

On verra plus loin en référence à la Figure 7 que le dispositif de coupure peut comporter plusieurs modules de coupure **18a, 18b, 18c,** ..., qui peuvent être agencés électriquement en série dans le circuit principal **16**, entre le point primaire **12** et le point secondaire **14** du dispositif de coupure **10**.

Un module de coupure **18** comprend au moins trois branches qui sont électriquement en parallèle l'une de l'autre entre le premier point **20** et le second point **22**.

Un module de coupure **18** comprend une branche principale **24**, entre le premier point **20** et le second point **22**, avec au moins un appareil principal de coupure **26**, qui est interposé dans la branche principale **24** entre le premier point **20** et le second point **22**, et qui est de type mécanique pour assurer la coupure électrique dans la branche principale **24**. L'appareil principal de coupure **26** peut basculer entre un état fermé, dans lequel il permet la circulation du courant électrique dans la branche principale **24**, et un état ouvert dans lequel il assure la coupure électrique dans la branche principale **24** en interrompant la circulation de courant électrique au moment d'un passage par zéro de l'intensité dans le branche principale **24**. La branche principale **24** du module **18** est celle dans laquelle circule le courant opérationnel en fonctionnement normal du réseau lorsque le dispositif de coupure **10** est dans sa configuration de conduction. En fonctionnement normal du réseau, lorsque le dispositif de coupure **10** est dans sa configuration de conduction, l'appareil principal de coupure **26** est donc traversé par le courant opérationnel circulant dans le conducteur électrique **11**, selon un régime qui peut être permanent, ou quasi-permanent.

Dans l'appareil principal de coupure **26** de type mécanique, la coupure électrique est obtenue par déplacement, notamment par écartement, d'une ou plusieurs paires de contacts électriques. Le déplacement des contacts électriques est généralement réalisé par des organes de manoeuvre ou actionneurs mécaniques, pneumatiques, hydrauliques ou électriques, éventuellement à travers une cinématique de transfert du mouvement. Ce déplacement peut être contrôlé électroniquement, par exemple par une unité de commande électronique **100**. Comme indiqué plus haut, en présence d'un courant et/ou d'une tension importante, la séparation mécanique des contacts électriques peut se traduire par l'établissement d'un arc électrique entre les deux contacts électriques de l'appareil, du fait des énergies importantes accumulées dans le réseau que l'appareil protège. Tant que l'arc électrique reste établi au travers de la séparation mécanique, l'appareil principal de coupure **26** ne réalise pas la coupure électrique puisqu'un courant continue de circuler au travers de l'interrupteur par la présence de l'arc. Comme on le verra plus loin, l'invention prévoit des moyens pour assurer la coupure électrique, au sens de l'interruption effective de la circulation du courant électrique. L'appareil principal de coupure **26** peut être constitué par un unique appareil principal de coupure, ou peut être constitué de plusieurs appareils principaux de coupure électrique agencés électriquement en série et / ou en parallèle. L'appareil principal de coupure **26** peut être un appareil dit « sous enveloppe métallique » où les contacts électriques sont enfermés dans une enceinte étanche emplie d'un fluide isolant, ou encore, plus préférentiellement, un appareil « sous vide » (parfois appelé « ampoule à vide ») où les contacts électriques sont enfermés dans une enceinte étanche dans laquelle la pression est inférieure à la pression atmosphérique, notamment inférieure à 100 millibars, notamment inférieure à 10 microbars. L'appareil principal de coupure **26** sera avantageusement capable d'interrompre l'arc électrique d'un courant présentant, au moment d'un passage par zéro de l'intensité, une forte vitesse de variation d'intensité (di/dt), typiquement avec une vitesse de variation d'intensité supérieure ou égal à 100 A par microsecondes.

Un module de coupure **18** comporte aussi une branche d'absorption **28**, qui est agencée électriquement en parallèle de la branche principale **24** entre le premier point **20** et le second point **22** du module de coupure **18** considéré, avec au moins un parasurtenseur général **30** interposé dans la branche d'absorption **28** entre le premier point **20** et le second point **22** du module considéré.

Un tel parasurtenseur général **30** permet de limiter l'amplitude de la différence de potentiel aux bornes de tout composant ou ensemble de composant en parallèle duquel ou desquels il est agencé. Un parasurtenseur, ou « voltage surge arester », est donc un dispositif qui limite les crêtes de tension à ses bornes. Un parasurtenseur comprend généralement un composant électrique qui présente une résistance variable en fonction de la tension électrique à ses bornes. La variation de la valeur de résistance n'est généralement pas linéaire avec la tension électrique aux bornes du parasurtenseur. Généralement, en-dessous d'une tension de transition aux bornes du parasurtenseur, la résistance de celui-ci est importante, avec une décroissance nulle ou relativement faible de sa résistance en fonction de l'augmentation de la tension, et le parasurtenseur ne laisse passer qu'un courant de fuite, de préférence inférieur à 1 ampère (A), voire inférieur à 100 milliampères (mA). Au contraire, au-dessus de la tension de transition aux bornes du parasurtenseur, la résistance de celui-ci décroît rapidement en fonction de l'augmentation de la tension, laquelle atteint une valeur de tension d'écrêtage, ou tension de protection, pour laquelle la résistance du parasurtenseur devient faible, voire très faible. En d'autres termes, le parasurtenseur agit comme un limiteur de tension à ses bornes sur l'intervalle de courant pour lequel il a été choisi. Il oppose la tension de protection lorsqu'on fait passer le courant le plus élevé pour lequel le parasurtenseur a été dimensionné. En deçà de la tension de transition, il tend à empêcher le passage du courant. Au-delà de la tension de transition, il autorise le passage du courant au travers du parasurtenseur pour une faible augmentation de la tension à ses bornes. De manière connue, la tension de transition n'est généralement pas une valeur précise mais correspond plutôt à une plage de tension de transition. Cependant, dans le présent texte, on prendra comme définition que la tension de transition d'un parasurtenseur est la tension pour laquelle le parasurtenseur laisse passer à son travers un courant de 1 ampère (A). La tension de protection est la tension aux bornes du parasurtenseur lorsqu'il est traversé par le courant le plus important pour lequel il a été dimensionné. Parmi les parasurtenseurs, on connait notamment les parafoudres, lesquels peuvent notamment comprendre les varistances (ou varistors) et les diodes « TVS » (Transient Voltage Suppressor, telles que les diodes « Transil™ ». Notamment, dans le cadre de l'invention, un parasurtenseur, notamment le parasurtenseur général **30** peut comprendre un varistor à oxydes métalliques (ou MOV, signifiant « metal oxyde varistor »). Le parasurtenseur général **30** peut être réalisé sous la forme d'un ensemble de plusieurs composants discrets agencés électriquement en série et / ou en parallèle. Chaque composant discret est par exemple un parafoudre, notamment une varistance, tel qu'un varistor à oxydes métalliques, ou une diode « TVS ». De préférence, l'ensemble de plusieurs composants discrets agencés électriquement en série et / ou en parallèle présente, du point de vue du reste du dispositif, le comportement d'un parasurtenseur unique ayant une tension de transition équivalente pour l'ensemble et une tension de protection pour l'ensemble.

Comme on peut le voir sur les figures, la branche d'absorption ne comporte pas d'interrupteur. De ce fait, il est nécessaire de choisir le parasurtenseur général **30** de telle sorte que sa tension de transition soit supérieure à la tension susceptible d'apparaitre aux bornes du module de coupure **18** lorsque le dispositif de coupure **10** est en service et en configuration d'ouverture électrique sous la tension nominale de service du réseau. Par exemple, le parasurtenseur général **30** est choisi de telle sorte que sa tension de protection soit comprise entre 1,2 et 2 fois, par exemple 1,6 fois la tension nominale de service du module **18** qui est la tension sous laquelle le module de coupure **18** opère lorsque le dispositif de coupure **10** est en service sous la tension nominale de service du réseau. Dans les cas où le dispositif de coupure **10** ne comporte qu'un unique module de coupure **18**, comme illustré sur les Figures 1, 3 et 6, la tension nominale de service du module **18** est égale à la tension nominale de service du dispositif de coupure **10** et est égale à la tension nominale de service du réseau. Dans les cas où le dispositif de coupure **10** comporte plusieurs modules de coupure **18a**, **18b**, **18c**, comme illustré sur la Figure 7, la tension nominale de chaque module **18a**, **18b**, **18c**, qui est la tension susceptible d'apparaitre aux bornes de chaque module de coupure **18a**, **18b**, **18c**, lorsque le dispositif de coupure **10** est en service et en configuration d'ouverture électrique sous la tension nominale de service du réseau, est seulement une fraction de la tension nominale de service du dispositif de coupure **10**, donc une fraction de la tension nominale de service du réseau puisque cette tension est alors répartie entre les différents modules de coupure **18a**, **18b**, **18c**.

Du fait de la présence du parasurtenseur général **30** interposé dans la branche d'absorption **28**, et du fait du choix de sa valeur de tension de transition, on peut considérer que, en fonctionnement normal du réseau lorsque le dispositif de coupure **10** est dans sa configuration de conduction, aucun courant électrique ne circule dans la branche d'absorption.

Un module de coupure **18** selon l'invention comporte de plus au moins une branche de commutation **32** qui est agencée électriquement en parallèle de la branche principale **24** et de la branche d'absorption **28** entre le premier point **20** et le second point **22** du module de coupure **18** considéré.

On trouve, interposés électriquement en série dans la branche de commutation **32**, entre le premier point **20** et le second point **22**, un premier condensateur de commutation **C1** et un interrupteur de commutation qui est réalisé sous la forme d'au moins un premier interrupteur à tube à plasma **34**.

Des interrupteurs à tube à plasma sont décrits dans les documents US5828176A (« Planar crossed-field plasma switch ») ou US10256067 et US2019/0295801 (« gas switch »), auxquels on pourra se reporter. De manière générale, un interrupteur à tube à plasma, et donc le premier interrupteur à tube à plasma **34.1**, comporte une anode **36.1**, une cathode **38.1**, et une grille de commande **40.1** dans une enceinte étanche **42.1** contenant un fluide qui peut être ionisé pour générer un plasma, par exemple de l'hélium, de l'azote, etc.... La grille de commande **40.1** est généralement agencée entre l'anode **36.1** et la cathode **38.1** de telle sorte que, lorsqu'une tension de commande est appliquée de manière transitoire à la grille de commande **40.1**, un chemin de plasma est amorcé entre l'anode **36.1** et la cathode **38.1** pour conduire un courant électrique important entre l'anode **36.1** et la cathode **38.1**. Le chemin de plasma peut être interrompu en provoquant une polarisation inverse de la grille de commande **40.1**, donc en envoyant une tension de commande inverse, de sorte que le courant électrique circulant de l'anode **36.1** à la cathode **38.1** est temporairement prélevé par la grille de commande **40.1**, permettant au fluide qui était précédemment ionisé entre la grille de commande **40.1** et l'anode **36.1** de redevenir isolant. Ainsi, un interrupteur à tube à plasma **34.1** peut être commandé vers un état ouvert, dans lequel il interrompt tout passage de courant entre son anode **36.1** et sa cathode **38.1**, ou vers un état fermé, dans lequel il autorise le passage de courant entre son anode **36.1** et sa cathode **38.1**, cette commande étant réalisée par la valeur et la polarité de la tension appliquée à la grille de commande **40.1**. Par exemple, un interrupteur à tube à plasma **34.1** peut être de type « cross-field switch », ce que l'on peut traduire par « à champs perpendiculaires » : des aimants sont agencés pour générer un champ magnétique qui est parallèle à la surface de conduction d'une des électrodes de l'interrupteur à tube à plasma, et ce champ magnétique est donc perpendiculaire au champ électrique généré par la tension entre les deux électrodes **36.1**, **38.1**. Dans certains cas, l'interrupteur à tube à plasma **34.1** comporte aussi, dans l'enceinte étanche **42.1**, une électrode de veille **44.1** dont le rôle est de maintenir, entre l'électrode de veille **44.1** et la cathode**38.1**, un plasma faible. L'intensité de courant de ce plasma est l'ordre de grandeur de quelques milliampères à quelques ampères, et dépend du type de gaz et de la pression de gaz dans l'enceinte étanche **42.1**. Dans tous les cas, le principe de fonctionnement d'un interrupteur à tube à plasma repose sur la possibilité, en appliquant à la grille de commande **40.1** un potentiel de fermeture qui génère une tension positive par rapport la cathode, de créer un plasma qui enclenche une conduction d'un courant électrique entre l'anode **36.1** et la cathode **38.1**. Au contraire, en appliquant à la grille de commande **40.1** un potentiel d'ouverture qui génère une tension négative par rapport la cathode, on provoque l'interruption de ce plasma, ce qui rétablit l'isolation électrique entre l'anode **36.1** et la cathode **38.1** et ainsi interrompt tout passage de courant entre l'anode **36.1** et la cathode **38.1** de l'interrupteur à tube à plasma **34.1**. Seul subsiste alors l'éventuel courant de plasma entre l'électrode de veille **44.1** et la cathode **38.1** si une alimentation de tension est appliquée à l'éventuelle électrode de veille **44.1**.

Un interrupteur à tube à plasma **34.1** présente le grand avantage de pourvoir être conçu pour interrompre à coup sûr, en un temps très court, des courants élevés, par exemple supérieurs à 500 A, par exemple de l'ordre de 1000 A, sous une tension continue égale ou supérieure à 50.000 volts (50kV), avec les constructions connues actuellement. Il ne fait pas de doute que des dimensionnements supérieurs sont possibles, mais aujourd'hui à des conditions économiques moins avantageuses. De la sorte, si le dispositif de coupure doit être dimensionné pour interrompre des courants plus importants, on pourra mettre en oeuvre un module de coupure **18** comportant plusieurs branches de commutation en parallèle, chacune équipée d'au moins interrupteur à tube à plasma, pour ainsi répartir l'intensité entre plusieurs branches de commutation fonctionnant en parallèle, donc entre plusieurs interrupteurs à tube à plasma en parallèle. Un exemple d'un tel dispositif de coupure **10** sera décrit plus loin en référence à la Figure 6. De plus, une fois dans son état ouvert, un interrupteur à tube à plasma peut être conçu, avec les technologies actuellement disponibles, pour tenir une tension à ses bornes de plus de 50kV, voire même de plus de 100 kV. Si le dispositif de coupure doit être dimensionné pour tenir des tensions plus élevées, on peut mettre en oeuvre, comme illustré à la Figure 7, un dispositif de coupure **10** comportant plusieurs modules de coupure **18a**, **18b**, **18c**, ..., agencés électriquement en série dans le circuit principal **16** du dispositif de coupure **16**, chaque module de coupure étant équipé d'au moins interrupteur à tube à plasma, pour ainsi répartir la tension entre plusieurs interrupteurs à tube à plasma en série.

La chute de tension aux bornes entre l'anode **36.1** et la cathode **38.1** d'un interrupteur à tube à plasma **34.1**, lorsqu'il est parcouru par un courant, est importante et est par exemple comprise entre 50V et 1000V. Cette chute de tension dépend de certaines caractéristiques de l'interrupteur à tube à plasma, notamment la pression et le type de gaz dans l'enceinte étanche, le matériau de la cathode **38.1**, etc.... Cette chute de tension génère une importante dissipation d'énergie pendant la durée de conduction de l'interrupteur à tube à plasma **34.1** et, si la durée de conduction est longue, risque de provoquer un endommagement des électrodes dans le tube à plasma. De la sorte, on conçoit qu'il apparait préférable que la durée de conduction de l'interrupteur à plasma soit la plus réduite possible si on veut contenir son volume et son coût.

Par ailleurs, l'intensité de courant qu'il est nécessaire de fournir à la grille de commande **40.1** du tube à plasma est importante, avec une intensité de quelques dizaines d'ampères nécessaire à la commande de la fermeture, pour lui permettre de conduire le courant entre son anode et sa cathode, et une intensité équivalente à celle du courant d'anode nécessaire pour la commande d'ouverture de cet interrupteur à tube à plasma, i.e. pour lui permettre d'interrompre le courant entre son anode et sa cathode , donc du même ordre de grandeur que celle du courant de défaut qu'il s'agit de couper.

On note que, tel que décrit ci-dessus, un interrupteur à tube à plasma ne permet le passage d'un courant que dans un seul sens entre son anode et sa cathode : il permet le passage d'un courant circulant de son anode (où les électrons sortiront de l'interrupteur à tube à plasma) vers sa cathode (où les électrons entreront dans l'interrupteur à tube à plasma).

On verra que, de ce fait, le premier mode de réalisation de l'invention qui est illustré sur la Figure 1 ne permet d'interrompre un courant de défaut que, pour le cas où le conducteur **11.1** est un conducteur à un potentiel positif dans la ligne de transmission de puissance, si le défaut est situé dans la première section **11.1** du conducteur électrique **11**. Pour le cas où le conducteur **11.1** est un conducteur à un potentiel négatif dans la ligne de transmission de puissance, le premier mode de réalisation de l'invention qui est illustré sur la Figure 1 ne permettrait d'interrompre un courant de défaut que si le défaut était situé dans la deuxième section **11.2** du conducteur électrique **11**. En effet, le premier mode de réalisation de l'invention qui est illustré sur la Figure 1 ne permet d'interrompre un courant de défaut que s'il circule dans le sens allant du second point **22** vers le premier point **20**.

Le premier interrupteur à plasma **34.1** est agencé dans la branche de commutation **32** de manière à séparer la branche de commutation **32** en un premier tronçon **32.1**, relié à la cathode **38.1** du premier interrupteur à tube à plasma

**34.1**, et un second tronçon **32.2**, relié à l'anode **36** du premier interrupteur à tube à plasma **34.1**. Dans les exemples illustrés, le premier tronçon **32.1** de la branche de commutation **32** relie donc la cathode **38.1** du premier interrupteur à tube à plasma **34.1** avec le premier point **20** du module de coupure **18**, et le second tronçon **32.2** de la branche de commutation **32** relie l'anode **36.1** du premier interrupteur à tube à plasma **34.1** avec le second point **22** du module de coupure **18**.

Pour commander le premier interrupteur à plasma **34.1**, le module de coupure **18** du dispositif de coupure **10** comporte un système de commande **46.1** du premier interrupteur à tube à plasma **34.1**. Ce système de commande **46.1** a pour fonction de contrôler notamment le potentiel électrique appliqué à la grille de commande **40.1** du premier interrupteur à tube plasma **34.1**, ceci afin de commander l'interrupteur à plasma soit dans son état ouvert, soit dans son état fermé.

Comme on le comprendra plus loin, le premier interrupteur à tube à plasma **34.1** a vocation à être commandé vers son état fermé, autorisant le passage du courant à son travers, uniquement dans des phases de basculement de l'appareil principal de coupure **26**, notamment dans une phase de basculement de l'appareil principal de coupure **26** de son état fermé vers son état ouvert. En dehors de ces phases de basculement, notamment dans une phase de conduction nominale lorsque l'appareil principal de coupure **26** est maintenu dans son état fermé pour laisser circuler à son travers un courant électrique opérationnel circulant dans le conducteur électrique **11**, ou dans une phase d'isolement dans laquelle l'appareil principal de coupure **26** est maintenu dans son état ouvert pour interrompre la circulation de courant dans le conducteur électrique **11**, le premier interrupteur à tube à plasma **34.1** a vocation à être maintenu dans son état ouvert, de sorte qu'aucun courant ne circule dans la branche de commutation **32**.

De la sorte, le système de commande **46.1** doit comporter au moins une source de potentiel électrique et au moins un commutateur pilotable afin de pouvoir commander le potentiel électrique appliqué à la grille de commande **40.1** du premier interrupteur à tube à plasma **34.1**.

Le système de commande **46.1** du premier interrupteur à tube à plasma **34.1** est alimenté électriquement par le premier condensateur de commutation **C1** agencé dans le premier tronçon **32.1** de la branche de commutation **32** qui est relié à la cathode **38.1** du premier interrupteur à tube à plasma **34.1**. De manière conventionnelle, le premier condensateur de commutation **C1** comporte deux armatures **C1p**, **C1d** conductrices agencées en vis-à-vis l'une de l'autre et séparées par un isolant électrique, avec une armature proximale **C1p** reliée à la cathode **38.1** de l'interrupteur à tube à plasma **34.1**, et une armature distale **C1d** opposée à la cathode **38.1** de l'interrupteur à tube à plasma par rapport à l'armature proximale **C1p**. L'armature distale **C1d** du premier condensateur de commutation **C1** est donc reliée au premier point **20** du module de coupure **18**, avec, dans le mode de réalisation illustré, interposition d'une bobine **82** optionnelle qui sera discutée plus bas. Bien entendu, le premier condensateur de commutation **C1** peut être réalisé sous la forme d'un ensemble de plusieurs condensateurs discrets agencés électriquement en série et/ou en parallèle les uns par rapport aux autres, le premier condensateur de commutation **C1** tel que discuté plus loin étant alors le condensateur électriquement équivalent à cet ensemble. Le premier condensateur de commutation **C1** joue donc, entre autre, le rôle de source de potentiel électrique destiné à être appliqué à la grille de commande **40.1** de l'interrupteur à tube à plasma **34.1**. En plus de cette première fonction qui est de constituer une source de tension pour le système de commande **46.1** du premier interrupteur à tube à plasma **34.1**, on verra qu'il assure aussi une deuxième fonction comprenant la génération d'un courant oscillant dans la branche de commutation **32** pour injecter un contre-courant dans la branche principale **24**, ceci afin de favoriser l'extinction de l'arc électrique susceptible d'apparaitre entre les électrodes de l'appareil de coupure principal **26** au moment de son ouverture.

Comme on le verra plus loin, le système de commande **46.1** comporte un circuit de pré-charge **48.1** du premier condensateur de commutation **C1**. Ce circuit de pré-charge **48.1** permet d'installer entre les deux armatures **C1p**, **C1d** du condensateur de commutation **C1**, avant toute commutation de l'appareil principal de coupure **26**, une tension électrique prédéterminée, suffisante pour fournir le potentiel électrique nécessaire à la commande de l'interrupteur à tube à plasma **34.1**, notamment suffisante pour commander le passage de l'interrupteur à tube à plasma **34.1** vers son état fermé. Dans l'exemple, le circuit de pré-charge **48.1** comporte une source de tension continue **50.1** qui comporte une borne positive **52.1** qui est reliée, dans ce mode de réalisation, à l'armature distale **C1d** du condensateur de commutation **C1**, ici au travers d'une résistance **53.1**, et une borne négative **54.1** qui est reliée, dans ce mode de réalisation, à l'armature proximale **C1p** du condensateur de commutation **C1**, ici aussi au travers d'une autre résistance **55.1**. Les résistances **53.1**, **55.1** du circuit de pré-charge **48.1** peuvent être de même valeur de résistance, ou peuvent présenter des valeurs différentes. En pratique, une seule des deux résistances peut suffire. La ou les résistances **53.1**, **55.1** ont pour rôle de limiter le courant de charge/décharge à fournir par la source de tension continue **50.1**. Dans ce mode de réalisation, qui n'est conçu pour permettre d'interrompre un courant de défaut que si le courant de défaut circule dans le sens allant du second point **22** vers le premier point **20**, le circuit de pré-charge **48.1** assure donc une pré- charge du condensateur de commutation **C1** de telle sorte que l'armature distale **C1d** du condensateur de commutation **C1** se trouve chargée positivement par rapport à l'armature proximale **C1p**.

Le système de commande **46.1** du premier interrupteur à tube à plasma **34.1** comporte au moins premier commutateur pilotable **58.1** qui, dans un état fermé, alimente la grille de commande **40.1** du premier à tube à plasma **34.1** par une tension dérivée d'une tension électrique entre les armatures du premier condensateur de commutation **C1**.

De manière générale, le premier commutateur pilotable **58.1** est piloté selon une première impulsion de fermeture pour commander la fermeture du premier interrupteur à tube à plasma **34.1**, et est piloté selon une seconde impulsion de fermeture pour commander l'ouverture du premier interrupteur à tube à plasma **34.1**, après renversement de la polarité de charge du premier condensateur de commutation **C1**.

De manière générale, le système de commande **46.1** peut prendre différentes formes. Parmi ces différentes formes possibles, on peut notamment dégager deux familles de mode de réalisation pour le système de commande **46.1** : une première famille de mode de réalisation qui assure une connexion directe, par l'intermédiaire du commutateur pilotable **58.1**, entre l'armature distale **C1d** du condensateur de commutation **C1** et la grille de commande **40**, et une deuxième famille de réalisation qui assure une connexion indirecte entre le condensateur de commutation et la grille de commande **40.1** de l'interrupteur à tube à plasma **34.1**, par l'intermédiaire d'un convertisseur de puissance électrique et d'un interrupteur pilotable. Ces deux familles ont en commun d'interposer un pilote **56.1** entre le condensateur de commutation **C1** et l'interrupteur à tube à plasma **34**, ce pilote **56.1** comprenant le premier commutateur pilotable **58.1**.

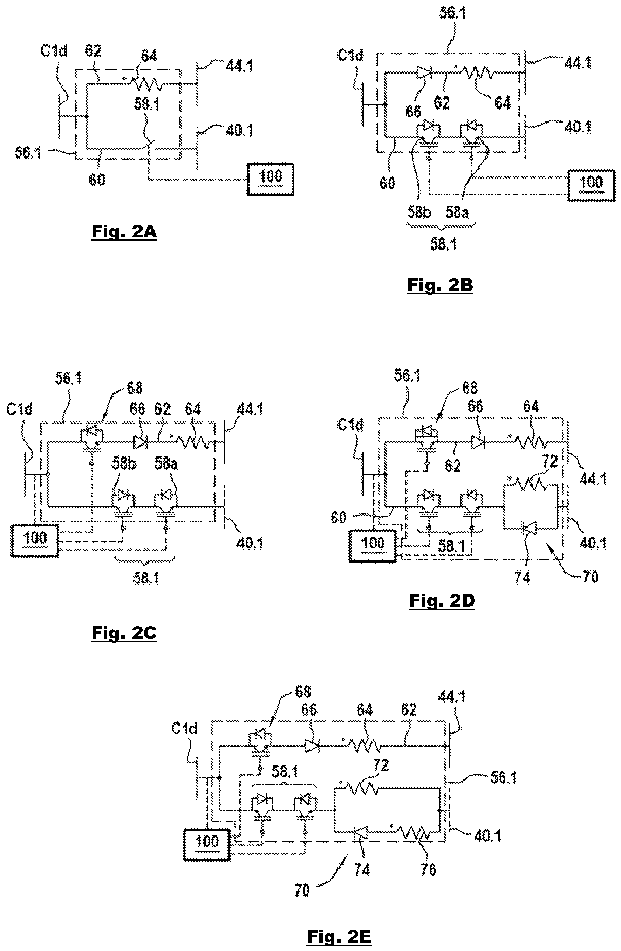

La première famille de pilote **56.1** peut par exemple prendre l'une ou l'autre des formes illustrées respectivement aux figures 2A, 2B, 2C, 2D et 2E, y compris leurs variantes éventuelles.

À la Figure 2A, on a illustré un mode de réalisation dans lequel le pilote **56.1** peut prendre la forme d'un simple commutateur pilotable **58.1** interposé dans un conducteur **60** reliant l'armature distale **C1d** du condensateur de commutation **C1** à la grille de commande **40.1** de l'interrupteur à tube à plasma **34.1**. De préférence, le premier commutateur pilotable **58.1** est un interrupteur bidirectionnel capable de conduire et de bloquer le courant dans les deux sens entre la grille de commande **40.1** du premier interrupteur à tube à plasma **34.1** et l'armature distale **C1d** du premier condensateur de commutation **C1**. Une fermeture temporaire du premier commutateur pilotable **58.1** permet de contrôler la fermeture et l'ouverture de premier interrupteur à tube plasma **34**. A l'état initial, on considère que l'armature distale **C1d** est en polarité positive par rapport à la cathode **38.1** du premier interrupteur à tube plasma **34.1**, si bien que la fermeture temporaire du commutateur pilotable **58.1** permet de générer une tension impulsionnelle positive sur la grille de commande **40.1** pour commander la fermeture du premier interrupteur à tube plasma **34.1**, lequel devient passant pour tout courant électrique allant de son anode **36.1** à sa cathode **38.1**. Un tel courant est donc alors susceptible de traverser l'interrupteur à tube plasma **34.1** et est susceptible d'inverser la tension entre les armatures **C1d**, **C1p** du premier condensateur de commutation **C1**, de sorte que l'armature distale **C1d** présente alors une polarité négative par rapport à la cathode **38.1**. De la sorte, en partant de cet état, une fermeture temporaire du premier commutateur pilotable **58.1** permet d'appliquer une tension négative sur la grille de commande **40.1** pour commander l'ouverture de l'interrupteur à tube à plasma **34.1**, ce qui interrompt tout passage de courant électrique au travers de celui-ci.

Sur cette Figure 2A, on a illustré une variante qui pourra être mise en oeuvre dans le cas où le premier interrupteur à tube à plasma **34.1** comporte par ailleurs une électrode de veille **44.1**. Dans ce cas, le pilote **56.1** peut avantageusement comporter une ramification d'alimentation **62** qui alimente l'électrode de veille **44.1** du premier interrupteur à tube à plasma **34.1**. Dans l'exemple illustré, la ramification d'alimentation **62** comporte une résistance **64** interposée dans un conducteur qui relie l'armature distale **C1d** du condensateur de commutation **C1** à la grille de commande **40.1** du premier interrupteur à tube à plasma **34.1**. Typiquement, la résistance **64** sera dimensionnée pour que le courant d'alimentation de l'électrode de veille **44.1** présente une intensité comprise entre 1 milliampère et 1 ampère.

Sur la Figure 2B, on a illustré une variante du pilote **56.1** dans laquelle le premier commutateur pilotable **58.1** est réalisé sous la forme de deux interrupteurs électroniques unidirectionnels **58a**, **58b**, par exemple des IGBTs (Insulated Gate Bipolar Transistor) interposés électriquement en série et en sens inverse l'un de l'autre, entre la grille de commande **40.1** du premier interrupteur à tube à plasma **34.1** et l'armature distale **C1d** du premier condensateur de commutation **C1**, chaque IGBT **58a, 58b** étant équipé d'une diode de roue libre montée en antiparallèle de l'IGBT. En fonctionnement, les deux IGBTs **58a, 58b** sont normalement ouverts. L'un des deux IGBTs **58a, 58b** est commandé vers son état fermé pour commander la fermeture du premier interrupteur à tube à plasma **34.1**, tandis que l'autre des deux IGBT **58a, 58b** est commandé vers son état fermé pour commander l'ouverture du premier interrupteur à tube à plasma **34.1**. La réalisation du premier commutateur pilotable **58.1** sous la forme de deux interrupteurs électroniques unidirectionnels permet, de manière simple et économique, d'autoriser un pilotage précis des instants de commutation du premier interrupteur à tube à plasma **34.1**.

Dans cette même figure 2B, indépendamment du mode de réalisation particulier du commutateur pilotable **58.1** illustré sur cette figure, on a illustré que la ramification d'alimentation **62** qui alimente l'éventuelle électrode de veille **44.1** peut comporter une diode **66** laissant circuler le courant dans la ramification **62** uniquement depuis l'armature distale **C1d** du condensateur de commutation **C1** vers l'électrode de veille **44.1**, dans les cas bien sûr où l'interrupteur à tube à plasma **34.1** comporte une telle électrode de veille **44.1**. La présence de cette diode **66** permet maintenir le plasma à l'intérieur de l'interrupteur à tube plasma **34.1**, ceci même quand la tension aux bornes du premier condensateur de commutation **C1** est inversée, ce qui permet d'assurer que le premier interrupteur à tube à plasma **34.1** reste dans sa configuration fermée permettant le passage du courant à son travers.

Sur la Figure 2C, on a illustré une variante du pilote **56.1** dans laquelle la ramification d'alimentation **62** qui alimente l'éventuelle électrode de veille **44.1** comporte un interrupteur d'alimentation **68** pour commander l'alimentation ou pas de l'électrode de veille **44.1**. Dans cet exemple, l'interrupteur d'alimentation **68** est associé en série dans la ramification d'alimentation **62** avec une diode **66** laissant circuler le courant dans la ramification **62** uniquement depuis l'armature distale **C1d** du condensateur de commutation **C1** vers l'électrode de veille **44.1**. Par ailleurs, l'interrupteur d'alimentation **68** qui commande l'alimentation ou pas de l'électrode de veille **44.1** peut être réalisé sous la forme d'un interrupteur électronique, par exemple sous la forme d'un IGBT équipé d'une diode de roue libre montée en antiparallèle de l'IGBT et en sens inverse de la diode **66**. Dans son état fermé, l'IGBT d'alimentation **68** court-circuite la diode de roue libre pour laisser circuler le courant dans la ramification **62** depuis l'armature distale **C1d** du condensateur de commutation **C1** vers l'électrode de veille **44**. L'interrupteur d'alimentation **68** qui commande l'alimentation ou pas de l'électrode de veille **44.1** peut ainsi être amenée dans son état fermé, pour alimenter l'électrode de veille **44.1** juste avant une commande de fermeture de l'interrupteur à tube à plasma **34.1**. Par exemple, l'interrupteur d'alimentation **68** est amené dans son état fermé entre 100 microsecondes ($\mu$s) et 10 millisecondes (ms) avant une commande de fermeture de l'interrupteur à tube à plasma **34.1**. On s'assure ainsi d'une bonne maîtrise de l'instant de commutation de l'interrupteur à tube à plasma **34.1** vers son état fermé.

Sur la Figure 2D, on a illustré une variante du pilote **56.1** dans laquelle on a inséré, en série avec le premier commutateur pilotable **58.1** dans le conducteur **60** reliant l'armature distale **C1d** du condensateur de commutation **C1** à la grille de commande **40.1** de l'interrupteur à tube à plasma, un limiteur de courant **70** qui évitera une décharge trop rapide du condensateur **C1** et pourra limiter l'intensité au travers commutateur pilotable **58.1**. Dans l'exemple, ce limiteur de courant est un limiteur asymétrique qui limite le courant uniquement dans le sens allant de l'armature distale **C1d** du condensateur de commutation **C1** à la grille de commande **40.1** du premier interrupteur à tube à plasma **34.1**, donc uniquement lors d'une commande de fermeture du premier interrupteur à tube à plasma **34.1**. Ceci est avantageux car le courant nécessaire pour la commande de fermeture d'un interrupteur à tube à plasma est généralement beaucoup plus faible que celui nécessaire pour une commande d'ouverture. Pour cela, le limiteur de courant **70** comporte, en parallèle l'une de l'autre, une résistance **72** et une diode **74**, la diode **74** court-circuitant la résistance **72** lorsque le courant circule de la grille de contrôle **40.1** vers l'armature distale **C1d** du premier condensateur de commutation **C1**. Sur cette Figure 2D, le limiteur de courant **70** n'offre pas de résistance lors de l'ouverture du premier interrupteur à tube à plasma **34.1**. Dans la variante illustrée à la Figure 2E, le limiteur de courant **70** reste asymétrique, avec une seconde résistance **76** qui est agencée en série dans le limiteur de courant **70** avec la diode **74**, la seconde résistance **76** et la diode **74** étant en parallèle de la première résistance **72**. La première résistance **72** et la seconde résistance **76** permettent donc définir indépendamment l'une de l'autre les valeurs de limitation de courant dans les deux sens entre le premier condensateur de commutation **C1** et la grille de commande **40.1** du premier interrupteur à tube à plasma **34.1**, pour ajuster au plus près le courant fourni à la grille de commande **40.1** à celui qui est respectivement nécessaire pour la commande de fermeture et pour la commande d'ouverture tout en protégeant le commutateur pilotable **58.1**. En pratique, la seconde résistance **76** sera généralement dimensionnée de manière à avoir une valeur de résistance inférieure à celle de la première résistance **72**.

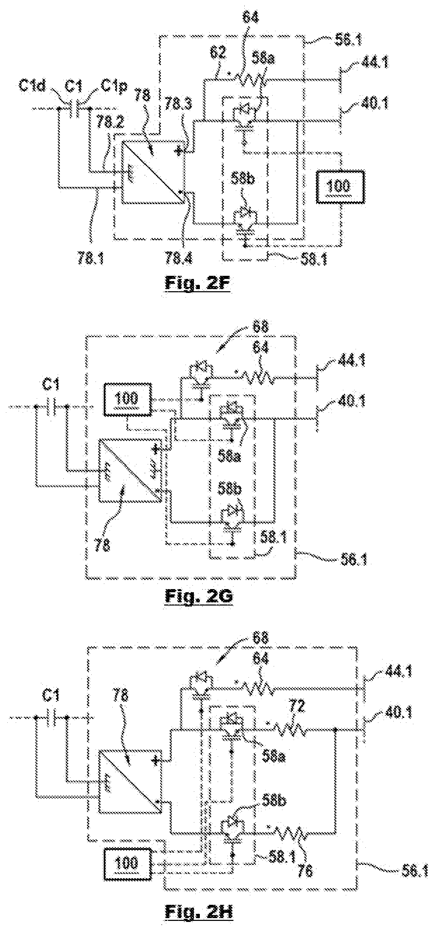

La deuxième famille de pilotes **56.1** peut par exemple prendre l'une ou l'autre des formes illustrées respectivement aux Figures 2F, 2G, et 2H, y compris leurs variantes éventuelles.

Dans ces modes de réalisation, le système de commande **46.1** du premier interrupteur à tube à plasma **44.1** comporte un convertisseur de puissance continue-continue **78** ayant un côté source qui est relié électriquement à l'armature distale **C1d** du premier condensateur de commutation **C1**, et ayant un côté commande qui alimente la grille de commande **40.1** du premier interrupteur à tube à plasma **34.1** par l'intermédiaire du premier commutateur pilotable **58.1**.

La présence de ce convertisseur électrique permet de dissocier la problématique de dimensionnement du condensateur (notamment en termes de tenue en tension et de capacité) pour qu'il puisse assurer d'une part son rôle dans la génération du courant oscillant permettant l'extinction de l'arc dans l'appareil de coupure principal, et d'autre son rôle d'alimentation électrique pour la grille de commande **40.1** du premier interrupteur à tube à plasma **34.1**.

Comme on peut le voir sur les figures, l'armature distale **C1d** du premier condensateur de commutation **C1** est reliée à une borne d'entrée **78.1** du convertisseur de puissance continue-continue **78**, tandis que l'armature proximale **C1p** est reliée à un neutre électrique **78.2** du convertisseur de puissance continue - continue **78**.

Le côté commande du convertisseur de puissance **78** comporte une borne positive **78.3** et une borne négative **78.4**. Dans les exemples illustrés sur les Figures 2F, 2G, et 2H, le premier commutateur pilotable **58.1** comporte un premier interrupteur pilotable d'activation **58a** interposé entre la borne positive **78.3** du convertisseur de puissance **78** et la grille de commande **40.1** du premier interrupteur à tube à plasma **34.1**, et un deuxième interrupteur pilotable de désactivation **58b** interposé entre la borne négative **78.4** du convertisseur de puissance **78** et la grille de commande **40.1** du premier interrupteur à tube à plasma **34.1**. Le premier interrupteur pilotable d'activation **58a** et le deuxième interrupteur pilotable de désactivation **58b** sont des interrupteurs qui sont normalement ouverts, et le système de commande **46.1** est configuré pour qu'un seul à la fois des deux interrupteurs pilotables **58a**, **58b** soient commandés vers son état fermé. Lorsque le premier interrupteur pilotable d'activation **58a** est commandé vers son état fermé, il autorise le passage d'un courant de commande en direction de la grille de commande **40.1** qui provoque la fermeture du premier interrupteur à tube à plasma **34.1**. Lorsque le deuxième interrupteur pilotable de désactivation **58b** est commandé vers son état fermé, il autorise le passage d'un courant de commande depuis la grille de commande **40.1**, ce qui provoque l'ouverture du premier interrupteur à tube à plasma **34.1**. Comme illustré dans l'exemple de réalisation de la Figure 2G, on peut prévoir par ailleurs une résistance **72** électriquement en série avec le premier interrupteur pilotable d'activation **58a** interposé entre la borne positive **78.3** du convertisseur de puissance **78** et la grille de commande **40.1**, et/ou une résistance **76** électriquement en série avec le deuxième interrupteur pilotable de désactivation **58b** interposé entre la borne négative **78.4** du convertisseur de puissance **78** et la grille de commande **40.1** du premier interrupteur à tube à plasma **34.1**, pour limiter le courant respectivement lors de la fermeture et/ou de l'ouverture du premier interrupteur à tube à plasma **34.1**.

Dans cette deuxième famille de pilotes **56.1**, pour les cas où le premier interrupteur à tube à plasma **34.1** comporte une électrode de veille **44.1**, alors le pilote **56.1** peut comporter une ramification d'alimentation **62** reliant l'électrode de veille **44.1** du premier interrupteur à tube à plasma **34** à la borne positive **78.3** du côté commande du convertisseur de puissance continue-continue **78**. De préférence, une résistance **64** est insérée dans la ramification **62** pour limiter le courant dans cette ramification d'alimentation **62**. Comme illustré sur les Figures 2G et 2H, un interrupteur d'alimentation **68** peut être inséré dans la ramification d'alimentation **62**, l'interrupteur d'alimentation **68** ayant le même rôle et le même fonctionnement que celui décrit en référence au mode de réalisation de la Figure 2C.

Dans les deux cas, le dispositif selon l'invention permet de réaliser ces fonctions avec un premier condensateur de commutation **C1** ayant une tenue en tension qui peut être très largement inférieure à la tension nominale de service du module de coupure **18**, donc très largement inférieure à la tension nominale de service du réseau dans lequel le conducteur électrique **11** est inséré. En effet, l'invention exploite la haute tenue en tension de l'interrupteur à tube à plasma, généralement environ 10 fois supérieure à celle d'un interrupteur électronique, et la forte capacité de coupure de courant de l'interrupteur à tube à plasma. De ce fait, le module de coupure **18** comporte, électriquement en parallèle du premier condensateur de commutation **C1**, un premier parasurtenseur de commutation **80.1**. Ce premier parasurtenseur de commutation **80.1** est donc raccordé par ses deux bornes respectivement à deux points du premier tronçon de la branche de commutation, de part et d'autre du premier condensateur de commutation **C1**.

Le premier parasurtenseur de commutation **80.1** permet de limiter la tension aux bornes du premier condensateur de commutation **C1**. Typiquement, dans un dispositif de coupure **10** destinée à un réseau à très haute tension, c'est-à-dire pour une tension nominale de service continue dans le réseau supérieure à 75 kV, la tension aux bornes du premier condensateur de commutation **C1** peut ainsi être limitée, par le premier parasurtenseur de commutation **80.1**, à une tension inférieure ou égale à 10 kV. Généralement, il sera possible de prévoir que le premier parasurtenseur de commutation **80.1** présente une tension de protection inférieure à 10% de la tension nominale de service du module de coupure. Toutefois, on note que le premier parasurtenseur de commutation **80.1** va nécessairement limiter la tension de pré-charge que l'on pourra appliquer au premier condensateur de commutation **C1**. Or cette tension de pré-charge sert à commander l'interrupteur à tube à plasma **34.1**. Aussi, on veillera, sauf à prévoir un dispositif d'élévation de tension dans le système de commande **46.1** du premier interrupteur à tube à plasma **34.1**, à ce que la tension de protection du premier parasurtenseur de commutation **80.1** soit supérieure à la tension nécessaire à la commande de l'interrupteur à tube à plasma **34.1**, cette dernière étant généralement supérieure à 1 kV, par exemple comprise entre 1 kV et 5kV. Par exemple, un parasurtenseur de commutation **80.1** peut être choisi de telle sorte que sa tension de protection soit comprise entre 1,5 et 2.5 fois, par exemple 2 fois la tension de pré-charge du condensateur de commutation **C1** qu'il doit protéger.

Grâce à cela, l'invention permet d'utiliser un condensateur de commutation **C1** qui n'a pas à supporter une tension supérieure à celle définie par la tension de protection du parasurtenseur de commutation **80.1**. On peut donc limiter le coût et l'encombrement du premier condensateur de commutation **C1**.

Comment on le verra plus loin, la génération d'une oscillation de courant de commutation dans la branche de commutation **32**, lorsque le premier interrupteur à tube à plasma **34.1** est dans son état fermé, résulte d'une modulation du courant dans la boucle formée par la branche principale **24** et la branche de commutation **32** du module de coupure **18**. Cette boucle, qui comporte notamment le premier condensateur de commutation **C1**, présente nécessairement une certaine inductance de sorte que la boucle forme un circuit LC qui génère une ondulation de courant dans les phases transitoires, ondulation de courant qui sera mise à profit de la manière expliquée plus bas pour interrompre un arc électrique susceptible d'être formé dans l'appareil principal de coupure **26** dans son état ouvert.

L'inductance de commutation peut résulter de l'inductance propre des composants qui composent la boucle, notamment l'inductance propre de la branche principale **24** et/ou l'inductance propre de la branche de commutation **32**. Toutefois, si l'inductance propre des composants n'est pas suffisante, la boucle formée par la branche principale **24** et la branche de commutation **32** peut comporter une bobine **82**. Cette bobine est de préférence agencée dans la branche de commutation **32**. Dans un tel cas, la bobine **82** pourrait être agencée dans le second tronçon **32.2** de la branche de commutation **32**. Dans l'exemple de la Figure 1, la bobine **82** est agencée dans le premier tronçon **32.1** de la branche de commutation, mais pas entre le premier condensateur de commutation **C1** et le premier interrupteur à tube à plasma **34.1**, au contraire entre le premier condensateur de commutation **C1** et le premier point **20** du circuit principal **16**. L'inductance de commutation sera dimensionnée pour limiter la vitesse de variation de courant au travers de l'appareil principal de coupure **26**, variation qui apparaît lorsque la branche de commutation **32** devient passante pour le courant par la fermeture de l'interrupteur à tube à plasma **34.1**. La vitesse de variation de courant de la branche de commutation **32** doit être limitée par les composants dans cette branche à une valeur correspondant à la capacité que possède l'appareil principal de coupure **26** d'interrompre l'arc électrique. On dimensionne ainsi le dispositif de manière qu'il assure l'interruption de l'arc dans l'appareil principal de coupure **26** lorsque le courant traversant cet appareil principal de coupure électrique **26** passe par une valeur nulle, même si l'amplitude du courant circulant dans le circuit principal **16** est faible ou très faible en comparaison de l'intensité nominale de service pour laquelle le circuit principal est dimensionné. Par exemple, dans le cas où l'appareil principal de coupure **26** a la capacité d'interrompre l'arc électrique d'un courant avec une forte vitesse de variation d'intensité (di/dt), typiquement avec un gradient intensité supérieur ou égal à 100 A par microsecondes, alors, on dimensionnera l'inductance de commutation et la tension de pré-charge du condensateur de commutation du module de coupure pour limiter la vitesse de variation de courant au travers de l'appareil principal de coupure, **26**, variation qui apparaît lorsque la branche de commutation **32** devient passante pour le courant par la fermeture de l'interrupteur à tube à plasma **34.1**, à une valeur inférieure à 100 A par microsecondes.

On notera que l'utilisation de condensateurs de commutation sous une tension relativement faible, permise par l'invention qui met en oeuvre un interrupteur à tube à plasma, est favorable. En effet, sous une tension relativement faible on utilisera des condensateurs de commutation dont la valeur de capacité sera relativement élevée. Ainsi, la fréquence propre de décharge de la ou des condensateurs de commutation dans la boucle de commutation, boucle qui est donc de type essentiellement LC, sera comparativement faible. Par exemple le module de coupure **18** pourra être dimensionné de telle sorte que la fréquence propre de décharge du ou des condensateurs de commutation dans la boucle de commutation soit inférieure à 3 kHz, de préférence inférieure à 1 kHz, plus préférentiellement inférieure à 300 Hz.

Pour cela, on s'assurera que le dispositif de coupure comporte une inductance de commutation, pour la boucle constituée par la branche de principale et par la branche de commutation, dont la valeur n'est pas inférieure au rapport entre d'une part la différence entre la tension de pré-charge du condensateur de commutation C1 et la chute de tension aux bornes de l'interrupteur à tube à plasma et d'autre par la valeur maximum de la vitesse de variation d'intensité (di/dt_max) pour laquelle l'appareil principal de coupure **26** est capable d'interrompre l'arc électrique généré par un courant de faible intensité.

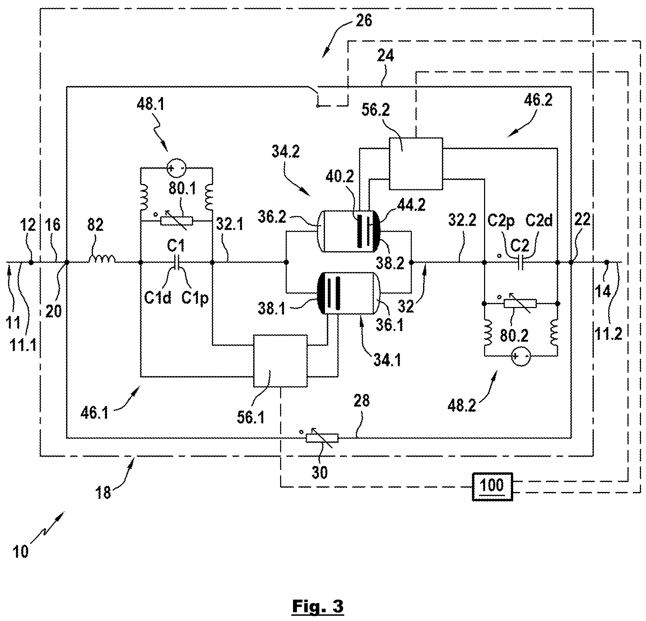

Le principe général de fonctionnement du module de coupure **18** tel qu'illustré à la Figure 1 se comprendra du principe de fonctionnement qui sera décrit en relation avec le module de coupure **18** illustré à la Figure 3. Comme indiqué plus haut, le module de coupure **18** tel qu'illustré à la Figure 1 permet une interruption de courant dans le conducteur électrique **11** pour le cas où le courant de défaut circule du second point **22** vers le premier point **20** au travers du module de coupure **18**, par exemple en cas de défaut électrique à la terre dans la première section **11.1** du conducteur électrique **11**. Plus précisément, c'est dans cette configuration que le système d'assistance à la coupure, qui est formé par la branche de commutation **32** et par la branche d'absorption d'énergie **28**, sera disponible pour aider à l'extinction d'un arc électrique susceptible d'apparaître dans l'appareil principal de coupure **26** lors de son ouverture. Le module de coupure telle qu'illustré à la Figure 1 est donc unidirectionnel vis-à-vis du sens de circulation du courant de défaut, donc par exemple unidirectionnel par rapport à la localisation du défaut.

Pour cela, l'invention propose aussi un dispositif de coupure comportant au moins un module de coupure **18** bidirectionnel tel qu'illustré à la Figure 3, lequel est configuré pour assurer une interruption de courant dans le conducteur électrique **11** quel que soit le sens de circulation du courant de défaut au travers du module de coupure **18**, donc par exemple aussi bien dans le cas où un défaut électrique à la terre se situe dans la première section **11.1** du conducteur électrique **11** que dans le cas où un défaut électrique à la terre se situe dans la seconde section **11.2** du conducteur électrique **11**.

Pour cela, le module de coupure **18** bidirectionnel de la Figure 3 comporte tous les éléments décrits ci-dessus en relation avec la Figure 1, dans la même disposition, et avec les mêmes possibilités de variantes. En plus de ces éléments, le module de coupure **18** comprend, dans sa branche de commutation **32**, un second interrupteur à tube à plasma **34.2** qui est interposé dans la branche de commutation **32** entre le premier point **20** et le second point **22** du circuit principal pour ce module de coupure **18**, électriquement en parallèle du premier interrupteur à tube à plasma **34.1**, mais en sens inverse du premier interrupteur à tube à plasma **34.1** dans la branche de commutation **32**.

Le second interrupteur à tube à plasma **34.2** comporte lui aussi une anode **36.2**, une cathode **38.2** et une grille de commande **40.2**. Du fait de l'agencement en sens inverse du premier interrupteur à tube à plasma, la cathode **38.2** du second interrupteur à tube à plasma **34.2** est reliée au second tronçon **32.2** de la branche de commutation **32** et l'anode **36.2** du second interrupteur à tube à plasma **34.2** est reliée au premier tronçon **32.1** de la branche de commutation **32**.

On remarque que le second interrupteur à tube à plasma **34.2** est agencé dans la branche de commutation **32** de manière à être interposé entre le premier condensateur de commutation C1 et le second point **22** du module de coupure **18**. De la sorte, l'armature proximale **C1p** du premier condensateur de commutation C1 est reliée à l'anode **36.2** du second interrupteur à tube à plasma **34.2**.

De manière symétrique par rapport au premier interrupteur à tube à plasma **34.1**, le module de coupure **18** comporte un système de commande **46.2** du second interrupteur à tube à plasma **34.2** qui comporte, en série avec le second interrupteur à tube à plasma **34.2** dans la branche de commutation **32**, entre le premier point **20** et le second point **22**, un second condensateur de commutation C2 qui est agencé dans le second tronçon **32.2** de la branche de commutation **32**, tronçon qui est donc celui qui est relié à la cathode **38.2** du second interrupteur à tube à plasma **34.2**. Le second condensateur de commutation **C2** comporte lui aussi une armature proximale **C2p** qui est reliée à la cathode **34.2** du second interrupteur à tube à plasma **34.2**, et une armature distale **C2d** qui est du côté opposé à la cathode **38.2** du second interrupteur à tube à plasma **34.2** par rapport à l'armature proximale **C2p**. L'armature distale **C2d** du second condensateur de commutation **C2** est donc reliée au second point **22** du module de coupure **18**.

On remarque que le second condensateur de commutation **C2** est agencé dans la branche de commutation **32** de manière à être interposé entre le premier interrupteur à tube à plasma **34.1** et le second point **22** du module de coupure **18**. De la sorte, l'armature proximale **C2p** du second condensateur de commutation **C2** est reliée à l'anode **36.1** du premier interrupteur à tube à plasma **34.1**.

Dans l'exemple, le module de coupure **18** est un module bidirectionnel dans lequel les deux interrupteurs à tube à plasma sont, mis à part leur montage en sens inverse, identiques du point de vue de leurs caractéristiques électriques. De même, dans l'exemple, le second condensateur de commutation **C2** présente les mêmes caractéristiques électriques (tenue en tension, capacité,...) que le premier condensateur de commutation **C1**. Ce dimensionnement identique permet de gérer des courants de défaut de même amplitude et de même dynamique quel que soit leur sens de circulation au travers du dispositif de coupure **10**. Cependant, dans certains cas, pour lesquels on peut anticiper des risques de défaut électrique de nature différente d'un côté et de l'autre du dispositif de coupure **10**, un dimensionnement différent pourra être envisagé pour les deux interrupteurs à tube à plasma et /ou pour le second condensateur de commutation **C2** par rapport au premier condensateur de commutation **C1**.

Le dispositif de coupure **10** comporte un circuit de pré-charge **48.2** du second condensateur de commutation **C2**. Le circuit de pré-charge **48.2** du second condensateur de commutation **C2** peut être distinct et indépendant du circuit de pré-charge **48.1** du premier condensateur de commutation **C1**, comme illustré sur la Figure 3. Le circuit de pré-charge **48.2** du second condensateur de commutation **C2** peut être une copie à l'identique du circuit de pré-charge **48.1** du second condensateur de commutation **C1**.

De manière symétrique à ce qui a été vu plus haut pour le premier interrupteur à tube à plasma **34.1**, le système de commande **46.2** du second interrupteur à tube à plasma **34.2** comporte au moins second commutateur pilotable qui, dans un état fermé, alimente la grille de commande **40.2** du second interrupteur à tube à plasma **34.2** par une tension dérivée d'une tension électrique entre les armatures **C2p**, **C2f** du second condensateur de commutation **C2**. Le système de commande **46.2** du second interrupteur à tube à plasma **34.2** peut prendre les mêmes formes que celles décrites plus haut pour le système de commande **46.1** du premier interrupteur à tube à plasma **34.1**.

Ainsi, le système de commande **46.2** du second interrupteur à tube à plasma **34.2** peut être conçu de la même manière que décrit plus haut en référence aux Figures 2A à 2E, de telle sorte le second commutateur pilotable, dans son état fermé, relie la grille de commande **40.2** du second interrupteur à tube à plasma **34.2** à l'armature distale **C2d** du second condensateur de commutation **C2**. De même, le système de commande **46.2** du second interrupteur à tube à plasma **34.2** peut lui aussi comporter une ramification d'alimentation qui alimente une électrode de veille **44.2** du second interrupteur à tube à plasma **34.2**, si ce dernier en comprend une. Alternativement, le système de commande **46.2** du second interrupteur à tube à plasma **34.2** peut comporter, de manière analogue à ce qui a été décrit pour les Figures 2F, 2G et 2H, un convertisseur de puissance continue-continue ayant un côté source qui est relié l'armature distale **C2d** du second condensateur de commutation **C2**, et ayant un côté commande qui alimente la grille de commande **40.2** du second interrupteur à tube à plasma **34.2** par l'intermédiaire du second commutateur pilotable. Dans ce cas, si le second interrupteur à tube à plasma **34.2** comporte une électrode de veille **44.2**, le système de commande **46.2** peut comporter une ramification d'alimentation qui relie l'électrode de veille **44.2** du second interrupteur à tube à plasma à une borne positive du côté commande du second convertisseur de puissance continue-continue.

Tout comme pour le premier condensateur de commutation **C1**, le dispositif de coupure **10** est conçu pour pouvoir utiliser un second condensateur de commutation **C2** ayant une tenue en tension qui peut être très largement inférieure à la tension nominale de service du réseau dans lequel le conducteur électrique **11** est inséré. De ce fait, le module de coupure **18** comporte, électriquement en parallèle du second condensateur de commutation **C2**, un second parasurtenseur de commutation **80.2**. Ce second parasurtenseur de commutation **80.2** est donc raccordé par ses deux bornes respectivement à deux points du second tronçon **32.2** de la branche commutation **32**, de part et d'autre du second condensateur de commutation **C2**. Le second parasurtenseur de commutation **80.2** permet de limiter la tension aux bornes du second condensateur de commutation **C2** pendant que le courant de défaut circule dans la branche de commutation. Typiquement, dans un dispositif de coupure **10** destinée à un réseau à très haute tension, c'est-à-dire pour une tension nominale de service continue dans le réseau supérieure à 75 kV, la tension aux bornes du second condensateur de commutation **C2** peut ainsi être limitée, par le second parasurtenseur de commutation **80.2**, à une tension inférieure ou égale à 10 kV. Typiquement, le second parasurtenseur de commutation **80.2**, pourra être dimensionné avec une tension de protection telle que la somme des tensions de protection du premier parasurtenseur **80.1** de commutation et du second parasurtenseur **80.2** de commutation soit inférieure à la tension nominale de service du module de coupure **18**.

On comprend donc que le module de coupure bidirectionnel illustré à la Figure 3 permet d'autoriser le passage de courant dans la branche de commutation **32** selon les deux sens de circulation. Pour autoriser le passage de courant dans la branche de commutation **32** selon un sens de circulation, à savoir du second point **22** vers le premier point, on pourra commander le premier interrupteur à tube à plasma **34.1** dans son état fermé. Pour autoriser le passage de courant dans la branche de commutation **32** selon l'autre sens de circulation, à savoir du premier point **20** vers le second point **22**, on pourra commander le second interrupteur à tube à plasma **34.2** dans son état fermé.

On décrira maintenant deux scénarios de coupure de courant susceptibles d'être réalisés par le dispositif de coupure **10** de la Figure 3.

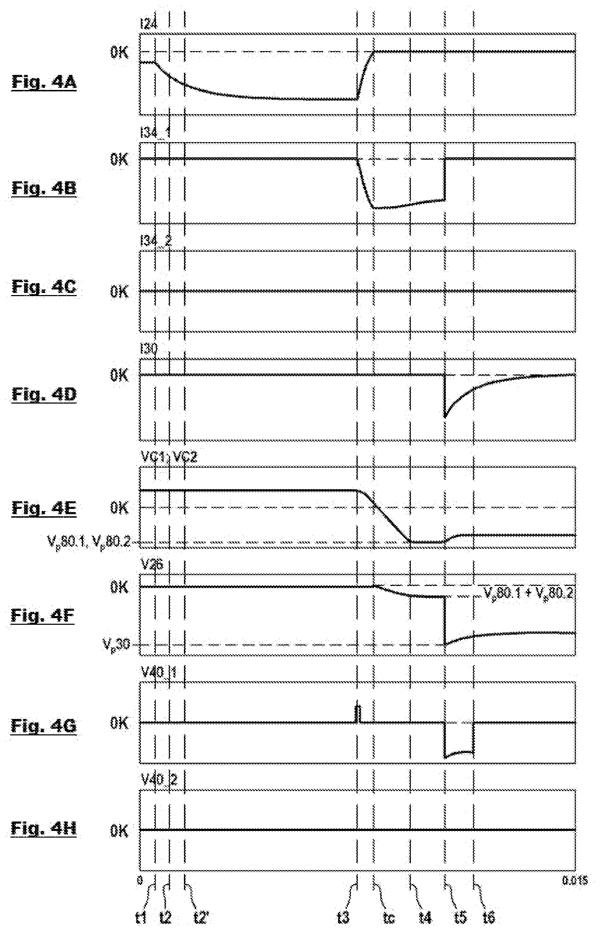

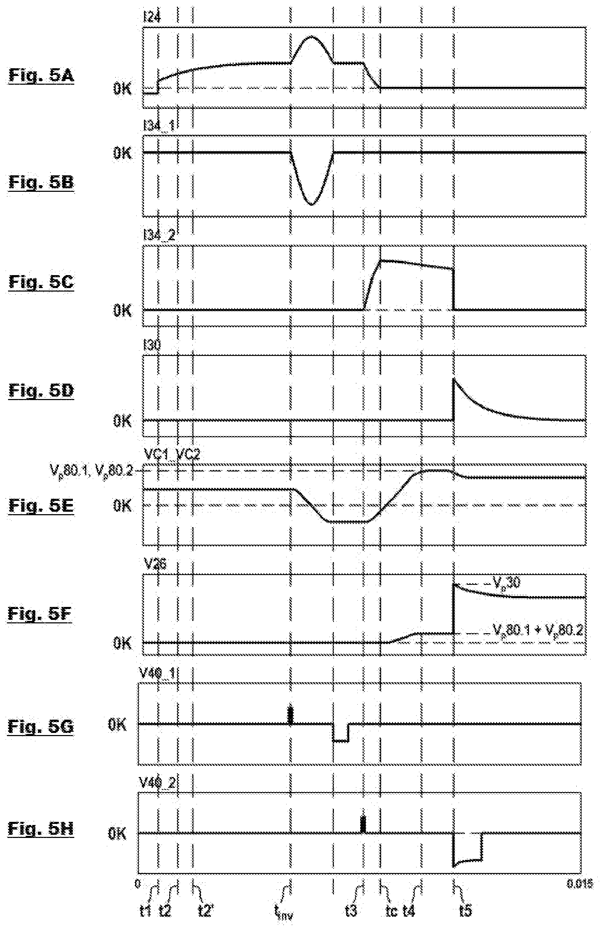

Un premier scénario de coupure de courant est décrit en relation avec les Figures 4A à 4H qui représentent des chronogrammes de variation de différentes grandeurs électriques dans le dispositif de coupure **10** de la Figure 3. Un deuxième scénario de coupure de courant est décrit en relation avec les chronogrammes des Figures 5A à 5H. Pour l'établissement de ces chronogrammes, on a pris de manière arbitraire la convention qu'un courant électrique circulant du premier point **20** au second point **22** au travers du dispositif de coupure **10** (donc de gauche à droite sur la Figure 3) est un courant électrique de sens positif.

Dans les deux scénarios qui vont être décrit, on a pris le cas d'un courant initial, appelé courant opérationnel, circulant dans le sens négatif avec la convention utilisée, c'est-à-dire dans le sens allant du second point **22** au premier point **20**. Cependant, le sens du courant initial, c'est-à-dire du courant opérationnel, n'est pas important et dans les deux scénarios, il pourrait donc être en sens inverse.

Dans les deux scénarios, jusqu'à un instant **t1**, on considère que le dispositif de coupure **10** est dans sa configuration de conduction, correspondant à un fonctionnement normal du réseau, avec donc un courant électrique opérationnel circulant dans le conducteur électrique **11**. Dans l'exemple, la valeur absolue de l'intensité du courant opérationnel est de l'ordre de 1500 A (ici dans le sens négatif avec la convention arbitraire choisie). Dans cette configuration de conduction, l'appareil principal de coupure **26** est dans son état fermé, si bien que on peut considérer que l'intégralité du courant électrique opérationnel circule dans la branche principale **24** du dispositif de coupure **10** (Figure 4A), et que la tension **V26** aux bornes de l'appareil principal de coupure **26** est nulle (Figure 4F). Dans cette configuration de conduction, les deux interrupteurs à tube à plasma **34.1** et **34.2** sont dans leur état ouvert, si bien que les courants électriques **I34.1** et **I34.2** au travers de chacun d'eux sont nuls (Figures 4B et 4C), et donc que le courant dans la branche de commutation **32** est nul. On remarque que la tension de commande **V40.1** (Figure 4G) appliquée à la grille de commande **40.1** du premier interrupteur à tube à plasma **34.1** et la tension de commande **V40.2** (Figure 4H) appliquée à la grille de commande **40.2** du second interrupteur à tube à plasma **34.2** sont toutes les deux égales à une tension de défaut qui, dans cet exemple est une tension nulle. On notera toutefois que certains interrupteurs à tube à plasma fonctionnent en appliquant par défaut une tension de défaut à la grille de commande qui est négative par rapport à la cathode. De tels interrupteurs à tube à plasma fonctionnent avec une tension de défaut négative à la grille de commande seront avantageusement mis en oeuvre avec un pilote **56.1** comportant un convertisseur de puissance continue-continue, par exemple comme dans les exemples des Figures 2F à 2H.

Pour les deux scénarios, on décrit le cas dans lequel le premier condensateur de commutation **C1** est pré-chargé avec une tension **VC1** (Figure 4E) aux bornes du premier condensateur de commutation **C1** qui est ici une tension positive au sens que l'armature distale **C1d** est chargée positivement par rapport à l'armature proximale **C1p**. En d'autres termes, la tension $VC1 = VC1d - VC1p$ est positive, avec **VC1d** le potentiel électrique de l'armature distale **C1d**, et **VC1p** le potentiel électrique de l'armature proximale **C1p**. La valeur absolue de la tension de pré-charge **VC1i** aux bornes du premier condensateur de commutation **C1** peut avantageusement être inférieure à 10 kV, ici par exemple égale à 2 kV. Cependant, on comprendra qu'il est possible de pré-charger le premier condensateur de commutation **C1** avec une polarité inverse, c'est-à-dire avec une armature distale **C1d** chargée négativement par rapport à l'armature proximale **C1p**.

Dans le cas d'un dispositif de coupure bidirectionnel comme illustré à la Figure 3, le second condensateur de commutation **C2** sera toujours pré-chargé, avec la même polarité de tension que celle du premier condensateur de commutation **C1**. Cela signifie que si pour le premier condensateur de commutation **C1** l'armature distale **C1d** est chargée positivement par rapport à l'armature proximale **C1p**, alors pour le second condensateur de commutation **C2** l'armature distale **C2d** est chargée négativement par rapport à l'armature proximale **C2p** de sorte que la tension **VC2** aux bornes du second condensateur de commutation **C2**, tension qui se définit par $VC2 = VC2p - VC2d$, avec **VC2d** le potentiel électrique de l'armature distale **C2d**, et **VC2p** le potentiel électrique de l'armature proximale **C2p**, est une tension positive.

A un instant **t1**, on suppose qu'un défaut électrique survient dans la première section **11.1** du conducteur électrique **11,** par exemple défaut du type « défaut à la terre ». Dans ce premier scénario qui est ici décrit, la localisation et le type de défaut électrique font qu'il génère un courant de défaut qui circule dans le sens négatif au travers du dispositif de coupure **10**, c'est-à-dire du second point **22** vers le premier point **20**. On constate immédiatement que la valeur absolue de l'intensité au travers du dispositif augmente du fait de l'apparition de ce défaut électrique, accroissant donc la valeur absolue de l'intensité **I24** (Figure 4A) du courant électrique dans la branche principale **24**, cette valeur absolue suivant une courbe augmentation qui dépend des caractéristiques électriques du réseau, du conducteur électrique **11**, et des caractéristiques mêmes du défaut électrique, notamment sa localisation dans la première section **11.1** du conducteur électrique **11** et la résistance de défaut.

À un instant **t2**, on transmet un ordre d'ouverture de l'appareil principal de coupure **26**. L'instant **t2** est séparé de l'instant **t1** d'apparition du défaut d'un délai de détection de défaut qui est de préférence compris entre 100 µs et 5 ms, par exemple d'environ 1 ms. De préférence, dans le cas où le premier interrupteur à tube à plasma **34.1** comporte par ailleurs une électrode de veille **44.1**, on choisira d'alimenter l'électrode de veille à partir de cet instant **t2**. Cela permet d'établir un plasma entre l'électrode de veille **44.1** et la cathode **34.1** afin que le premier interrupteur à tube à plasma **34.1** soit prêt à permettre la conduction de courant, ceci avant même la réception de l'ordre de fermeture électrique du premier interrupteur à tube à plasma **34.1**. Suivant la réception de l'ordre d'ouverture, l'appareil principal d'ouverture entame un mouvement d'ouverture. De manière connue, cette ouverture se fait par écartement de deux électrodes de l'appareil principal de coupure **26**, ouverture qui se fait progressivement sous la forme d'un écartement progressif des deux électrodes. On dénomme **t2'** l'instant de première séparation des électrodes de l'appareil principal de coupure **26**. Typiquement, cet instant **t2'** est séparé de l'instant **t2** de transmission de l'ordre d'ouverture d'une durée de l'ordre de 0,3 à 30 ms. Au vu de la tension et de l'intensité aux bornes de l'appareil principal de coupure **26**, un arc électrique se forme entre les électrodes de l'appareil principal de coupure **26** à l'instant **t2'** de leur séparation, cet arc électrique génère un grand quantité énergie et fait augmenter rapidement la température et provoque une ionisation du milieu diélectrique compris entre les deux électrodes de la chambre d'appareil principal de coupure **26**, si bien que, en dépit de la séparation mécanique des électrodes, la coupure électrique n'est pas réalisée. En conséquence, la tension **V26** aux bornes de l'appareil principal de coupure **26** reste nulle (en négligeant la tension d'arc) et l'intensité **I24** du courant électrique dans la branche principale continue de croître en valeur absolue selon la même courbe caractéristique (cf. Figure 4A et 4F).

À un instant **t3**, on commence la procédure d'assistance à la coupure du courant électrique dans l'appareil principal de coupure **26** qui est alors dans un état au moins partiellement ouvert. De préférence, l'instant **t3** correspond à un état d'ouverture partielle de l'appareil principal de coupure **26**, donc à une distance minimale d'écartement entre les électrodes de l'appareil principal de coupure **26**, pour lequel il aura été préalablement prédéterminé que, une fois l'arc électrique éteint entre les électrodes, l'appareil principal de coupure **26** est capable de tenir la tension de protection générée par le ou les parasurtenseurs de commutation **80.1**, **80.2** présents dans la branche de commutation **32**. L'intervalle de temps entre l'instant **t2'** et l'instant **t3**, que l'on peut appeler intervalle de temps d'ouverture mécanique partielle, dépend donc notamment de la vitesse d'écartement des électrodes de l'appareil principal de coupure **26** et du niveau de la tension de protection des parasurtenseurs de commutation **80.1**, **80.2**. Pendant l'intervalle de temps d'ouverture mécanique partielle, la coupure électrique n'est pas réalisée. L'intervalle de temps d'ouverture mécanique partielle dépend donc de la tension de protection des parasurtenseurs de commutation **80.1**, **80.2**, Or on a vu que l'invention permet de mettre en oeuvre des parasurtenseurs de commutation **80.1**, **80.2** dont la tension de protection est très faible par rapport à la tension nominale de service du module de coupure. De la sorte, pour des tensions de protection des parasurtenseurs de commutation **80.1**, **80.2** inférieures à 10 kV, on peut aboutir à une durée de l'intervalle de temps d'ouverture mécanique partielle qui peut être inférieure à 50 microsecondes, voir même inférieure à 20 microsecondes. Ceci est très avantageux puisque cela va permettre de diminuer le temps total pendant lequel un arc est susceptible de subsister dans l'appareil principal de coupure **26**. En effet, le plus tôt on peut commencer la procédure d'assistance à la coupure du courant électrique dans l'appareil principal de coupure **26**, le plus tôt on pourra aboutir à l'instant « **tc** » d'extinction de l'arc électrique entre les électrodes de l'appareil principal de coupure **26** tel que décrit ci-dessous. Ainsi, à chaque ouverture, on va donc générer très peu d'énergie d'arc électrique entre les électrodes de l'appareil principal de coupure **26**, et donc produire très peu d'érosion des électrodes.

Dans ce premier scénario, la procédure d'assistance à la coupure est déclenchée par la fermeture électrique du premier interrupteur à tube à plasma **34.1**. En effet, le principe est de commander la fermeture de l'interrupteur à tube à plasma qui est capable de laisser circuler le courant de défaut dans la branche de commutation **32**. On voit en effet sur la Figure 4G que le système de commande **46.1** envoie, à l'instant **t3**, sur la grille de contrôle **40.1** du premier interrupteur à tube à plasma **34.1**, une impulsion de fermeture électrique sous la forme d'une impulsion de tension. On se rappelle que, dans ce scénario, le premier condensateur de commutation **C1** a été préalablement chargé de telle sorte que son armature distale **C1d** est chargée positivement par rapport à son armature proximale **C1p** donc chargée positivement par rapport à la cathode **38.1** du premier interrupteur à tube à plasma **34.1**. De ce fait, l'impulsion de fermeture électrique peut être constituée par la mise en conduction électrique directe de l'armature distale **C1d** avec la grille de contrôle **40.1** du premier interrupteur à tube à plasma **34.1** (cas des pilotes des Figures 2A à 2E), ou par fermeture d'un interrupteur **58a** la reliant à la borne positive du convertisseur de puissance continue-continue (cas des pilotes des Figures 2F à 2G). On comprendra à la lecture ci-dessous du descriptif concernant le deuxième scénario ce qu'il faudrait faire pour le cas où le condensateur de commutation que l'on souhaite activer aurait été polarisé en sens inverse au moment de la pré-charge. On remarque alors que, avec l'application de l'impulsion de fermeture électrique, le courant électrique **I24** dans la branche principale s'annule (Figure 4A) pour basculer intégralement dans la branche de commutation **32**, au travers du premier interrupteur à tube à plasma **34.1** rendu passant pour le courant électrique (Figure 4B). La durée de commutation du courant de la branche principale vers la branche de commutation **32** est égale au maximum à un quart de la période d'oscillation du courant dans la boucle formée par la branche principale **24** et par la branche de commutation **32**, sachant que cette oscillation peut être assimilée à la décharge des condensateurs dans un circuit LC ou RLC.

En effet, la fermeture du premier interrupteur à tube à plasma **34.1** permet la fermeture électrique de la boucle formée par la branche principale **24** et par la branche de commutation **32**, laquelle forme un circuit LC oscillant. On se rappelle que, au moment de la fermeture, les deux condensateurs de commutation **C1** et **C2** sont pré-chargés. Ils sont agencés en série dans la branche de commutation et présentent une capacité équivalente Ceq, avec

$$Ceq = C1^*C2 / (C1 + C2)$$

Dans ce premier scénario, le sens du courant de défaut dans le circuit principal et le sens de polarisation des deux condensateurs de commutation sont tels que l'oscillation de courant générée dans la boucle LC formée par la branche principale **24** et par la branche de commutation **32** provoque un passage par zéro du courant dans la branche principale **24** dans le premier quart de période de l'oscillation générée par la boucle LC, Dans l'exemple illustré, on considère donc que dès l'instant « **tc** » de premier passage par zéro de du courant dans la branche principale **24**, l'arc électrique entre les électrodes de l'appareil principal de coupure **26** est éteint. A l'instant « **tc** », l'appareil principal de coupure **26** atteint donc son état électriquement ouvert.

La durée de l'intervalle de temps entre les instants « **t3** » et « **tc** » sera typiquement de l'ordre de quelques dizaines de microsecondes à quelques centaines de microsecondes, par exemple 50 à 500 microsecondes.

On note donc que la durée de l'arc électrique au travers de l'appareil de coupure électrique **26**, est une durée qui s'étend au maximum depuis l'instant **t2'** de première séparation des électrodes de l'appareil principal de coupure **26** jusqu'à l'instant « **tc** », et qui est donc particulièrement courte. Cela permet de réduire l'érosion des électrodes de l'appareil principal de coupure électrique **26**. Cela permet aussi de diminuer la chaleur générée par l'arc. Ceci est donc favorable à la fiabilité de l'appareil principal de coupure électrique **26** et permet d'en réduire le coût.

La vitesse de variation d'intensité (di/dt) lors d'un passage par zéro du courant dans la branche principale **24**, permise par la branche de commutation comprenant l'interrupteur à tube à plasma **34.1**, sera exploitée au mieux avec un appareil principal de coupure **26** ayant la capacité d'interrompre l'arc électrique d'un courant avec une forte vitesse de variation d'intensité (di/dt), typiquement avec un gradient intensité supérieur ou égal à 100 A par microsecondes. Ainsi, un appareil principal de coupure **26** de type « ampoule à vide » sera particulièrement adapté.

On note bien que, dans ce scénario de coupure, c'est le premier interrupteur à tube à plasma **34.1** qui est commandé vers son état fermé, car c'est celui des deux interrupteurs à tube à plasma qui permet la circulation du courant selon le sens correspondant au sens du courant de défaut généré au travers du dispositif de coupure **10** par le défaut électrique.

De manière connue, on constate (Figure 4B) que le premier interrupteur à plasma **34.1** reste dans son état fermé permettant le passage du courant électrique y compris au-delà de la disparition de l'impulsion électrique de fermeture sur sa grille de commande **40.1** (Figure 4G).

La somme des tensions qui apparaissent aux bornes du premier condensateur de commutation **C1** et du second condensateur de commutation **C2** s'applique aux bornes de l'appareil principal de coupure **26** après l'instant « **tc** » de la coupure de l'arc électrique. La vitesse de variation de la tension **V26** aux bornes de l'appareil principal de coupure **26** (dv/dt) est à partir de ce moment limitée par le rapport entre l'intensité du courant dans le circuit principal **16** et la capacité totale de la branche de commutation, que l'on peut ici assimiler à Ceq = **C1**\***C2** / (**C1** + **C2**). Par ailleurs, la crête de tension est limitée par la somme de tension de protection des deux parasurtenseurs de commutation **80.1**, **80.2**. Ces deux limites électriques, portant respectivement sur la vitesse de variation de la tension **V26** et sur la crête de tension, définissent le dimensionnement des composants pour que l'appareil de coupure **26** maintienne l'absence de courant et empêche le rallumage d'un arc électrique entre les électrodes de l'appareil principal de coupure **26**, ce qui permet la dé-ionisation du milieu entre les électrodes de l'appareil principal de coupure **26** et permet donc de continuer le mouvement d'éloignement relatif entre les deux électrodes.

La circulation du courant électrique dans la branche de commutation **32** provoque un renversement de la polarisation du premier condensateur de commutation **C1**, puisqu'on voit à la Figure 4E que la tension **VC1** aux bornes du premier condensateur de commutation **C1** passe de la valeur positive initiale à une valeur négative atteinte très rapidement à l'instant **t4**. L'instant **t4** correspond à l'atteinte, aux bornes du premier condensateur de commutation **C1**, d'une tension égale à la tension de protection déterminée par le premier parasurtenseur de commutation **80.1** qui est raccordé par ses deux bornes respectivement de part et d'autre du premier condensateur de commutation **C1**. En devenant passant, le premier parasurtenseur de commutation **80.1** limite la tension aux bornes du premier condensateur de commutation **C1** à une valeur prédéterminée égale à la tension de protection **Vp80.1** du premier parasurtenseur de commutation **80.1**. La tension de protection **Vp80.1** est de préférence inférieure à 10 kV, dans l'exemple de l'ordre de 3 kV en valeur absolue, ceci afin de limiter le coût et le volume du premier condensateur de commutation **C1**. Le même basculement de tension et l'installation de la même tension de protection peuvent être observés aux bornes du second condensateur de commutation.

À l'instant suivant **t5**, il est considéré que l'appareil principal de coupure électrique **26** est apte à tenir la tension de protection instaurée par le parasurtenseur général **30**. Par exemple, cela implique qu'une distance suffisante a été atteinte entre les électrodes l'appareil principal de coupure électrique **26** et que le milieu diélectrique entre les électrodes l'appareil principal de coupure électrique **26** est dé-ionisé. Ce dernier a donc retrouvé son pouvoir d'isolation électrique dans son état ouvert. De la sorte, il est possible d'interrompre la circulation de courant dans la branche de commutation **32** en provoquant l'ouverture électrique du premier interrupteur à tube à plasma **34.1**. Ceci est provoqué par le système de commande **46.1** qui envoie, à l'instant **t5**, une impulsion électrique d'ouverture sur la grille de commande **40.1** du premier interrupteur à tube à plasma **34.1** (Figure 4G). On remarque que, à cet instant **t5** auquel on commande l'ouverture électrique du premier interrupteur à tube à plasma **34.1**, la polarité du premier condensateur de commutation C1 est telle que l'armature distale **C1d** est à un potentiel électrique négatif (Figure 4E) par rapport l'armature proximale **C1p**, et donc aussi par rapport à la cathode **38.1**, de sorte que l'impulsion électrique d'ouverture appliquée à la grille de commande **40.1** peut être obtenue simplement en mettant en conduction électrique l'armature distale la **C1d** du premier condensateur de commutation C1 avec la grille de commande **40.1** du premier interrupteur à tube à plasma **40.1** (cas des pilotes des Figures 2A à 2E), ou par fermeture d'un interrupteur de désactivation **58b** la reliant à la borne négative du convertisseur de puissance continue-continue (cas des pilotes des Figures 2F à 2G). Dans l'exemple, l'impulsion électrique d'ouverture est appliquée pendant une durée d'impulsion électrique d'ouverture jusqu'à un instant **t6** pour garantir la coupure électrique au sein du premier interrupteur à tube à plasma **34.1.** Cette durée d'impulsion électrique d'ouverture est par exemple au minimum égale à 1 microseconde. On note que l'impulsion électrique d'ouverture peut être maintenue jusqu'à ce qu'une impulsion électrique de fermeture soit nécessaire. On note que, suite à une telle impulsion électrique d'ouverture, la durée pendant laquelle un courant circule effectivement au travers de la grille de commande **40.1** sera généralement comprise entre 1 microseconde et 100 microsecondes, et l'intensité de ce courant effectivement au travers de la grille de commande **40.1** est du même ordre de grandeur que celle du courant à couper entre l'anode **36.1** et la cathode **38.1** au travers du premier interrupteur à tube à plasma **34.1**.

Le temps nécessaire à l'ouverture électrique d'un interrupteur à tube à plasma est généralement de l'ordre de quelques centaines de nanosecondes à quelques dizaines de microsecondes. On note que l'interruption de courant dans l'interrupteur à tube à plasma ne va pas générer de réamorçage de l'arc dans l'appareil principal de coupure **26**, puisque l'appareil principal de coupure **26** est déjà ouvert électriquement et le milieu diélectrique entre les contacts est dé-ionisé. De plus, le courant qui circulait au travers de l'interrupteur à tube à plasma peut commuter vers la branche de d'absorption **28** qui va absorber toutes les énergies inductives de la ligne de transmission, sans création d'amorçage d'arc dans l'interrupteur à tube à plasma car celui-ci est dimensionné pour tenir une tension de rétablissement supérieure à la tension de protection du parasurtenseur général **30** interposé dans la branche d'absorption 28.

Lorsqu'un interrupteur à tube à plasma est commandé dans un état de fermeture électrique, autorisant la circulation d'un courant électrique entre son anode et sa cathode, il fonctionne-dans un régime dans lequel le ratio de la densité de courant par rapport à la surface d'électrode de cathode est beaucoup plus petit que dans le régime de la génération d'arc. Par exemple, ce ratio est inférieur à $100 A/cm^2$. Dans un interrupteur à tube à plasma de type « à champs perpendiculaires », dans lequel un champ magnétique est appliqué parallèlement à la surface de conduction d'une des électrodes de cathode de l'interrupteur à tube à plasma, le champ magnétique empêche cette génération d'arc tant que l'on reste dans son domaine nominal d'opération.

On rappelle notamment que l'interrupteur à tube à plasma possède une capacité d'interruption de courant que n'ont pas tous les commutateurs électriques.

À partir de l'instant pour lequel le premier interrupteur à tube à plasma **34.1** a atteint son état ouvert, plus aucun courant ne circule dans la branche de commutation **32** (Figure 4B). De ce fait, une tension importante apparaît aux bornes du parasurtenseur général **30** qui se trouve électriquement en parallèle de la branche principale **24** et de la branche de commutation **32** dans lesquelles plus aucun courant ne peut circuler. Cette tension est imposée par le courant de défaut. Cependant, le parasurtenseur général **30** entre en action en limitant la tension aux bornes du module de coupure **18** à la valeur de sa tension de protection **Vp30** (Figure 4F). À partir de là, on observe dans le conducteur électrique **11** une chute de la valeur absolue de l'intensité du courant qui correspond à la dissipation de l'énergie inductive et capacitive stockée dans le conducteur, énergie qui se dissipe dans le parasurtenseur général **30**. Rapidement, on atteint la configuration ouverte du dispositif de coupure **10** dans laquelle on peut voir qu'aucun courant ne circule ni dans la branche principale **24,** ni dans la branche de commutation **32** ni dans la branche d'absorption **28** (en négligeant un éventuel courant de fuite au travers du parsurtenseur général **30,** ce courant de fuite étant généralement inférieure à 1 A), isolant ainsi entre elles la première section **11.1** et la deuxième section **11.2** du conducteur électrique **11**. Il s'établit alors de part et d'autre du dispositif de coupure la tension du réseau, qui est, dans l'exemple, de l'ordre de 80 kV.

On remarque que, dans ce premier scénario de coupure, le second interrupteur à tube à plasma **34.2** n'intervient pas et reste pendant tout le scénario dans sa configuration ouverte. Le système de commande **46.2** du second interrupteur à tube à plasma **34.2** reste bien entendu inactif, sauf bien entendu pour ce qui est du second condensateur de commutation C2 qui est interposé dans le second tronçon **32.2** de la branche de commutation et dont la capacité intervient dans les lois d'évolution du courant dans la branche de commutation **32**. Ceci est dû au fait que l'on a pris l'hypothèse d'un défaut qui génère un courant de défaut circulant dans le sens inverse de celui que le second interrupteur à tube à plasma **34.2** permet de faire circuler dans son état fermé.

Comme on remarque que le second interrupteur à tube à plasma **34.2** de la Figure 3 n'intervient pas dans ce premier scénario, on comprend que le premier mode de réalisation de l'invention illustrée à la Figure 1, comprenant un unique interrupteur à tube à plasma **34.1** susceptible uniquement de laisser passer un courant de sens négatif (avec la convention arbitraire choisie ci-dessus) fonctionnerait exactement de la manière décrite ci-dessus. Cependant, dans ce cas, il sera important de veiller à ce que le premier condensateur de commutation **C1** soit bien pré-chargé avec la polarité décrite ci-dessus, c'est-à-dire avec une armature distale **C1d** chargée positivement par rapport à l'armature proximale **C1p.**

Dans le deuxième scénario de coupure de courant illustré par les Figures 5A à 5F, on prend l'hypothèse que le module de coupure **18** présente un dimensionnement symétrique pour ce qui est d'une part du dimensionnement des deux interrupteurs à tube à plasma **34.1, 34.2,** et pour ce qui est du premier condensateur de commutation **C1** et du second condensateur de commutation **C2.**

Dans ce deuxième scénario, on décrira le cas où le premier condensateur de commutation **C1** et le second condensateur de commutation **C2** sont tous les deux pré-chargés avec une tension **VC1i, VC2i** qui est une tension positive au sens que :

-   pour le premier condensateur de commutation **C1,** l'armature distale **C1d** est chargée positivement par rapport à l'armature proximale **C1p** ;
-   pour le second condensateur de commutation **C2,** l'armature distale **C2d** est chargée négativement par rapport à l'armature proximale **C2p.**

Comme on le comprendra, on aurait tout aussi bien pu prévoir que le premier condensateur de commutation **C1** et le second condensateur de commutation **C2** sont tous les deux pré-chargés avec une tension **VC1i, VC2i** qui soit une tension négative au sens que :

-   pour le premier condensateur de commutation **C1,** l'armature distale **C1d** est chargée négativement par rapport à l'armature proximale **C1p** ;
-   pour le second condensateur de commutation **C2,** l'armature distale **C2d** est chargée positivement par rapport à l'armature proximale **C2p.**

Dans tous les cas, la valeur absolue de la tension de pré-charge **VC1i** aux bornes du premier condensateur de commutation **C1** et de la tension de pré-charge **VC2i** aux bornes du premier condensateur de commutation **C2** peut avantageusement être inférieure à 10 kV, ici par exemple égale à 2 kV.

A un instant **t1,** on suppose qu'un défaut électrique survient. Dans ce second scénario, contrairement au premier, on suppose que ce défaut électrique survient dans la deuxième section **11.2** du conducteur électrique **11,** mais reste par exemple un défaut du type « défaut à la terre ». Dans ce deuxième scénario qui est ici décrit, la localisation et le type de défaut électrique font qu'il génère un courant de défaut qui circule dans le sens positif au travers du dispositif de coupure **10,** c'est-à-dire du premier point **20** au second point **22.** Comme déjà observé dans le premier scénario, la valeur absolue de l'intensité au travers du dispositif augmente du fait de l'apparition de ce défaut électrique, accroissant donc la valeur absolue de l'intensité I**24 (Figure** 5A) du courant électrique dans la branche principale **24,** cette valeur absolue suivant une courbe d'augmentation qui dépend des caractéristiques électriques du réseau, du conducteur électrique **11,** et des caractéristiques mêmes du défaut électrique, notamment sa localisation dans la deuxième section **11.2** du conducteur électrique **11** et la résistance de défaut.

Comme pour le premier scénario, on transmet un ordre d'ouverture de l'appareil principal de coupure **26,** à un instant **t2,** selon les mêmes modalités que ce qui a été décrit plus haut pour le premier scénario. Suivant la réception de l'ordre d'ouverture, l'appareil principal d'ouverture entame un mouvement d'ouverture. On dénomme **t2'** l'instant de première séparation des électrodes de l'appareil principal de coupure **26.** Ici aussi, l'écartement progressif des deux électrodes de l'appareil principal de coupure **26,** permet la génération d'un arc électrique si bien que, en dépit de la séparation mécanique des électrodes, la coupure électrique n'est pas réalisée. En conséquence, la tension V**26** aux bornes de l'appareil principal de coupure **26** reste nulle (en négligeant la tension d'arc - cf. Figure 5F) et l'intensité I**24** du courant électrique dans la branche principale continue de croître en valeur absolue (et en valeur algébrique avec la convention arbitraire ci-dessus - Figure 5A).

Comme pour le premier scénario, la procédure d'assistance à la coupure du courant électrique dans l'appareil principal de coupure **26** est déclenchée à un instant **t3,** lorsque ce dernier est dans un état au moins partiellement ouvert correspondant à un écartement de ses électrodes pour lequel il aura préalablement été prédéterminé que, une fois l'arc électrique éteint entre les électrodes, l'appareil principal de coupure **26** est capable de tenir la tension de protection générée par le ou les parasurtenseurs de commutation **80.1, 80.2** présents dans la branche de commutation **32.** Pendant l'intervalle de temps d'ouverture mécanique partielle, la coupure électrique n'est pas réalisée (Figure 5A).

On a déjà indiqué que dans ce deuxième scénario, la procédure d'assistance à la coupure met en oeuvre la fermeture électrique du second interrupteur à tube à plasma **34.2,** seul capable de laisser circuler le courant de défaut dans la branche de commutation **32.** Pour cela, il est donc nécessaire que le système de commande **46.2** envoie, à l'instant **t3,** sur la grille de contrôle **40.2** du second interrupteur à tube à plasma **34.2** une impulsion de fermeture électrique correspondant à un potentiel positif par rapport à la cathode **38.2** du second interrupteur à tube à plasma **34.2.** De plus, pour permettre la commutation du courant de défaut de la branche principale à la branche de commutation, avec ici donc une circulation du courant de défaut dans le sens positif, il faudrait que la tension aux bornes respectivement du premier condensateur de commutation **C1** et du deuxième condensateur de commutation **C2** soit une tension négative.

Or, ce deuxième scénario est défini dans le cadre dans lequel le premier condensateur de commutation **C1** a été préalablement chargé de telle sorte que son armature distale **C1d** est chargée positivement par rapport à son armature proximale **C1p** donc chargée positivement par rapport à la cathode **38.1** du premier interrupteur à tube à plasma **34.1,** et que le second condensateur de commutation **C2** a été préalablement chargé de telle sorte que son armature distale **C2d** est chargée négativement par rapport à son armature proximale **C2p** donc chargée négativement par rapport à la cathode **38.2** du deuxième interrupteur à tube à plasma **34.2.** En effet, ce choix est tout à fait plausible puisque on part du principe que le dispositif de coupure **10** de la Figure 3 est prévu pour interrompre un courant quel que soit le sens du courant de défaut au travers du dispositif de coupure **10.** Or, le choix de la polarité de la pré-charge du premier condensateur de commutation **C1** et du second condensateur de commutation **C2** est fait avant d'avoir connaissance du sens du courant de défaut qui est susceptible d'apparaître.

De ce fait, dans cette configuration, le sens de circulation du courant de défaut fait que celui-ci ne pourrait pas être basculé vers la branche de commutation avec ce sens de polarisation des condensateurs de commutation **C1** et **C2.** De plus, pour les modes de réalisation des Figures 2A à 2F du système de commande, l'impulsion de fermeture électrique ne peut pas être constituée par la mise en communication électrique directe de l'armature distale **C2d** avec la grille de contrôle **40.2** du second interrupteur à tube à plasma **34.2.** Aussi, dans ce second scénario, à un instant « **tinv** » qui est ultérieur à l'instant **t2** de la transmission d'un ordre d'ouverture de l'appareil de coupure électrique **26,** mais qui précède l'instant **t3** pour lequel une impulsion électrique de fermeture doit être envoyée à la grille de commande **40.2** du second interrupteur à tube à plasma **34.2,** ce second scénario prévoit une étape intermédiaire d'inversion de la polarité du premier condensateur de commutation **C1** et du deuxième condensateur de commutation **C2.** L'étape intermédiaire d'inversion de la polarité des condensateurs de commutation est réalisée de manière particulièrement simple en déclenchant, à l'instant « **tinv** », la fermeture du premier interrupteur à tube à plasma **34.1.** Comme on peut le voir sur les Figures 5A et 5B, cette fermeture du premier interrupteur à tube à plasma **34.1** provoque une surintensité dans la branche principale **24** dans la mesure où les deux condensateurs de commutation **C1** et **C2** se déchargent par création d'un courant de décharge de sens négatif dans la branche de commutation **32** (ce courant de sens négatif étant imposé par la polarité de la charge des deux condensateurs de commutation **C1** et **C2),** courant de décharge qui vient s'ajouter dans le sens positif dans la branche principale **24,** en surplus du courant de défaut. Toutefois, ce courant de décharge est très bref. En effet, cette décharge se fait dans une boucle formée par la branche de commutation **32** et la branche principale **24** en série l'une avec l'autre, boucle qui est une boucle de type LC qui est dimensionnée pour que le courant de décharge soit oscillatoire. La décharge des condensateurs de commutation **C1** et **C2** de la branche de commutation **32** ne peut former qu'une demi-période oscillatoire, et non pas une période oscillatoire complète puisque, à ce stade, seul le premier interrupteur à tube à plasma **34.1** a été rendu passant et qu'il ne permet le passage du courant dans la branche de commutation **32** que dans un seul sens. Ainsi, après une demi-période d'oscillation, on voit que la tension aux bornes des deux condensateurs de commutation **C1** et **C2** a été inversée. De ce fait, on se trouve alors dans une situation dans laquelle, pour le second condensateur de commutation **C2,** l'armature distale **C2d** est chargée positivement par rapport à l'armature proximale **C2p,** et donc par rapport à la cathode **38.2** du second interrupteur à tube à plasma **34.2.** Dans cette configuration, qui résulte l'inversion des polarités des deux condensateurs de commutation **C1** et **C2,** il devient possible d'une part de créer à l'instant **t3** une impulsion électrique de fermeture du second interrupteur à tube à plasma **34.2,** sous la forme d'une impulsion de tension, par la mise en communication électrique directe de l'armature distale **C2d** avec la grille de contrôle **40.2** du second interrupteur à tube à plasma **34.2,** ceci y compris avec les modes de réalisation des Figures 2A à 2E du système de commande **46.2.** Mais, d'autre part, l'autre fonction de cette inversion des polarités des deux condensateurs de commutation **C1** et **C2** est de permettre la circulation dans la branche de commutation **32** d'un courant de commutation dans le sens positif au travers du second interrupteur à tube à plasma **34.2,** ce qui entraîne dans le même temps l'annulation du courant **I24** dans la branche principale **24** à partir de l'instant « **tc** » (cf. Figure 5A) qui correspond à la coupure de l'arc électrique au travers de l'appareil principal de coupure électrique **26,** au moment où l'intensité du courant le traversant passe par zéro.

La circulation du courant électrique dans la branche de commutation **32** provoque un nouveau renversement de la polarisation du premier condensateur de commutation **C1** et du second condensateur de commutation **C2,** puisqu'on voit à la Figure 5E que les tensions **VC1** aux bornes du premier condensateur de commutation **C1** et **VC2** aux bornes du second condensateur de commutation **C2** passent de la valeur négative résultant de la première inversion à une valeur positive. L'instant **t4** correspond à l'atteinte, aux bornes du premier condensateur de commutation **C1,** d'une tension égale à la tension de protection **Vp80.1** déterminée par le premier parasurtenseur de commutation **80.1** qui est raccordé par ses deux bornes respectivement de part et d'autre du premier condensateur de commutation **C1,** et, aux bornes du second condensateur de commutation **C2,** d'une tension **Vp80.2** égale à la tension de protection déterminée par le second parasurtenseur de commutation **80.2** qui est raccordée par ses deux bornes respectivement de part et d'autre du second condensateur de commutation **C2.** En devenant passant, le premier parasurtenseur de commutation **80.1** limite la tension aux bornes du premier condensateur de commutation **C1** à une valeur prédéterminée égale à sa tension de protection **Vp80.1.** De même, en devenant passant, le second parasurtenseur de commutation **80.2** limite la tension aux bornes du second condensateur de commutation **C2** à une valeur prédéterminée égale à sa tension de protection **Vp80.2** (cf. Figure 5E). La tension de protection **Vp80.2** est de préférence, comme la tension de protection **Vp80.1,** inférieure à 10 kV, dans l'exemple de l'ordre de 3 kV en valeur absolue, ceci afin de limiter le coût et le volume du second condensateur de commutation **C2.** La somme des tensions de protection **Vp80.1, Vp80.2,** respectivement du premier condensateur de commutation **C1** du second condensateur de commutation **C2,** est de préférence inférieure à 20 kV, dans l'exemple de l'ordre de 6 kV en valeur absolue.

À l'instant suivant **t5,** il est considéré que le milieu diélectrique compris entre les électrodes de l'appareil principal de coupure **26** a été dé-ionisé et que l'écart entre les électrodes est suffisamment large à tenir la tension de protection instaurée par le parasurtenseur général **30** dans le branche d'absorbation, et qu'il est possible d'interrompre la circulation de courant dans la branche de commutation **32** en provoquant l'ouverture électrique du second interrupteur à tube à plasma **34.2** (le premier interrupteur à tube à plasma **34.1** à lui déjà été rouvert auparavant après l'étape d'inversion de polarité des condensateurs de commutation). Ceci est provoqué par le système de commande **46.2** qui envoie, à l'instant **t5,** une impulsion électrique d'ouverture sur la grille de commande **40.2** du second interrupteur à tube à plasma **34.2.** On remarque que, à cet instant **t5** auquel on commande l'ouverture électrique du second interrupteur à tube à plasma **34.2,** la polarité du second condensateur de commutation **C2** est telle que l'armature distale **C2d** est à un potentiel électrique négatif par rapport l'armature proximale **C2p,** et donc aussi par rapport à la cathode **38.2,** de sorte que l'impulsion électrique d'ouverture appliquée à la grille de commande **40.2** peut être obtenue simplement en mettant en conduction électrique l'armature distale la **C2d** du second condensateur de commutation **C2** avec la grille de commande **40.2** du second interrupteur à tube à plasma **40.2.** (cas des pilotes des Figure 2A à 2E), ou par fermeture d'un interrupteur de désactivation **58b** la reliant à la borne négative du convertisseur de puissance continue-continue (cas des pilotes des Figure 2F à 2G).

À partir de l'instant **t5** pour lequel le second interrupteur à tube à plasma **34.2** a atteint son état ouvert, plus aucun courant ne circule dans la branche de commutation **32** (Figure 5B, Figure 5C). De ce fait, comme dans le premier scénario, une tension importante apparaît aux bornes du parasurtenseur général **30** (Figure 5F) qui se trouve électriquement en parallèle de la branche principale **24** et de la branche de commutation **32** dans lesquelles plus aucun courant ne peut circuler. Cette tension est imposée par la tension du réseau et l'énergie inductive stockée dans le réseau. Cependant, le parasurtenseur général **30** entre en action en limitant la tension aux bornes du module de coupure **18** à la valeur de sa tension de protection **Vp30.** À partir de là, on observe dans le conducteur électrique **11** une chute de la valeur absolue de l'intensité du courant qui correspond à la dissipation de l'énergie inductive et capacitive stockée dans le conducteur **11** et dans le dispositif **10,** énergie qui se dissipe dans le parasurtenseur général **30** (Figure 5D). Rapidement, on atteint la configuration ouverte du dispositif de coupure **10** dans laquelle on peut voir que aucun courant ne circule ni dans la branche principale **24,** ni dans la branche de commutation **32** ni dans la branche d'absorption **28** (en négligeant le courant de fuite du parsurtenseur général **30,** ce courant de fuite étant généralement inférieure à 1 A), isolant ainsi entre elles la première section **11.1** et la deuxième section **11.2** du conducteur électrique **11.** Il s'établit alors de part et d'autre du dispositif de coupure la tension du réseau, qui est, dans l'exemple, de l'ordre de 80 kV.

Dans les deux scénarios décrits en détail ci-dessus, on a pris l'hypothèse d'un premier condensateur de commutation **C1** dont l'armature distale **C1d** est chargée de manière positive par rapport à l'armature proximale **C1p,** et d'un second condensateur de commutation **C2** dont l'armature distale **C2d** est au contraire chargé négativement par rapport à l'armature proximale **C2p.** On a évoqué aussi l'hypothèse inverse d'un premier condensateur de commutation **C1** dont l'armature distale **C1d** serait chargée de manière négative par rapport à l'armature proximale **C1p,** et d'un second condensateur de commutation **C2** dont l'armature distale **C2d** serait au contraire chargé positivement par rapport à l'armature proximale **C2p.** Dans cette hypothèse inverse, l'apparition d'un courant de défaut de sens positif avec la convention ci-dessus impliquerait la mise en oeuvre d'un procédé analogue à celui décrit pour le premier scénario, ne mettant en oeuvre qu'un seul interrupteur à tube à plasma, mais dans ce cas le second interrupteur à tube à plasma **34.2,** sans inversion de polarité des condensateurs de commutation **C1** et **C2.** Dans cette hypothèse inverse, l'apparition d'un courant de défaut de sens négatif avec la convention ci-dessus impliquerait la mise en oeuvre d'un procédé analogue à celui décrit dans le deuxième scénario, mettant en oeuvre tout d'abord le second interrupteur à tube à plasma **34.2** pour créer une inversion de polarités des condensateurs de commutation **C1** et **C2,** puis mettant en oeuvre le premier interrupteur à tube à plasma **34.1** pour autoriser le passage du courant de commutation dans le sens négatif dans la branche de commutation afin d'assister la coupure électrique dans l'appareil principal de coupure **26.**

Dans l'exemple illustré sur les Figures 1 et 3, le module de coupure **18** comporte unique branche de commutation **32** dans laquelle est interposé un unique interrupteur à tube à plasma **34.1** pour le mode de réalisation de la Figure 1, et deux interrupteurs à tube à plasma **34.1, 34.2** montés en parallèle et sens inverse l'un de l'autre pour le mode de réalisation de la Figure 3. Dans les deux cas, on a vu qu'un parmi le ou les interrupteur(s) à tube à plasma est, dans une configuration d'assistance à la coupure de l'appareil principal de coupure **26,** rendu passant pour laisser passer le courant de défaut dans la branche de commutation **32,** puis ramené dans un état ouvert. Ainsi, dans les deux cas, un interrupteur à tube à plasma est traversé par un courant important et doit ensuite interrompre un courant résiduel défaut qui lui aussi peut être important. On note toutefois que la durée minimum pendant laquelle un interrupteur à tube à plasma doit être rendu passant, que l'on peut aussi appeler la durée minimum de conduction de l'interrupteur à tube à plasma, doit couvrir la durée de la commutation du courant de défaut depuis la branche principale **26** contenant l'appareil principal de coupure **26** vers la branche de commutation **32,** et doit aussi couvrir la durée de dé-ionisation de milieu diélectrique compris entre les électrodes de l'appareil principal de coupure **26.** Or on a vu que la durée de la commutation du courant de défaut est inférieure à un quart de période du courant oscillatoire généré par la branche de commutation **32.** Cette durée de commutation du courant de défaut est donc inférieure à la valeur donnée par la formule :

$$\frac{\pi}{2} * \sqrt{C_{equ} * L_{equ}}$$

avec L_equ et C_equ respectivement l'inductance équivalente et la capacité équivalente de la boucle fermée formée par la branche principale **24** et par la boucle de commutation **32.** La durée de dé-ionisation du milieu diélectrique entre les électrodes de l'appareil principal de coupure **26** sera généralement comprise dans une gamme allant de quelques microsecondes à quelques dizaines de microsecondes, notamment selon la technologie de l'appareil principal de coupure **26,** notamment en fonction de la pression et/ou du type de fluide isolant utilisé. Ainsi, au total, la durée minimum de conduction de l'interrupteur à tube à plasma, c'est-à-dire la durée pendant laquelle le courant de défaut le traverse, peut-être de très courte durée puisque cette durée pourra généralement être inférieure à 1 ms, de préférence est inférieure à 500 microsecondes, et dans certaines configurations cette durée minimum pourra être inférieure à **100** microsecondes.

Pour le cas où un seul interrupteur à tube à plasma ne serait pas capable de supporter l'intensité maximale de courant de défaut pour laquelle on souhaite dimensionner le dispositif de coupure **10,** il est aisé de modifier le module de coupure **18** en rajoutant, en parallèle de la branche de commutation **32,** et donc en parallèle de la branche principale **24** et de la branche d'absorption **28,** au moins une branche de commutation auxiliaire **32'** comportant au moins un interrupteur à tube à plasma, la branche de commutation auxiliaire **32'** ayant de préférence la même configuration que la branche de commutation **32** décrite en référence respectivement à la Figure 1 et/ou à la Figure 3.

On a ainsi représenté à la Figure 6 un dispositif de coupure **10** ayant un module de coupure **18** comportant d'une part exactement les mêmes éléments que ceux décrits en relation avec le module de coupure **18** de la Figure 3, et, en plus, une branche auxiliaire de commutation **32',** électriquement en parallèle de la branche principale **24,** de la branche d'absorption **28** et de la branche de commutation **32** entre le premier point **20** et le second point **22.** Au moins un premier interrupteur auxiliaire à tube à plasma **34.1'** est interposé dans cette branche auxiliaire de commutation **32'** et comporte une anode **36.1',** une cathode **38.1',** et une grille de commande **40.1'.** Le premier interrupteur auxiliaire à tube à plasma **34.1'** est interposé dans la branche auxiliaire de commutation **32.1'** de manière à séparer la branche auxiliaire de commutation **32'** en un premier tronçon **32.1',** relié à la cathode **38.1'** du premier auxiliaire interrupteur à tube à plasma **34.1',** et un second tronçon **32.2',** relié à l'anode **36.1'** du premier interrupteur auxiliaire à tube à plasma **34.1'.**

Le premier interrupteur auxiliaire à tube à plasma **34.1'** est monté dans la branche auxiliaire de commutation **32'** dans le même sens que le premier interrupteur à tube à plasma **34.1** dans la branche de commutation **32.** Cela se traduit par exemple par le fait que l'anode **36.1'** du premier interrupteur auxiliaire à tube à plasma **34.1'** est reliée (ici indirectement chacune par l'intermédiaire d'un condensateur respectif **C1 ; C1')** au même point, parmi le premier point **20** et le second point **22,** que l'anode **36.1** du premier interrupteur à tube à plasma **34.1.**

De manière générale, on comprend que ce premier interrupteur auxiliaire à tube à plasma **34.1'** pourra être commandé de manière identique et synchrone avec le premier interrupteur à tube à plasma **34.1** pour que, dans la configuration d'assistance à la coupure, le courant circulant à travers le dispositif **10** soit réparti, au niveau du module **18** considéré, entre les deux interrupteurs à tube à plasma, chaque interrupteur à tube à plasma devant donc transmettre ou interrompre un courant inférieur au courant total traversant le dispositif de coupure **10.** Si la branche auxiliaire de commutation **32'** présente les mêmes caractéristiques électriques que la branche de commutation **32,** le courant dans chacune des branches de commutation **32, 32'** sera divisé par 2 par rapport au courant qui circulerait dans la branche de commutation si celle-ci était unique.

Bien entendu, on prévoira avantageusement que le module de coupure **18** comporte un système de commande **46.1'** du premier interrupteur auxiliaire à tube à plasma **34.1'** analogue à celui qui a été décrit pour le premier interrupteur à tube à plasma **34.1.** Ainsi, ce système de commande **46.1'** comportera avantageusement, en série avec le premier interrupteur auxiliaire à tube à plasma **34.1',** dans la branche auxiliaire de commutation **32',** entre le premier point **20** et le second point **22,** un premier condensateur auxiliaire de commutation **C1'** agencé dans le premier tronçon **32.1'** de la branche auxiliaire de commutation **32',** c'est-à-dire dans le tronçon qui est relié à la cathode **38.1'** du premier interrupteur auxiliaire à tube à plasma **34.1'.** Ce premier condensateur auxiliaire de commutation **C1'** comporte une armature proximale **C1p'** reliée à la cathode **38.1'** du premier interrupteur auxiliaire à tube à plasma **34.1'**, et une armature distale **C1d'** opposée à la cathode **38.1'** du premier interrupteur auxiliaire à tube à plasma **34.1'** par rapport à l'armature proximale **C1p'**.

De même, le dispositif de coupure **10** comporte un circuit de pré-charge **48.1'** du premier condensateur auxiliaire de commutation **C1'**. Ce circuit de pré-charge pourrait être un circuit de pré-charge indépendant de celui du premier condensateur de commutation **C1,** et donc prendre une forme analogue à celle décrite plus haut. Toutefois, dans l'exemple de la Figure 6, le circuit de pré-charge du premier condensateur de commutation et le circuit de pré-charge du premier condensateur auxiliaire de commutation comportent une source de tension commune **50.1** qui alimente en parallèle le premier condensateur de commutation **C1** et le premier condensateur auxiliaire de commutation **C1'**. Ainsi, la source de tension continue **50.1** commune comporte :

- d'une part une borne positive **52.1** qui est reliée, dans ce mode de réalisation

  • à l'armature distale **C1d** du premier condensateur de commutation **C1,** ici au travers d'une résistance **53.1,** et
  • à l'armature distale **C1d'** du premier condensateur auxiliaire de commutation **C1',** ici au travers d'une résistance **53.1'** ;

- et d'autre part une borne négative **54.1** qui est reliée, dans ce mode de réalisation,

  • à l'armature proximale **C1p** du premier condensateur de commutation **C1,** ici aussi au travers d'une résistance **55.1,** et
  • à l'armature proximale **C1p'** du premier condensateur auxiliaire de commutation **C1',** ici aussi au travers d'une résistance **55.1'**.

On a vu que, dans un dispositif bidirectionnel, on peut avoir une polarité inverse pour la source de tension continue **50.1** puisqu'on sait inverser la polarité de pré-charge des condensateurs de commutation. De préférence, les résistances **53.1, 55.1, 53.1', 55.1'** du circuit de pré-charge **48.1** sont de même valeur de résistance. Ces résistances permettent de limiter le courant dans le circuit de pré-charge et équilibrent les courants dans les différentes ramifications parallèles du circuit de pré-charge.

Bien entendu, dans la mesure où le module de coupure **18** illustré à la Figure 6 comporte une branche de commutation **32** ayant deux interrupteurs à tube à plasma électriquement en parallèle et en sens inverse, on prévoira de préférence que ce module de coupure **18** comporte, dans la branche auxiliaire de commutation **32',** deux interrupteurs auxiliaires à tube à plasma **34.1', 34.2'** interposés en parallèle et en sens inverse l'un de l'autre dans la branche auxiliaire de commutation **32'**. En d'autres termes, comme cela est illustré à la Figure 6, la branche auxiliaire de commutation **32'** présente de préférence exactement les mêmes éléments que la branche de commutation **32**.

Le mode de réalisation de la Figure 6 comporte une unique branche auxiliaire de commutation **32'**. Cependant, on comprend que, pour encore augmenter l'aptitude du module de coupure **18** à soutenir des courants d'intensité plus élevée, on pourra prévoir de munir le module de coupure d'une ou plusieurs autres branches auxiliaire de commutation, de même type que la branche auxiliaire de commutation **32'qui** vient d'être décrite, chaque autre branche auxiliaire de commutation étant agencée électriquement en parallèle de la branche principale **24,** de la branche d'absorption **28,** de la branche de commutation **32** et de la branche auxiliaire de commutation **32'** entre le premier point **20** et le second point **22**.

Dans les exemples illustrés et décrits ci-dessus, le dispositif de coupure **10** comporte un unique module de coupure **18**. On comprend donc que le module de coupure **18,** lorsqu'il est unique, doit être conçu pour tenir la tension nominale de service du réseau. Cela implique notamment des contraintes sur la tenue en tension du ou des interrupteurs à tube à plasma **34.1, 34.2**. On note d'ailleurs que la tenue en tension du ou des interrupteurs à tube à plasma **34.1, 34.2** pourra aisément être du même ordre de grandeur que celle de l'appareil principal de coupure **26** du module **18**. Cela est d'autant plus vrai si c'est l'appareil principal de coupure **26** est du type « ampoule à vide » puisque, dans ce cas, un interrupteur à tube à plasma et une « ampoule à vide » sont basés sur la même technologie des tubes à vide.

Cependant, pour obtenir des dispositifs de coupure **10** ayant des capacités d'ouverture et de tenue en tension encore supérieure, ou pour utiliser des composants (notamment des interrupteurs à tube à plasma) de coût et d'encombrement raisonnable, on peut choisir de réaliser un dispositif de coupure **10,** tel que celui illustré par exemple à la Figure 7, ayant plusieurs modules de coupure **18a, 18b, 18c,** ..., interposés électriquement en série dans le circuit principal 16 du dispositif de coupure **10,** entre le point primaire **12** et le point secondaire **14** de ce dispositif de coupure **10**. Ainsi, chaque module de coupure **18a, 18b, 18c,** ..., s'étend, dans le circuit principal **16,** entre son propre premier point **20a, 20b, 20c,** ..., et son propre second point **22a, 22b, 22c,...**. Chaque module de coupure **18a, 18b, 18c,** ..., peut présenter l'une ou l'autre des formes décrites ci-dessus, y compris les formes envisagées ci-dessus comprenant au moins une branche auxiliaire de commutation **32'** en parallèle d'une branche de commutation **32**. Les modules de coupure **18a, 18b, 18c,** ..., peuvent être identiques entre eux.

Dans l'ensemble des exemples ci-dessus, on a vu que l'alimentation et la commande du ou des interrupteurs à tube à plasma placés dans la ou les branche de commutation **32, 32'** est réalisée avec un système de commande **46.1, 46.1', 46.2, 46.2'** qui n'impose aucun composant électrique ou électronique dans la branche principale **24** du module de coupure **18.** De ce fait, en configuration de conduction, au cours de laquelle le courant électrique à travers le dispositif de coupure **10** transite dans cette branche principale **24,** il n'y a aucun composant appartenant au(x) système(s) de commande du ou des interrupteurs à tube à plasma qui risque de dissiper de l'énergie électrique en permanence lors du fonctionnement normal du réseau. Ainsi, aucun système de refroidissement ne s'avère nécessaire pour refroidir de tels composants.

Dans l'ensemble des exemples ci-dessus, seul l'appareil principal de coupure **26,** le ou les interrupteurs à tube à plasma, et le parasurtenseur général **30** doivent être dimensionnés pour tenir la haute tension continue nominale de service du module **18** considéré, laquelle peut typiquement être supérieure à 75 000 V. Au contraire, le premier condensateur de commutation **C1** et le second condensateur de commutation **C2,** de même que le premier parasurtenseur de commutation **80.1** et le second parasurtenseur de commutation **80.2** peuvent être dimensionnés, pour un module de coupure d'un appareil de coupure **10** dimensionné pour un tel réseau de tension nominale de service supérieure à 75 000 V, avec une tenue en tension qui peut être inférieure à 10 000 V, y compris dans un appareil de coupure **10** comprenant un unique module de coupure **18.** Ces composants, dimensionnés pour une tension qui peut ainsi être de l'ordre de 10 fois inférieure à la tension nominale de service du réseau, peuvent être d'un encombrement et d'un coût réduit.

Pour un module de coupure **18,** le dimensionnement d'une capacité minimum du ou des condensateurs de commutation peut être déterminé en première approximation en fonction de l'équation suivante :

$$V\_(c\_equ) = [\ I\_to * \sqrt{(L\_equ\ /\ C\_equ\ )}\ ] + V\_(on\_34)$$

avec

- V_(c_equ) : la tension de pré-charge aux bornes d'un condensateur équivalent à tous les condensateurs de commutation dans la/les branche(s) de commutation **(C1, C1', C2, C2',** etc.) du module de coupure **18,** laquelle sera de toutes façons limitée par la présence des parasurtenseurs de commutation associés ;
- I_to : l'intensité maximale du courant que le dispositif de coupure **10** doit être capable de couper ;
- L_equ : Inductance équivalente de la/les boucle(s) formée par la branche principale **24** et la ou les branche de commutation(s) **32 (82, 82',** etc.) du module de coupure **18** ;
- C_equ : Minimum de capacité équivalente de tous les condensateurs de commutation dans la/les branche(s) de commutation **(C1, C1', C2, C2',** etc.) du module de coupure **18** ;
- V_(on_34) : La chute de tension entre l'anode et cathode de l'interrupteur à tube à plasma **34** dans son état de conduction (cette tension est généralement comprise entre 50v et 1000v et dépend de certaines caractéristiques de l'interrupteur à tube à plasma, notamment la pression et le type de gaz dans l'enceinte, le matériau de la cathode, etc...).

Par ailleurs, on a vu que chaque module de coupure **18** sera dimensionné pour que la valeur d'inductance équivalente L_equ de la/les boucle(s) formée par la branche principale **24** et la ou les branche(s) de commutation **32** du module de coupure **18** soit supérieure à une valeur minimale L_min permettant à l'arc électrique de s'éteindre dans l'appareil principal de coupure **26** lors du basculement du courant vers la branche de commutation **32.** Ainsi, cette valeur d'inductance équivalente L_equ devra être supérieure à une valeur minimale donnée par :

$$L\_min = (V\_(c\_equ) - V\_(on\_34))\ /\ [(di/dt)]max$$

avec

- [(di/dt)]max la vitesse de variation de courant maximale pour laquelle l'appareil principal de coupure 26 est capable de couper l'arc électrique d'un courant lors d'un passage à zéro.

Les équations ci-dessus permettent donc de déterminer la capacité équivalente minimale C_equ à obtenir, de laquelle on pourra déterminer les capacités individuelles de chacun des condensateurs de commutation.

Typiquement, pour un dispositif bidirectionnel **10** tel qu'illustré à la Figure 3, comprenant donc dans cet exemple un seul module de coupure **18,** on aurait par exemple, avec les valeurs suivantes :

$$I\_to = 10kA$$

$$VC1 = VC2 = 2 \text{ kV } (V\_c\_equ = 4kV)$$

$$L\_equ = 20 \text{ microHenrys}$$

$$V\_on\_34 = 500V$$

$$(di/dt)max = 200A/us$$

la capacité équivalente de l'ensemble des condensateurs de commutation du dispositif **10** sera supérieure à 100 microfarads

avec ainsi par exemple **C1=C2=**400 microfarads (C_equ=200uF).

Par ailleurs, on a vu plus haut que la durée pendant laquelle un interrupteur à tube à plasma **34.1,** ..., est rendu passant est très courte puisque cette durée est inférieure à **1** ms. Or cette durée, est aussi approximativement la durée pendant laquelle un courant est susceptible de traverser le parasurtenseur de commutation **80.1,** ..., lequel doit alors dissiper l'énergie électrique correspondante. Comme la durée est courte, le volume et le coût d'un tel parasurtenseur de commutation n'ont pas besoin d'être surdimensionnés.

Sur les Figures 3 et 6, dans lesquelles une branche de commutation comporte deux interrupteurs à tube à plasma agencé électriquement en parallèle et en sens inverse l'un de l'autre, les deux interrupteurs à tube à plasma peuvent être réalisés sous la forme de composants interrupteurs à tube à plasma unidirectionnels distincts. Cependant, on peut envisager de réaliser ces deux interrupteurs à tube à plasma unidirectionnels sous une forme jumelée.

On note que, tels que décrit ci-dessus, le pilote **56.1,** ..., du système de commande **46.,1,** ..., du ou des interrupteurs à tube à plasma dans la ou les branches de commutation ne nécessite aucune alimentation électrique autonome, puisque son alimentation est assurée au travers du condensateur de commutation associé. On remarque d'ailleurs que, quels que soient les modes de réalisation du pilote **56.1,..** , tels qu'illustrés sur les Figures 2A à 2H, le système de commande **46.1** du ou des interrupteurs à tube à plasma est d'une faible complexité puisqu'il peut être réalisé avec un unique interrupteur pilotable qu'il est nécessaire de piloter pour assurer la commande de l'interrupteur à tube à plasma associé.

Le dispositif **10** selon peut comporter ou être associé à une ou plusieurs unité(s) électronique(s) de commande **100** pour commander/piloter notamment le ou les appareils principaux de coupure électrique **26** et le ou les pilotes **56.1,** ..., du système de commande **46.,1,** ..., du ou des interrupteurs à tube à plasma dans la ou les branches de commutation. Une unité électronique de commande comprend typiquement au moins un processeur et au moins une mémoire électronique, et peut comprendre ou être reliée à un ou plusieurs circuits électroniques de communication, par exemple de communication avec un ou plusieurs réseaux informatiques, et / ou un ou plusieurs circuits électroniques d'interface, et /ou un ou plusieurs circuits électroniques d'entrée / de sortie. Une unité électronique de commande peut comprendre ou être associée à un ou plusieurs afficheurs. Une unité électronique de commande peut comprendre ou être associée à un ou plusieurs capteurs, par exemple un ou plusieurs capteurs d'intensité et / ou un ou plusieurs capteurs de tension, configurés pour mesurer une valeur d'un paramètre physique dans le dispositif de coupure **10** ou dans l'installation électrique dans laquelle le dispositif **10** est destiné à être intégré. La ou les unités électroniques de commande est / sont programmée(s) pour mettre en oeuvre tout ou partie d'un procédé d'ouverture du dispositif tel que décrit ci-dessus. Avantageusement, on pourra prévoir que la ou les unités électroniques de commande **100** communique(nt) leurs ordres de commande/pilotage, notamment au(x) pilote(s) **56.1,** ..., des systèmes de commande **46.1,** ..., par des signaux isolés galvaniquement par rapport à la haute tension. Ces signaux pourraient être des signaux optiques transportés par des fibres optiques. Ils pourront être des signaux électriques isolés par des transformateurs. Ces signaux pourront être des signaux électromagnétiques transportés par des liaisons de communication sans fil.

Le dispositif de coupure électrique **10** tel que décrit ci-dessus forme donc un disjoncteur de courant particulièrement adapté pour les courants sous haute tension continue, notamment sous haute tension continue supérieure à 75 kV. Ils permettent d'obtenir des performances de coupure suffisantes avec des composants qui présentent, au total, un encombrement et un coût réduits, avec un minimum de pertes énergétiques en fonctionnement normal.

**Revendications**

1. Dispositif de coupure pour courant électrique sous haute tension continue comportant :

   - un circuit principal **(16),** dans lequel circule, dans une configuration de conduction du dispositif de coupure **(10),** un courant électrique sous une haute tension nominale de service continue du dispositif ;
   - au moins un module de coupure **(18, 18a, 18b, 18c),** interposé dans le circuit principal **(16)** entre un premier point **(20, 20a, 20b, 20c)** et un second point **(22, 22a, 22b, 22c)** du circuit principal **(16)** pour le module de coupure, le module de coupure comprenant :

     • une branche principale **(24),** entre le premier point et le second point du module de coupure, avec au moins un appareil principal de coupure électrique **(26),** de type mécanique et interposé dans la branche principale **(24)** entre le premier point **(20)** et le second point **(22),**
     • une branche d'absorption **(28),** électriquement en parallèle de la branche principale **(24)** entre le premier point et le second point du module de coupure, avec au moins un parasurtenseur général **(30)** interposé dans la branche d'absorption **(28)** entre le premier point **(20)** et le second point **(22),**
     • une branche de commutation **(32),** électriquement en parallèle de la branche principale **(24)** et de la branche d'absorption **(28)** entre le premier point et le second point du module de coupure, avec au moins un premier condensateur de commutation **(C1)** agencé dans la branche de commutation **(32),** entre le premier point et le second point du module de coupure, et un interrupteur de commutation **(34.1)** capable d'autoriser la circulation de courant dans la branche de commutation **(32),**
     • une boucle formée par la branche principale **(24)** et la branche de commutation **(32)** du module de coupure, ladite boucle du module de coupure présentant une inductance de commutation,

   - l'interrupteur de commutation comporte au moins un premier interrupteur à tube à plasma **(34.1)** comportant une anode **(36.1),** une cathode **(38.1),** et une grille de commande **(40.1),** le premier interrupteur à tube à plasma **(34.1)** étant interposé dans la branche de commutation **(32)** entre le premier point et le second point du module de coupure de manière à séparer la branche de commutation en un premier tronçon **(32.1),** relié à la cathode **(38.1)** du premier interrupteur à tube à plasma **(34.1),** et un second tronçon **(32.2),** relié à l'anode **(36.1)** du premier interrupteur à tube à plasma, le premier condensateur de commutation **(C1)** étant agencé dans le premier tronçon **(32.1)** de la branche de commutation qui est relié à la cathode **(38.1)** du premier interrupteur à tube à plasma **(34.1),**
   - un système de commande **(46.1)** du premier interrupteur à tube à plasma est alimenté électriquement par le premier condensateur de commutation **(C1),**
   - le premier condensateur de commutation comporte une armature proximale **(C1p)** reliée à la cathode du premier interrupteur à tube à plasma, et une armature distale **(C1d)** opposée à la cathode du premier interrupteur à tube à plasma par rapport à l'armature proximale **(C1p),**
   **caractérisé en ce que**
   - le dispositif comporte un circuit de pré-charge **(48.1)** du premier condensateur de commutation **(C1),**
   - le module de coupure **(18, 18a, 18b, 18c)** comporte un premier parasurtenseur de commutation (80.1) qui présente une tension de protection inférieure à une tension nominale de service du module de coupure et qui est connecté électriquement en parallèle du premier condensateur de commutation **(C1),**

   **et en ce que** le système de commande **(46.1)** du premier interrupteur à tube à plasma **(34.1)** comporte au moins un premier commutateur pilotable **(58.1, 58a, 58b)** qui, dans un état fermé, alimente la grille de commande **(40.1)** du premier interrupteur à tube à plasma **(34.1)** par une tension dérivée d'une tension électrique entre les armatures **(C1p, C1d)** du premier condensateur de commutation **(C1).**

2. Dispositif selon la revendication **1, caractérisé en ce que**, lors d'une ouverture du dispositif de coupure **(10),** le premier commutateur pilotable **(58.1, 58a, 58b)** est piloté selon une première impulsion de fermeture pour commander la fermeture du premier interrupteur à tube à plasma **(34.1)** après une ouverture mécanique partielle du l'appareil principal de coupure électrique **(26),** et est piloté selon une seconde impulsion de fermeture pour commander l'ouverture du premier interrupteur à tube à plasma **(34.1)** après renversement de la polarité de charge du premier condensateur de commutation **(C1),** définissant une durée de conduction du premier interrupteur à tube à plasma entre la fermeture et l'ouverture du premier interrupteur à tube à plasma.

3. Dispositif selon l'une des revendications **1** ou **2, caractérisé en ce que** le premier commutateur pilotable **(58.1),** dans son état fermé, relie électriquement la grille de commande **(48.1)** du premier interrupteur à tube à plasma **(34.1)** à l'armature distale **(C1d)** du premier condensateur de commutation.

4.  Dispositif selon la revendication **3, caractérisé en ce que** le premier commutateur pilotable **(58.1, 58a, 58b)** est un interrupteur bidirectionnel capable de conduire et de bloquer le courant dans les deux sens entre la grille de commande **(40.1)** du premier interrupteur à tube à plasma **(34.1)** et l'armature distale **(C1d)** du premier condensateur de commutation **(C1).**

5.  Dispositif selon l'une quelconque des revendications précédentes, **caractérisé en ce que** le système de commande **(46.1)** du premier interrupteur à tube à plasma **(34.1)** comporte une ramification d'alimentation **(62)** qui alimente une électrode de veille **(44.1)** du premier interrupteur à tube à plasma **(34.1),** la ramification d'alimentation **(62)** reliant l'électrode de veille **(44.1)** du premier interrupteur à tube à plasma à l'armature distale **(C1d)** du premier condensateur de commutation **(C1).**

6.  Dispositif selon l'une quelconque des revendications **1** ou **2, caractérisé en ce que** le système de commande **(46.1)** du premier interrupteur à tube à plasma **(34.1)** comporte un convertisseur de puissance continue-continue **(78)** ayant un côté source qui est relié à l'armature distale **(C1d)** du premier condensateur de commutation **(C1),** et ayant un côté commande qui alimente la grille de commande **(40.1)** du premier interrupteur à tube à plasma **(34.1)** par l'intermédiaire du premier commutateur pilotable **(58.1).**

7.  Dispositif selon la revendication **6, caractérisé en ce que** le côté commande du convertisseur de puissance comporte une borne positive **(78.3)** et une borne négative **(78.4),** et **en ce que** le premier commutateur pilotable **(58.1)** comporte un premier interrupteur pilotable d'activation **(58a)** interposé entre la borne positive **(78.3)** et la grille de commande **(40.1)** du premier interrupteur à tube à plasma **(34.1),** et un deuxième interrupteur pilotable de désactivation **(58b)** interposé entre la borne négative **(78.4)** et la grille de commande **(40.1)** du premier interrupteur à tube à plasma **(34.1).**

8.  Dispositif selon l'une quelconque des revendications précédentes, **caractérisé en ce que** la tension aux bornes du premier condensateur de commutation **(C1)** est limitée, par le premier parasurtenseur de commutation **(80.1),** à une tension de protection inférieure à 10% de la tension nominale de service du module de coupure.

9.  Dispositif selon l'une quelconque des revendications précédentes, **caractérisé en ce que** le premier condensateur de commutation **(C1)** présente une capacité supérieure à 100 microfarads.

10. Dispositif selon l'une quelconque des revendications précédentes, **caractérisé en ce que** l'inductance de commutation et la tension de pré-charge du premier condensateur de commutation du module de coupure sont dimensionnés pour limiter la vitesse de variation de courant au travers de l'appareil principal de coupure **(26),** variation qui apparaît lorsque la branche de commutation **(32)** devient passante pour le courant par la fermeture de l'interrupteur à tube à plasma **(34.1),** à une valeur correspondant à la vitesse de variation pour laquelle l'appareil principal de coupure **(26)** est capable d'interrompre l'arc électrique.

11. Dispositif selon l'une quelconque des revendications **2** à **10, caractérisé en ce que**, lors d'une ouverture du dispositif de coupure **(10),** une durée de conduction du premier interrupteur à tube à plasma est inférieure à 1 milliseconde, de préférence inférieure à 300 microsecondes, plus préférentiellement inférieure à 100 microsecondes.

12. Dispositif selon l'une quelconque des revendications précédentes, **caractérisé en ce que** :

    - l'interrupteur de commutation comprend un second interrupteur à tube à plasma **(34.2)** comportant une anode **(36.2),** une cathode **(38.2)** et une grille de commande **(40.2),** le second interrupteur à tube à plasma **(34.2)** étant interposé dans la branche de commutation **(32)** entre le premier point et le second point du module de coupure **(18),** électriquement en parallèle du premier interrupteur à tube à plasma **(34.1),** en sens inverse du premier interrupteur à tube à plasma **(34.1),** de telle sorte que la cathode **(38.2)** du second interrupteur à tube à plasma est reliée au second tronçon **(32.2)** de la branche de commutation **(32)** et que l'anode **(36.2)** du second interrupteur à tube à plasma est reliée au premier tronçon **(32.1)** de la branche de commutation,
    - un second condensateur de commutation **(C2)** est agencé dans le second tronçon **(32.2)** de la branche de commutation **(32)** qui est relié à la cathode **(38.2)** du second interrupteur à tube à plasma **(34.2),**
    - un système de commande **(46.2)** du second interrupteur à tube à plasma **(34.2)** est alimenté électriquement par le second condensateur de commutation **(C2),**
    - le second condensateur de commutation **(C2)** comporte une armature proximale **(C2p)** reliée à la cathode **(38.2)** du second interrupteur à tube à plasma **(34.2),** et une armature distale **(C2p)** opposée à la cathode du second interrupteur à tube à plasma par rapport à l'armature proximale **(C2p),**
- le dispositif **(10)** comporte un circuit de pré-charge **(48.2)** du second condensateur de commutation,
- le module de coupure **(18, 18a, 18b, 18c)** comporte un second parasurtenseur **(80.2)** de commutation qui présente une tension de protection telle que la somme des tensions de protection du premier parasurtenseur **(80.1)** de commutation et du second parasurtenseur **(80.2)** de commutation est inférieure à la tension nominale de service du module de coupure et qui est connecté électriquement en parallèle du second condensateur de commutation **(C2),**

et **en ce que** le système de commande **(46.2)** du second interrupteur à tube à plasma **(34.2)** comporte au moins second commutateur pilotable qui, dans un état fermé, alimente la grille de commande **(40.2)** du second interrupteur à tube à plasma **(34.2)** par une tension dérivée d'une tension électrique entre les armatures **(C2p, C2d)** du second condensateur de commutation **(C2).**

13. Dispositif selon l'une quelconque des revendications précédentes, **caractérisé en ce que** l'au moins un module de coupure **(18, 18a, 18b, 18c)** comporte au moins une branche auxiliaire de commutation **(32'),** électriquement en parallèle de la branche principale **(24),** de la branche d'absorption **(28)** et de la branche de commutation **(32)** entre le premier point et le second point du module de coupure, avec au moins un premier interrupteur auxiliaire à tube à plasma **(34.1')** comportant une anode **(36.1'),** une cathode **(38.1')** et une grille de commande **(40.1'),** le premier interrupteur auxiliaire à tube à plasma **(34.1')** étant interposé dans la branche auxiliaire de commutation **(32')** entre le premier point et le second point du module de coupure de manière à séparer la branche auxiliaire de commutation **(32')** en un premier tronçon **(32.1'),** relié à la cathode **(38.1')** du premier interrupteur auxiliaire à tube à plasma **(34.1'),** et un second tronçon **(32.2'),** relié à l'anode **(36.1')** du premier interrupteur auxiliaire à tube à plasma **(34.1'),** et **en ce qu'**au moins un premier condensateur auxiliaire de commutation **(C1')** est agencé dans le premier tronçon **(32.1')** de la branche auxiliaire de commutation **(32')** qui est relié à la cathode **(38.1')** du premier interrupteur à tube à plasma **(34.1').**

14. Dispositif selon la revendication **13, caractérisé en ce que** :

- l'anode **(36.1')** du premier interrupteur auxiliaire à tube à plasma **(34.1')** est reliée au même point, parmi le premier point et le second point du module de coupure, que l'anode **(36.1)** du premier interrupteur à tube à plasma **(34.1)** de l'au moins un module de coupure ;
en ce que l'au moins un module de coupure comporte un système de commande **(46.1')** du premier interrupteur auxiliaire à tube à plasma alimenté par le premier condensateur auxiliaire de commutation **(C1'),**
- le premier condensateur auxiliaire de commutation **(C1')** comporte une armature proximale reliée **(C1p')** à la cathode **(38.1')** du premier interrupteur auxiliaire à tube à plasma **(34.1'),** et une armature distale **(C1d')** opposée à la cathode **(38.1')** du premier interrupteur auxiliaire à tube à plasma **(34.1')** par rapport à l'armature proximale **(C1p'),**
- le dispositif comporte un circuit de pré-charge **(48.1')** du premier condensateur de commutation auxiliaire **(C1'),**
- le dispositif comporte un premier parasurtenseur auxiliaire de commutation **(80.1')** qui présente une tension de protection inférieure à une tension nominale de service du module de coupure et qui est connecté électriquement en parallèle du premier condensateur auxiliaire de commutation **(C1')**

et **en ce que** le circuit de pré-charge **(48.1)** du premier condensateur de commutation **(C1)** et le circuit de pré-charge **(48.1')** du premier condensateur auxiliaire de commutation **(C1')** comportent une source de tension commune **(50.1)** qui alimente en parallèle le premier condensateur de commutation **(C1)** et le premier condensateur auxiliaire de commutation **(C1').**

15. Dispositif selon l'une quelconque des revendications précédentes, **caractérisé en ce que** le dispositif comporte plusieurs modules de coupure **(18a, 18b, 18c)** interposés en série dans le circuit principal **(16),** chacun entre un premier point **(22a, 20b, 20c)** et un second point **(22a, 22b, 22c)** du circuit principal **(16)** pour le module de coupure considéré.

**Patentansprüche**

1. Schaltvorrichtung für elektrischen Strom unter hoher Gleichspannung, umfassend:

- einen Hauptstromkreis (16), in dem in einer leitenden Konfiguration der Schaltvorrichtung (10) ein elektrischer Strom unter einer hohen Nenngleichstrom-Betriebsspannung der Vorrichtung fließt;
- mindestens ein Schaltmodul (18, 18a, 18b, 18c), das (16) zwischen einem ersten Punkt (20, 20a, 20b, 20c) und einem zweiten Punkt (22, 22a, 22b, 22c) des Hauptstromkreises (16) für das Schaltmodul in den Hauptstromkreis eingefügt ist, das Schaltmodul umfassend:

• einen Hauptzweig (24) zwischen dem ersten Punkt und dem zweiten Punkt des Schaltmoduls, mit mindestens einem elektrischen Hauptschaltgerät (26) mechanischer Art und eingefügt in den Hauptzweig (24) zwischen dem ersten Punkt (20) und dem zweiten Punkt (22),

• einen Absorptionszweig (28) elektrisch parallel zu dem Hauptzweig (24) zwischen dem ersten Punkt und dem zweiten Punkt des Schaltmoduls, mit mindestens einem allgemeinen Überspannungsableiter (30), der zwischen dem ersten Punkt (20) und dem zweiten Punkt (22) in den Absorptionszweig (28) eingefügt ist,

• einen Umschaltzweig (32) elektrisch parallel zu dem Hauptzweig (24) und dem Absorptionszweig (28) zwischen dem ersten Punkt und dem zweiten Punkt des Schaltmoduls, mit mindestens einem ersten Umschaltkondensator (C1), der zwischen dem ersten Punkt und dem zweiten Punkt des Schaltmoduls in dem Umschaltzweig (32) angeordnet ist, und einem Umschaltschalter (34.1), der in der Lage ist, den Stromfluss in dem Umschaltzweig (32) zuzulassen,

• eine Schleife, die durch den Hauptzweig (24) und den Umschaltzweig (32) des Schaltmoduls gebildet ist, wobei die Schleife des Schaltmoduls eine Umschaltinduktivität aufweist,

- wobei der Umschaltschalter mindestens einen ersten Plasmaröhrenschalter (34.1) umfasst, umfassend eine Anode (36.1), eine Kathode (38.1) und ein Steuergitter (40.1), wobei der erste Plasmaröhrenschalter (34.1) zwischen dem ersten Punkt und dem zweiten Punkt des Schaltmoduls in den Schaltzweig (32) eingefügt ist, um den Schaltzweig in einen ersten Abschnitt (32.1), der mit der Kathode (38.1) des ersten Plasmaröhrenschalters (34.1) verbunden ist, und einen zweiten Abschnitt (32.2), der mit der Anode (36.1) des ersten Plasmaröhrenschalters verbunden ist, zu trennen, wobei der erste Schaltkondensator (C1) in dem ersten Abschnitt (32.1) des Schaltzweiges angeordnet ist, der mit der Kathode (38.1) des ersten Plasmaröhrenschalters (34.1) verbunden ist,

- wobei ein Steuersystem (46.1) des ersten Plasmaröhrenschalters elektrisch von dem ersten Umschaltkondensator (C1) versorgt wird,

- der erste Umschaltkondensator einen proximalen Anker (C1p), der mit der Kathode des ersten Plasmaröhrenschalters verbunden ist, und einen distalen Anker (C1d) gegenüber der Kathode des ersten Plasmaröhrenschalters in Bezug auf den proximalen Anker (C1p) umfasst, **dadurch gekennzeichnet, dass**

- die Vorrichtung eine Vorladeschaltung (48.1) für den ersten Umschaltkondensator (C1) umfasst,

- das Schaltmodul (18, 18a, 18b, 18c) einen ersten schaltenden Überspannungsableiter (80.1) enthält, der eine Schutzspannung aufweist, die niedriger ist als eine Betriebsnennspannung des Schaltmoduls, und der elektrisch parallel zu dem ersten Umschaltkondensator (C1) verbunden ist,

und dass das Steuersystem (46.1) des ersten Plasmaröhrenschalters (34.1) mindestens einen ersten steuerbaren Umschalter (58.1, 58a, 58b) umfasst, der in einem geschlossenen Zustand das Steuergitter (40.1) des ersten Plasmaröhrenschalters (34.1) mit einer Spannung versorgt, die von einer elektrischen Spannung zwischen den Ankern (C1p, C1d) des ersten Umschaltkondensators (C1) abgeleitet ist.

2. Vorrichtung nach Anspruch 1, **dadurch gekennzeichnet, dass** der erste steuerbare Umschalter (58.1, 58a, 58b) bei einer Öffnung der Schaltvorrichtung (10) gemäß einem ersten Schließimpuls angesteuert wird, um das Schließen des ersten Plasmaröhrenschalters (34.1) nach einem teilweisen mechanischen Öffnen des elektrischen Hauptschaltgeräts (26) zu steuern, und wird gemäß einem zweiten Schließimpuls angesteuert, um das Öffnen des ersten Plasmaröhrenschalters (34.1) nach Umkehrung der Ladepolarität des ersten Umschaltkondensators (C1) zu steuern, wodurch eine Leitungszeit des ersten Plasmaröhrenschalters zwischen dem Schließen und dem Öffnen des ersten Plasmaröhrenschalters definiert wird.

3. Vorrichtung nach einem der Ansprüche 1 oder 2, **dadurch gekennzeichnet, dass** der erste steuerbare Umschalter (58.1) in seinem geschlossenen Zustand das Steuergitter (48.1) des ersten Plasmaröhrenschalters (34.1) elektrisch mit dem distalen Anker (C1d) des ersten Umschaltkondensators verbindet.

4. Vorrichtung nach Anspruch 3, **dadurch gekennzeichnet, dass** der erste steuerbare Umschalter (58.1, 58a, 58b) ein bidirektionaler Schalter ist, der in der Lage ist, Strom in beide Richtungen zwischen dem Steuergitter (40.1) des ersten Plasmaröhrenschalters (34.1) und dem distalen Anker (C1d) des ersten Umschaltkondensators (C1) zu leiten und zu blockieren.

5. Vorrichtung nach einem der vorherigen Ansprüche, **dadurch gekennzeichnet, dass** das Steuersystem (46.1) des ersten Plasmaröhrenschalters (34.1) eine Versorgungsverzweigung (62) umfasst, die eine Standby-Elektrode (44.1) des ersten Plasmaröhrenschalters (34.1) versorgt, wobei die Versorgungsverzweigung (62) die Standby-Elektrode (44.1) des ersten Plasmaröhrenschalters mit dem distalen Anker (C1d) des ersten Umschaltkondensators (C1) verbindet.

6. Vorrichtung nach einem der Ansprüche 1 oder 2, **dadurch gekennzeichnet, dass** das Steuersystem (46.1) des ersten Plasmaröhrenschalters (34.1) einen Gleichstrom-Gleichstrom-Leistungswandler (78) umfasst, der eine Quellenseite aufweist, die mit dem distalen Anker (C1d) des ersten Umschaltkondensators (C1) verbunden ist, und eine Steuerseite aufweist, die das Steuergitter (40.1) des ersten Plasmaröhrenschalters (34.1) über den ersten steuerbaren Umschalter (58.1) versorgt.

7. Vorrichtung nach Anspruch 6, **dadurch gekennzeichnet, dass** die Steuerseite des Leistungswandlers einen positiven Anschluss (78.3) und einen negativen Anschluss (78.4) umfasst, und dass der erste steuerbare Umschalter (58.1) einen ersten steuerbaren Aktivierungsschalter (58a), der zwischen den positiven Anschluss (78.3) und das Steuergitter (40.1) des ersten Plasmaröhrenschalters (34.1) eingefügt ist, und einen zweiten steuerbaren Deaktivierungsschalter (58b), der zwischen den negativen Anschluss (78.4) und das Steuergitter (40.1) des ersten Plasmaröhrenschalters (34.1) eingefügt ist, umfasst.

8. Vorrichtung nach einem der vorherigen Ansprüche, **dadurch gekennzeichnet, dass** die Spannung an den Anschlüssen des ersten Umschaltkondensators (C1) durch den ersten schaltenden Überspannungsableiter (80.1) auf eine Schutzspannung von weniger als 10 % der Betriebsnennspannung des Schaltmoduls begrenzt wird.

9. Vorrichtung nach einem der vorherigen Ansprüche, **dadurch gekennzeichnet, dass** der erste Umschaltkondensator (C1) eine Kapazität von mehr als 100 Mikrofarad aufweist.

10. Vorrichtung nach einem der vorherigen Ansprüche, **dadurch gekennzeichnet, dass** die Umschaltinduktivität und die Vorladespannung des ersten Umschaltkondensators des Schaltmoduls bemessen sind, um die Änderungsgeschwindigkeit des Stroms durch das Hauptschaltgerät (26), die auftritt, wenn der Umschaltzweig (32) durch das Schließen des Plasmaröhrenschalters (34.1) für den Strom durchlässig wird, auf einen Wert zu begrenzen, der der Änderungsgeschwindigkeit entspricht, bei der das Hauptschaltgerät (26) in der Lage ist, den Lichtbogen zu unterbrechen.

11. Vorrichtung nach einem der Ansprüche 2 bis 10, **dadurch gekennzeichnet, dass** bei einer Öffnung der Schaltvorrichtung (10) eine Leitungszeit des ersten Plasmaröhrenschalters weniger als 1 Millisekunde, vorzugsweise weniger als 300 Mikrosekunden, besonders bevorzugt weniger als 100 Mikrosekunden ist.

12. Vorrichtung nach einem der vorherigen Ansprüche, **dadurch gekennzeichnet, dass**:

   - der Umschaltschalter einen zweiten Plasmaröhrenschalter (34.2), umfassend eine Anode (36.2), eine Kathode (38.2) und ein Steuergitter (40.2), wobei der zweite Plasmaröhrenschalter (34.2) in den Umschaltzweig (32) zwischen dem ersten Punkt und dem zweiten Punkt des Schaltmoduls (18) elektrisch parallel zu dem ersten Plasmaröhrenschalter (34.1), in umgekehrter Richtung zu dem ersten Plasmaröhrenschalter (34.1) eingefügt ist, sodass die Kathode (38.2) des zweiten Plasmaröhrenschalters mit dem zweiten Abschnitt (32.2) des Umschaltzweiges (32) verbunden ist und die Anode (36.2) des zweiten Plasmaröhrenschalters mit dem ersten Abschnitt (32.1) des Umschaltzweiges verbunden ist,
   - ein zweiter Umschaltkondensator (C2) in dem zweiten Abschnitt (32.2) des Umschaltzweigs (32) angeordnet ist, der mit der Kathode (38.2) des zweiten Plasmaröhrenschalters (34.2) verbunden ist,
   - ein Steuersystem (46.2) des zweiten Plasmaröhrenschalters (34.2) elektrisch von dem zweiten Umschaltkondensator (C2) versorgt wird,
   - der zweite Umschaltkondensator (C2) einen proximalen Anker (C2p), der mit der Kathode (38.2) des zweiten Plasmaröhrenschalters (34.2) verbunden ist, und einen distalen Anker (C2p) gegenüber der Kathode des zweiten Plasmaröhrenschalters in Bezug auf den proximalen Anker (C2p) umfasst,
   - die Vorrichtung (10) eine Vorladeschaltung (48.2) für den zweiten Umschaltkondensator umfasst,
   - das Schaltmodul (18, 18a, 18b, 18c) einen zweiten schaltenden Überspannungsableiter (80.2) umfasst, der eine Schutzspannung aufweist, sodass die Summe der Schutzspannungen des ersten schaltenden Überspannungsableiters (80.1) und des zweiten schaltenden Überspannungsableiters (80.2) kleiner ist als die Betriebsnennspannung des Schaltmoduls, und der elektrisch parallel zu dem zweiten Umschaltkondensator (C2) verbunden ist,

und dass das Steuersystem (46.2) des zweiten Plasmaröhrenschalters (34.2) mindestens einen zweiten steuerbaren Umschalter aufweist, der in einem geschlossenen Zustand das Steuergitter (40.2) des zweiten Plasmaröhrenschalters (34.2) mit einer Spannung versorgt, die von einer elektrischen Spannung zwischen den Ankern (C2p, C2d) des zweiten Umschaltkondensators (C2) abgeleitet ist.

**13.** Vorrichtung nach einem der vorherigen Ansprüche, **dadurch gekennzeichnet, dass** das mindestens eine Schaltmodul (18, 18a, 18b, 18c) mindestens einen Hilfsumschaltzweig (32') elektrisch parallel zu dem Hauptzweig (24), zu dem Absorptionszweig (28) und zu dem Umschaltzweig (32) zwischen dem ersten Punkt und dem zweiten Punkt des Schaltmoduls umfasst, mit mindestens einem ersten Plasmaröhrenhilfsschalter (34.1'), umfassend eine Anode (36.1'), eine Kathode (38.1') und ein Steuergitter (40.1'), wobei der erste Plasmaröhrenhilfsschalter (34.1') in den Hilfsschaltzweig (32') zwischen den ersten Punkt und den zweiten Punkt des Schaltmoduls eingefügt ist, um den Hilfsschaltzweig (32') in einen ersten Abschnitt (32.1'), der mit der Kathode (38.1') des ersten Plasmaröhrenhilfsschalters (34.1') verbunden ist, und einen zweiten Abschnitt (32.2'), der mit der Anode (36.1') des ersten Plasmaröhrenhilfsschalters (34.1') verbunden ist, zu trennen, und dass mindestens ein erster Hilfsumschaltkondensator (C1') in dem ersten Abschnitt (32.1') des Hilfsumschaltzweigs (32') angeordnet ist, der mit der Kathode (38.1') des ersten Plasmaröhrenschalters (34.1') verbunden ist.

**14.** Vorrichtung nach Anspruch 13, **dadurch gekennzeichnet, dass**:

- die Anode (36.1') des ersten Plasmaröhrenhilfsschalters (34.1') mit demselben Punkt von dem ersten Punkt und dem zweiten Punkt des Schaltmoduls verbunden ist wie die Anode (36.1) des ersten Plasmaröhrenschalters (34.1) des mindestens einen Schaltmoduls;
dass das mindestens eine Schaltmodul ein Steuersystem (46.1') des ersten Plasmaröhrenhilfsschalters umfasst, das von dem ersten Hilfsumschaltkondensator (C1') versorgt wird,
- der erste Hilfsumschaltkondensator (C1') einen proximalen Anker (C1p'), der mit der Kathode (38.1') des ersten Plasmaröhrenhilfsschalters (34.1') verbunden ist, und einen distalen Anker (C1d') gegenüber der Kathode (38.1') des ersten Plasmaröhrenhilfsschalters (34.1') in Bezug auf den proximalen Anker (C1p') umfasst,
- die Vorrichtung eine Vorladeschaltung (48.1') für den ersten Hilfsumschaltkondensator (C1') umfasst,
- die Vorrichtung einen ersten schaltenden Hilfsüberspannungsableiter (80.1') umfasst, der eine Schutzspannung aufweist, die niedriger ist als eine Betriebsnennspannung des Schaltmoduls, und der elektrisch parallel zu dem ersten Hilfsumschaltkondensator (C1') verbunden ist

und dass die Vorladeschaltung (48.1) des ersten Umschaltkondensators (C1) und die Vorladeschaltung (48.1') des ersten Hilfsumschaltkondensators (C1') eine gemeinsame Spannungsquelle (50.1) umfassen, die parallel den ersten Umschaltkondensator (C1) und den ersten Hilfsumschaltkondensator (C1') versorgt.

**15.** Vorrichtung nach einem der vorherigen Ansprüche, **dadurch gekennzeichnet, dass** die Vorrichtung mehrere Schaltmodule (18a, 18b, 18c) umfasst, die in Reihe in den Hauptstromkreis (16) jeweils zwischen einem ersten Punkt (22a, 20b, 20c) und einem zweiten Punkt (22a, 22b, 22c) des Hauptstromkreises (16) für das jeweilige Schaltmodul eingefügt sind.


**Claims**

**1.** A cut-off device for electric current under high DC voltage including:

- a main circuit (16), in which flows, in a conduction configuration of the cut-off device (10), an electric current under a high DC nominal operating voltage of the device;
- at least one cut-off module (18, 18a, 18b, 18c) interposed in the main circuit (16) between a first point (20, 20a, 20b, 20c) and a second point (22, 22a, 22b, 22c) of the main circuit (16), for the cut-off module, the cut-off module comprising:

    • a main branch (24), between the first point and the second point of the cut-off module, with at least one main electrical cut-off apparatus (26), of mechanical type and interposed in the main branch (24) between the first point (20) and the second point (22),
    • an absorption branch (28), electrically in parallel with the main branch (24) between the first point and the second point of the cut-off module, with at least one general surge protector (30) interposed in the absorption branch (28) between the first point (20) and the second point (22),

• a changeover branch (32), electrically in parallel with the main branch (24) and the absorption branch (28) between the first point and the second point of the cut-off module, with at least a first changeover capacitor (C1) arranged in the changeover branch (32), between the first point and the second point of the cut-off module, and a changeover switch (34.1) capable of authorizing the flow of current in the changeover branch (32),

• a loop formed by the main branch (24) and the changeover branch (32) of the cut-off module, said loop of the cut-off module having a changeover inductance,

- the changeover switch includes at least a first plasma tube switch (34.1) including an anode (36.1), a cathode (38.1) and a control grid (40.1), the first plasma tube switch (34.1) being interposed in the changeover branch (32) between the first point and the second point of the cut-off module so as to separate the changeover branch into a first section (32.1), linked to the cathode (38.1) of the first plasma tube switch (34.1) and a second section (32.2), linked to the anode (36.1) of the first plasma tube switch, the first changeover capacitor (C1) being arranged in the first section (32.1) of the changeover branch which is linked to the cathode (38.1) of the first plasma tube switch (34.1),

- a control system (46.1) of the first plasma tube switch is electrically supplied by the first changeover capacitor (C1),

- the first changeover capacitor includes a proximal armature (C1p) linked to the cathode of the first plasma tube switch, and a distal armature (C1d) opposite to the cathode of the first plasma tube switch relative to the proximal armature (C1p),

**characterized in that**

- the device includes a circuit for pre-charging (48.1) the first changeover capacitor (C1),

- the cut-off module (18, 18a, 18b, 18c) includes a first changeover surge protector (80.1) which has a protection voltage lower than a nominal operating voltage of the cut-off module and which is electrically connected in parallel with the first changeover capacitor (C1),

**and in that** the control system (46.1) of the first plasma tube switch (34.1) includes at least a first pilotable switch (58.1, 58a, 58b) which, in a closed state, supplies the control grid (40.1) of the first plasma tube switch (34.1) by a voltage derived from an electrical voltage between the armatures (C1p, C1d) of the first changeover capacitor (C1).

2. The device according to claim 1, **characterized in that**, during an opening of the cut-off device (10), the first pilotable switch (58.1, 58a, 58b) is piloted according to a first closure pulse to control the closing of the first plasma tube switch (34.1) after a partial mechanical opening of the main electrical cut-off apparatus (26), and is piloted according to a second closure pulse to control the opening of the first plasma tube switch (34.1) after reversal of the charge polarity of the first changeover capacitor (C1), defining a conduction time of the first plasma tube switch between the closing and the opening of the first plasma tube switch.

3. The device according to any of claims 1 or 2, **characterized in that** the first pilotable switch (58.1), in its closed state, electrically links the control grid (48.1) of the first plasma tube switch (34.1) to the distal armature (C1d) of the first changeover capacitor.

4. The device according to claim 3, **characterized in that** the first pilotable switch (58.1, 58a, 58b) is a two-way switch capable of conducting and blocking the current in both directions between the control grid (40.1) of the first plasma tube switch (34.1) and the distal armature (C1d) of the first changeover capacitor (C1).

5. The device according to any one of the preceding claims, **characterized in that** the control system (46.1) of the first plasma tube switch (34.1) includes a supply branching (62) which supplies a keep-alive electrode (44.1) of the first plasma tube switch (34.1), the supply branching (62) linking the keep-alive electrode (44.1) of the first plasma tube switch to the distal armature (C1d) of the first changeover capacitor (C1).

6. The device according to any one of claim 1 or 2, **characterized in that** the control system (46.1) of the first plasma tube switch (34.1) includes a DC-DC power converter (78) having a source side which is linked to the distal armature (C1d) of the first changeover capacitor (C1), and having a control side which supplies the control grid (40.1) of the first plasma tube switch (34.1) via the first pilotable switch (58.1).

7. The device according to claim 6, **characterized in that** the control side of the power converter includes a positive terminal (78.3) and a negative terminal (78.4), and **in that** the first pilotable switch (58.1) includes a first pilotable activation switch (58a) interposed between the positive terminal (78.3) and the control grid (40.1) of the first plasma tube switch (34.1), and a second pilotable deactivation switch (58b) interposed between the negative terminal (78.4) and the control grid (40.1) of the first plasma tube switch (34.1).

8. The device according to any one of the preceding claims, **characterized in that** the voltage at the terminals of the first changeover capacitor (C1) is limited, by the first changeover surge protector (80.1), to a protection voltage less than 10% of the nominal operating voltage of the cut-off module.

9. The device according to any one of the preceding claims, **characterized in that** the first changeover capacitor (C1) has a capacitance greater than 100 microfarads.

10. The device according to any one of the preceding claims, **characterized in that** the changeover inductance and the pre-charge voltage of the first changeover capacitor of the cut-off module are dimensioned to limit the rate of change of current through the main cut-off apparatus (26), change which appears when the changeover branch (32) becomes conductive for the current by the closure of the plasma tube switch (34.1), at a value corresponding to the rate of change for which the main cut-off apparatus (26) is capable of interrupting the electric arc.

11. The device according to any one of claims 2 to 10, **characterized in that**, during an opening of the cut-off device (10), a conduction time of the first plasma tube switch is less than 1 millisecond, preferably less than 300 microseconds, more preferably less than 100 microseconds.

12. The device according to any one of the preceding claims, **characterized in that**:

   - the changeover switch comprises a second plasma tube switch (34.2) including an anode (36.2), a cathode (38.2) and a control grid (40.2), the second plasma tube switch (34.2) being interposed in the changeover branch (32) between the first point and the second point of the cut-off module (18), electrically in parallel with the first plasma tube switch (34.1), in the opposite direction to the first plasma tube switch (34.1), such that the cathode (38.2) of the second plasma tube switch is linked to the second section (32.2) of the changeover branch (32) and such that the anode (36.2) of the second plasma tube switch is linked to the first section (32.1) of the changeover branch,
   - a second changeover capacitor (C2) is arranged in the second section (32.2) of the changeover branch (32) which is linked to the cathode (38.2) of the second plasma tube switch (34.2),
   - a control system (46.2) of the second plasma tube switch (34.2) is electrically supplied by the second changeover capacitor (C2),
   - the second changeover capacitor (C2) includes a proximal armature (C2p) linked to the cathode (38.2) of the second plasma tube switch (34.2), and a distal armature (C2p) opposite to the cathode of the second plasma tube switch relative to the proximal armature (C2p),
   - the device (10) includes a pre-charge circuit (48.2) of the second changeover capacitor,
   - the cut-off module (18, 18a, 18b, 18c) includes a second changeover surge protector (80.2) which has a protection voltage such that the sum of the protection voltages of the first changeover surge protector (80.1) and of the second changeover surge protector (80.2) is lower than the nominal operating voltage of the cut-off module and which is electrically connected in parallel with the second changeover capacitor (C2),

   and **in that** the control system (46.2) of the second plasma tube switch (34.2) includes at least a second pilotable switch which, in a closed state, supplies the control grid (40.2) of the second plasma tube switch (34.2) by a voltage derived from an electric voltage between the armatures (C2p, C2d) of the second changeover capacitor (C2).

13. The device according to any one of the preceding claims, **characterized in that** the at least one cut-off module (18, 18a, 18b, 18c) includes at least one auxiliary changeover branch (32'), electrically in parallel with the main branch (24), with the absorption branch (28) and with the changeover branch (32) between the first point and the second point of the cut-off module, with at least a first auxiliary plasma tube switch (34.1') including an anode (36.1'), a cathode (38.1') and a control grid (40.1'), the first auxiliary plasma tube switch (34.1') being interposed in the auxiliary changeover branch (32') between the first point and the second point of the cut-off module so as to separate the auxiliary changeover branch (32') into a first section (32.1'), linked to the cathode (38.1') of the first auxiliary plasma tube switch (34.1'), and a second section (32.2'), linked to the anode (36.1') of the first auxiliary plasma tube switch (34.1'), and **in that** at least a first auxiliary changeover capacitor (C1') is arranged in the first section (32.1') of the auxiliary changeover branch (32') which is linked to the cathode (38.1') of the first plasma tube switch (34.1').

**14.** The device according to claim 13, **characterized in that**:

- the anode (36.1') of the first auxiliary plasma tube switch (34.1') is linked to the same point, among the first point and the second point of the cut-off module, as the anode (36.1) of the first plasma tube switch (34.1) of the at least one cut-off module;

**in that** the at least one cut-off module includes a control system (46.1') of the first auxiliary plasma tube switch supplied by the first auxiliary changeover capacitor (C1'),

- the first auxiliary changeover capacitor (C1') includes a proximal armature (C1p') linked to the cathode (38.1') of the first auxiliary plasma tube switch (34.1'), and a distal armature (C1d') opposite to the cathode (38.1') of the first auxiliary plasma tube switch (34.1') relative to the proximal armature (C1p'),

- the device includes a pre-charge circuit (48.1') of the first auxiliary changeover capacitor (C1'),

- the device includes a first auxiliary changeover surge protector (80.1') which has a protection voltage lower than a nominal operating voltage of the cut-off module and which is electrically connected in parallel with the first auxiliary changeover capacitor (C1')

and **in that** the pre-charge circuit (48.1) of the first changeover capacitor (C1) and the pre-charge circuit (48.1') of the first auxiliary changeover capacitor (C1') include a common voltage source (50.1) which supplies in parallel the first changeover capacitor (C1) and the first auxiliary changeover capacitor (C1').

**15.** The device according to any one of the preceding claims, **characterized in that** the device includes several cut-off modules (18a, 18b, 18c) interposed in series in the main circuit (16), each between a first point (22a, 20b, 20c) and a second point (22a, 22b, 22c) of the main circuit (16) for the considered cut-off module.

**Fig.1**

**Fig. 2A**

**Fig. 2B**

**Fig. 2C**

**Fig. 2D**

**Fig. 2E**

**Fig. 2F**

**Fig. 2G**

**Fig. 2H**

**Fig. 3**

Fig. 4A

Fig. 4B

Fig. 4C

Fig. 4D

Fig. 4E

Fig. 4F

Fig. 4G

Fig. 4H

Fig. 5A

Fig. 5B

Fig. 5C

Fig. 5D

Fig. 5E

Fig. 5F

Fig. 5G

Fig. 5H

**Fig. 6**

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3091626 A1
- US 2014299579 A
- WO 2015166600 A
- WO 2015185096 A
- US 3758790 A
- US 4442469 A
- EP 2502248 A
- EP 3522194 A

- EP 3522196 A
- US 2017178844 A
- US 5379014 A
- US 4805062 A
- US 5828176 A
- US 10256067 B
- US 20190295801 A